# EUROPEAN PATENT APPLICATION

(11) **EP 4 059 981 A1**
(43) Date of publication of application: **21.09.2022**
(21) Application number: 21179744.4
(22) Date of filing: 16.06.2021
(51) Int. Cl.: C08G 65/26, C08G 65/10, C08G 63/664, C08G 64/18

(54) **ETHYLENE OXIDE-BASED COPOLYMERS**

(30) Priority: 17.03.2021 US 202117203931
(71) Applicant: King Abdullah University of Science and Technology, Thuwal 23955 (SA)
(72) Inventor: FENG, Xiaoshuang, 23955-6900 Thuwal (SA); VARGHESE, Jobi, 23955-6900 Thuwal (SA); GNANOU, Yves, 23955-6900 Thuwal (SA); HADJICHRISTIDIS, Nikolaos, 23955-6900 Thuwal (SA); JIA, Mingchen, 23955-6900 Thuwal (SA); AUGUSTINE, Dhanya, 23955-6900 Thuwal (SA)
(74) Representative: Ipsilon

(57) **Abstract**

Degradable ethylene oxide-based copolymers, including random, tapering, and block copolymers are described. For example, the present disclosure describes materials and methods for synthesizing degradable hydrophiphilic ethylene oxide-based copolymers, degradable amphiphilic ethylene oxide-based block copolymers, degradable hydrophobic polyethers and degradable functionalized polyethers via boron-activated copolymerization of ethylene oxide monomers with carbon dioxide.

## Description

### BACKGROUND

Poly(alkylene glycol)s have a long history as specialty polymers used as raw materials in the synthesis of detergents or polyurethanes. They are either water-soluble or oily liquids, which eventually find their way into either environmental or wastewater systems. Degradability is necessary for materials entering these systems because they cannot be recycled or incinerated. Poly(alkylene glycol)s include polyethylene oxide (PEO) and polypropylene oxide (PPO, polymer of 1,2-propylene oxide), for example.

Poly(ethylene oxide) (PEO), often referred to as poly(ethylene glycol), is a FDA-approved polymer for clinical use because of its unique properties such as its chemical stability, its hydrophilicity, its biocompatibility and above all its non-recognition by the immune system (stealth effect). The presence of functional groups at chain ends allows the conjugation of biologically active molecules with PEO (PEGylation). Thus, so-called PEGylated cargos can be transported to the target site without being recognized by the immune system. To lengthen circulation times and improve the steric shielding effect, the hydrodynamic size of conjugates after PEGylation should be above 6-8 nm, which is the threshold of glomerular filtration, to avoid renal clearance. However, due to the non-degradability of PEO, the molar mass of PEO used should not exceed 40 kg/mol due to its potential bioaccumulation in vivo.

To overcome this issue, much effort has been devoted to imparting degradability to the chains of PEO by incorporating degradable linkages within their backbone. The most common strategy has been through polycondensation of PEO telechelics, involving the incorporation of esters, disulfide, acetal, oxime, imine, or carbonate linkages into PEO polycondensates. However, the latter PEO derivatives have exhibited very broad polydispersities and ill-defined structures.

A classic strategy has involved anionically copolymerizing ethylene oxide with other monomers, and then introducing degradable linkages within the PEO backbone. For instance, copolymerized EO and epichlorohydrin can be subjected to an efficient elimination reaction to generate degradable methylene ethylene oxide (MEO) repeat units within a PEO backbone. Similarly, EO can be copolymerized with 3,4-epoxy-1-butene (EPB) via anionic ring-opening polymerization (AROP), and then the allyl moieties of EPB can be isomerized into pH-cleavable vinyl ethers. An alternative strategy has involved post-oxidation of the prepared or commercially available PEO to generate hydrolysable linkages along the backbone. For instance, hemiacetals can be randomly introduced into the backbone of PEOs through a Fenton reaction by hydrogen peroxide and ferric chloride at a neutral pH. A ruthenium-catalyzed post-polymerization oxyfunctionalization of PEGs generating acid-degradable poly[(ethylene glycol)-co-(glycolic acid)] copolymers has also been reported. Although these last two approaches afford degradable PEG with well-defined structures and narrow polydispersities, they suffer from the following drawbacks: many steps are needed for the synthesis and compatibility issues with functional groups should be overcome during the post-polymerization step.

Polylactide (PLLA) is another important polymer, being widely utilized in the biomedical area due to its biocompatibility and degradability, as well as its availability from bioresources. However, because of its high crystallinity, hydrophobic nature, and degradability, PLLA has found biomedical applications different than those of PEO. Copolymerization of LLA with other monomers represents a general strategy to tune its physical properties for various biomedical applications. For instance, di- or triblock copolymers have been obtained by sequential polymerization of various monomers and LLA. With respect to epoxide monomers, and namely ethylene oxide, only a limited number of investigations have been reported in the literature describing their copolymerizations with LLA. Besides the attempt to grow PLLA blocks from a PEO macroinitiator, one report mentioned the use of various Al and Sn-Al bimetallic catalysts to prepare LLA-EO multiblock copolymers exhibiting broad distributions. Another report resorted to the classical Vandenberg catalysts to obtain random copolymers of LLA and EO of high molar mass. In each of these reports, the principal focus was to investigate the "copolymerizability" of LLA and epoxides using various coordinating catalysts and to characterize the type of copolymers eventually obtained: multiblock in the first case and random in the second case.

Incorporation of CO₂ into polymers can not only make use of this green-house gas for addressing the global warming issues, but also endow polymers with degradable properties which is highly desirable in a world faced by white pollution. Copolymerization of epoxides and CO₂ has thus become a hot topic ever since the seminal work by Inoue in the 1960s. While most epoxides have been thoroughly investigated for this copolymerization, ethylene oxide (EO), being annually produced on a scale of about 30 million tons through oxidation of ethylene, now even bioresourced from ethanol, however, remains less explored. As the simplest epoxide, EO is distinctive during (co)polymerization in comparison to other epoxide monomers. The first is the highest utilization rate of CO₂ due to its lowest molar mass. 50wt% CO₂ could be incorporated if copolymerization of EO with CO₂ is alternating, the produced poly(ethylene carbonate) (PEC) is totally hydrophobic, biocompatible and biodegradable, which could find application as ion-conductive electrolytes, elastomers, especially biomaterials. Synthesis of PECEO with high ethylene carbonate (EC) content was initially achieved using a ZnEt₂/H₂O catalytic system, which can produce PECEO with carbonate content ranging from 81%-94%. However, the polymerization was not well controlled and obtained PECEO exhibited broad molar mass distribution. Using cobalt-based organometallic catalysts, poly(ethylene carbonate)s with perfect alternating structure were achieved. Despite these successes, there are drawbacks in correlation with metal catalyst such as coloration of the final product, toxicity of metal residues and multi-step catalyst synthetic procedures.

The second feature is that PECEO without any CO₂ incorporation, namely PEO, being considered from EO homopolymerization, is hydrophilic which is totally different from polyethers produced by ring-opening polymerization (ROP) of other epoxides. Labile carbonate as a degradable linkage was also tried to endow degradable property. ROP of ethylene carbonate (EC) in the presence of base can give PEO with carbonate contents in the range of 10-25 mol% under harsh conditions (160-200 °C), however, the polymerization was not well controlled, the hydrophilicity of polymers delivered is somehow lost, with an only exception of a report where "PEG-like" poly(ether carbonate)s (molar masses up to 10000 g/mol, PDI<1.6) were obtained with low carbonate content (<10mol%).

Since the discovery of metal-free CO₂/epoxides copolymerization in 2016, the triethylborane (TEB)-mediated (co)polymerization has been gaining increasing popularity for the synthesis of polycarbonates, polyethers, polyesters, and most recently polyurethane. In particular, the molar masses (million to thousand g/mol), carbonate contents (50-95%) of synthesized polycarbonates could be easily tuned upon the feeding ratio of monomer to the initiator and polymerization pressure of CO₂.

There is a need for PEO-like polymers and polyether copolymers having improved degradability for use in various industrial, medical, and cosmetic applications.

### SUMMARY

In general, embodiments of the present disclosure describe degradable polyether copolymers, including random, tapering, and block copolymers. For example, the present disclosure describes materials and methods for synthesizing degradable hydrophobic EO-based copolymers (e.g., poly(ethylene-carbonate)), degradable amphiphilic EO-based block copolymers (e.g., poly(ether carbonate)), degradable hydrophilic polyethers (e.g., poly(ethylene oxide)), and degradable functionalized polyethers (e.g., poly(ethylene oxide-ethylene carbonate-allyl glycidyl ether)).

In one aspect, the present disclosure describes degradable polyethers, methods of forming degradable polyethers, degradable polyethers conjugated with biologically active molecules, and the like.

Embodiments of the present disclosure describe a degradable polyether comprising ester units from a cyclic ester (e.g., lactide), cyclic anhydride or carbonate units from carbon dioxide incorporated into a poly(ethylene oxide) backbone or a multifunctional polycarbonate core of a poly(ethylene oxide) star.

Embodiments of the present disclosure describe a method of forming a degradable polyether comprising contacting an ethylene oxide monomer with a cyclic ester, cyclic anhydride or carbon dioxide in the presence of an alkyl borane and an initiator.

Embodiments of the present disclosure describe a modified biological molecule comprising a biologically active molecule conjugated with a degradable polyether having ester units or carbonate units incorporated into a poly(ethylene oxide) backbone.

In a second aspect, the present disclosure describes degradable polyethers having carbonate units incorporated into a poly(ethylene oxide) backbone and ether units functionalized with reactive pendant groups or side chains. Embodiments of the present disclosure describe a method of forming a functionalized degradable polyether comprising contacting ethylene oxide, a functionalized epoxide, and carbon dioxide in the presence of an alkyl borane and an initiator.

In another aspect, the present disclosure describes degradable polyether stars. Embodiments of the present disclosure describe methods of forming degradable polyether stars comprising contacting a diepoxide monomer with carbon dioxide and/or a cyclic ester in the presence of an initiator and a first amount of an alkyl borane to form a multifunctional core comprising degradable carbonate linkages and/or degradable ester linkages, and contacting the multifunctional core with an ethylene oxide monomer in the presence of a second amount of an alkyl borane to form arms of a polyether attached to the degradable multifunctional core.

### [[THE FOLLOWING PARAGRAPHS OF THIS SECTION WILL BE UPDATED AFTER THE CLAIMS ARE FINALIZED]]

In another aspect, the present disclosure describes a method of forming a degradable polyether copolymer, comprising: contacting an ethylene oxide monomer with one or more of carbon dioxide, cyclic anhydride and cyclic ester, in the presence of a solvent, an alkyl borane activator, and an onium salt initiator to form a polyether copolymer having polyether linkages and ester or carbonate linkages, wherein the ester or carbonate content in the copolymer backbone is at most 50% by weight of the copolymer. The copolymer can be formed under metal-free conditions. The ethylene oxide monomer can be selected from the group consisting of: 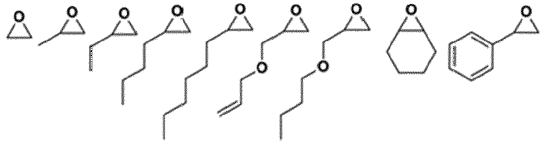 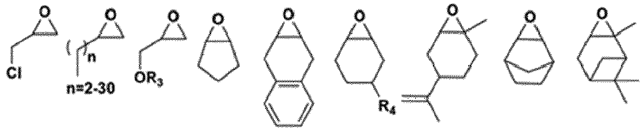 wherein each R₃ and R₄ is independently selected from the group consisting of alkyl groups including saturated and unsaturated, aromatic and cyclic alkyl groups, azide containing alkyl groups, and heteroatom containing alkyl groups, wherein the heteroatom is a halide, N, O, P, Si, Se, or S. In one or more embodiments the N, P, S, and Se atoms are oxidized. The N heteroatom can be quaternized. In some cases, the ethylene oxide monomer is ethylene oxide. The activator can be selected from triethyl borane, triphenyl borane, tributyl borane, trimethyl borane, triisobutyl borane, and combinations thereof. In some cases, the activator is triethyl borane. The solvent can be an apolar solvent or a coordinating solvent. In some cases, the solvent is hexane or tetrahydrofuran. The initiator can have a chemical formula selected from: {Y⁺, RO⁻}, {Y⁺, RCOO⁻}, {X⁺, N₃⁻}, and {X⁺, Cl⁻}; wherein Y⁺ is selected from K⁺, *t*-BuP₄⁺, and *t*-BuP₂⁺; wherein X⁺ is selected from NBu₄⁺, PBu₄⁺, NOct₄⁺, and PPN⁺; wherein RO⁻ is selected from 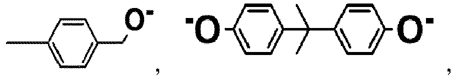 CH₃O(CH₂)₂O(CH₂)₂O", and H₂C=CHCH₂O", wherein RCOO⁻ is an aliphatic or aromatic carboxylate. In some cases, the initiator is tetrabutylammonium succinate, tetrabutylammonium chloride, tetraoctylammonium chloride or bis(triphenylphosphine)iminium chloride. The ethylene oxide monomer and the initiator can be present at a molar ratio within a range of about 1000:1 to about 50:1. The activator and the initiator can be present at a molar ratio within a range of about 5:1 to about 1:2. The method can further include charging carbon dioxide at a constant pressure within a range of about 1 to about 30 bar. In one or more embodiments, the cyclic ester is present and is lactide or a cyclic ester selected from the group consisting of L-lactide, D-lactide, meso-lactide, and a mixture thereof. In one or more embodiments, the cyclic anhydride is present and selected from the group consisting of aromatic and aliphatic anhydrides. In some cases, the cyclic anhydride is phthalic anhydride, succinic anhydride, diglycolic anhydride, or maleic anhydride.

In another aspect, embodiments of the present disclosure include a method of forming a degradable block copolymer, comprising: contacting a first ethylene oxide monomer with carbon dioxide, cyclic ester or cyclic anhydride in the presence of a solvent, an alkyl borane activator, and an onium salt initiator to form a first block having polyether linkages and carbonate or ester linkages, wherein the carbonate or ester content in the copolymer backbone is not above 50% by weight of the copolymer; and contacting the first block with a second ethylene oxide monomer to form a second block attached to the first block. The degradable block copolymer can be formed under metal-free conditions. The first ethylene oxide monomer can be selected from the group consisting of: 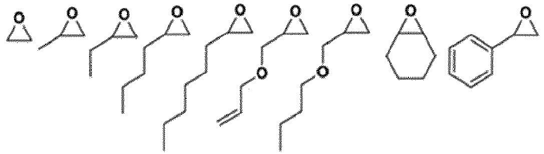 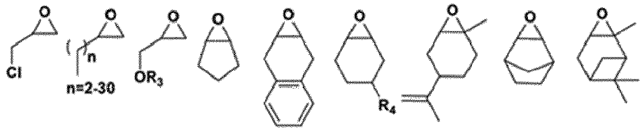 wherein each R3 and R4 is independently selected from the group consisting of alkyl groups including saturated and unsaturated, aromatic and cyclic alkyl groups, azide containing alkyl groups, and heteroatom containing alkyl groups, wherein the heteroatom is a halide, N, O, P, Si, Se, or S. In one or more embodiments the N, P, S, and Se atoms are oxidized. The N heteroatom can be quaternized. In some cases, the ethylene oxide monomer is ethylene oxide. The second ethylene oxide monomer can be ethylene oxide. The degradable block copolymer can be formed by sequential Ring Opening Polymerization in one pot. The method can further include releasing the carbon dioxide before contacting the first block with the second ethylene oxide monomer.

Another aspect of the present disclosure describes a degradable block copolymer prepared by a process comprising contacting a first ethylene oxide monomer with carbon dioxide, cyclic ester or cyclic anhydride in the presence of a solvent, an alkyl borane activator, and an onium salt initiator to form a first block having polyether linkages and ester or carbonate linkages, wherein the carbonate content in the copolymer backbone is at most 50% by weight of the copolymer; and contacting the first block with a second ethylene oxide monomer to form a second block attached to the first block. The block copolymer can be a diblock or triblock copolymer. The block copolymer can be an ABA triblock copolymer comprising a hydrophilic A block containing the first block and a hydrophobic B block containing the second block. The A block can be 20 to 80% by weight of the ABA block copolymer. In some cases, the A block is 40 to 70% by weight of the ABA block copolymer. The B block can be a copolymer of ethylene oxide and CO₂ having a carbonate content of at most 50% by weight of the B block. The block copolymer can have at least one property selected from the group consisting of: the block copolymer has a critical micelle concentration of at least 0.05 g/L; the block copolymer forms micelles with a hydrodynamic radius of at least about 60 Å; and the block copolymer has a HLB within a range of 2-9 or 11-18.

The details of one or more examples are set forth in the description below. Other features, objects, and advantages will be apparent from the description and from the claims.

### BRIEF DESCRIPTION OF DRAWINGS

This written disclosure describes illustrative embodiments that are non-limiting and non-exhaustive. In the drawings, which are not necessarily drawn to scale, like numerals describe substantially similar components throughout the several views. Like numerals having different letter suffixes represent different instances of substantially similar components. The drawings illustrate generally, by way of example, but not by way of limitation, various embodiments discussed in the present document.

Reference is made to illustrative embodiments that are depicted in the figures, in which:
**FIG. 1** is a flowchart of a method of forming a degradable copolymer, according to one or more embodiments of the present disclosure.
**FIG. 2** is a schematic diagram of a reaction scheme in which a degradable copolymer is formed, according to one or more embodiments of the present disclosure. R1 and R2 are independently selected from aliphatic and aromatic groups, and can be saturated or unsaturated.
**FIG. 3** is a flowchart of a method of forming a degradable polyether star, according to one or more embodiments of the present disclosure.
**FIG. 4** is a representative ¹H NMR spectrum of P(EO-co-LLA) random copolymer (entry 7 of Table 1), according to one or more embodiments of the present disclosure.
**FIG. 5** is a graphical view of GPC traces of various copolymer samples targeted from 100 DP to 500 DP (Table 1), according to one or more embodiments of the present disclosure.
**FIG. 6** is an IR spectrum of a copolymer (entry 21, Table 1) showing azide incorporation, according to one or more embodiments of the present disclosure.
**FIG. 7** is a graphical view of a reactivity ratio plot for P₄ /PMBA in toluene (Entry 1, 2, 3 of Table 2), according to one or more embodiments of the present disclosure.
**FIG. 8** is a graphical view of a reactivity ratio plot for TBACl in toluene (Entry 4, 5, 6 of Table 2), according to one or more embodiments of the present disclosure.
**FIG. 9** is a graphical view of a reactivity ratio plot for PPNCl in toluene (Entry 7, 8, 9 of Table 2), according to one or more embodiments of the present disclosure.

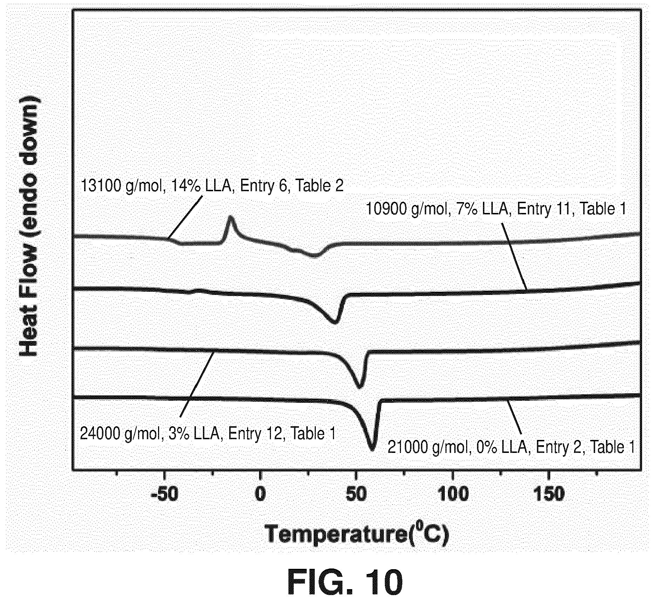

**FIG. 10** is a graphical view of DSC traces of copolymers P(EO-co-LLA) with different ester compositions, according to one or more embodiments of the present disclosure.
**FIG. 11** is a graphical view of GPC traces overlay of copolymer P(EO-co-LLA) before and after degradation (Entry 12, Table 1), according to one or more embodiments of the present disclosure.
**FIG. 12** is a reaction scheme illustrating the synthesis of PEO homostars (PVDOX-EO), according to one or more embodiments of the present disclosure.
**FIG. 13** shows ¹H NMR characterization of Entry 21, Table 4, according to one or more embodiments of the present disclosure.
**FIG. 14** shows GPC trace of Entry 21, Table 4, according to one or more embodiments of the present disclosure.
**FIG. 15** shows ¹H NMR characterization of Entry 22, Table 4, according to one or more embodiments of the present disclosure.
**FIG. 16** shows GPC trace of Entry 22, Table 4, according to one or more embodiments of the present disclosure.
**FIG. 17** shows ¹H NMR characterization of Entry 23, Table 4, according to one or more embodiments of the present disclosure.
**FIG. 18** shows GPC trace of Entry 23, Table 4, according to one or more embodiments of the present disclosure.
**FIG. 19** shows ¹H NMR characterization of Entry 24, Table 4, according to one or more embodiments of the present disclosure.
**FIG. 20** shows GPC trace of Entry 24, Table 4, according to one or more embodiments of the present disclosure.
**FIG. 21** shows ¹H NMR characterization of Entry 25, Table 4, according to one or more embodiments of the present disclosure.
**FIG. 22** shows GPC trace of Entry 25, Table 4, according to one or more embodiments of the present disclosure.
**FIG. 23** shows ¹H NMR characterization of Entry 26, Table 4, according to one or more embodiments of the present disclosure.
**FIG. 24** shows GPC trace of Entry 26, Table 4, according to one or more embodiments of the present disclosure.
**FIG. 25** shows GPC trace of Entry 27, Table 5, according to one or more embodiments of the present disclosure.
**FIG. 26** shows GPC trace of Entry 28, Table 5, according to one or more embodiments of the present disclosure.
**FIG. 27** shows GPC trace of Entry 30, Table 5, according to one or more embodiments of the present disclosure.
**FIG. 28** shows GPC trace of Entry 33, Table 5, according to one or more embodiments of the present disclosure.
**FIG. 29** shows ¹H NMR characterization of Entry 33, Table 5, according to one or more embodiments of the present disclosure.
**FIGS. 30A-C** show (A) ¹H NMR (CDCl₃) spectra of the P(EO-EC-EO) triblock copolymers; (B) SEC traces of the P(EO-EC-EO) triblock copolymers and their corresponding precursor middle blocks; and (C) Determination of cmc value from the fitted plots of I₁/I₃ (obtained from fluorescence spectroscopy) against logarithm of concentration (in g/L) with the insets being size distribution diagrams as obtained by dynamic light scattering spectroscopy.
**FIGS. 31A-F** show (A) ¹H NMR (CDCl₃) spectra of the copolymers from EO and CO₂ with various carbonate content; (B) TGA curves at a heating rate of 10 K/min; (C) DSC curves at a heating rate of 10 K/min; (D) Images showing water droplets on the surface of PECEO changing with time; (E) ¹H NMR (CDCl₃) spectra showing degradation of a PECEO at a pH of 8.5; and (F) ¹H NMR (CDCl₃) spectrum of the terpolymer from AGE, EO and CO₂.

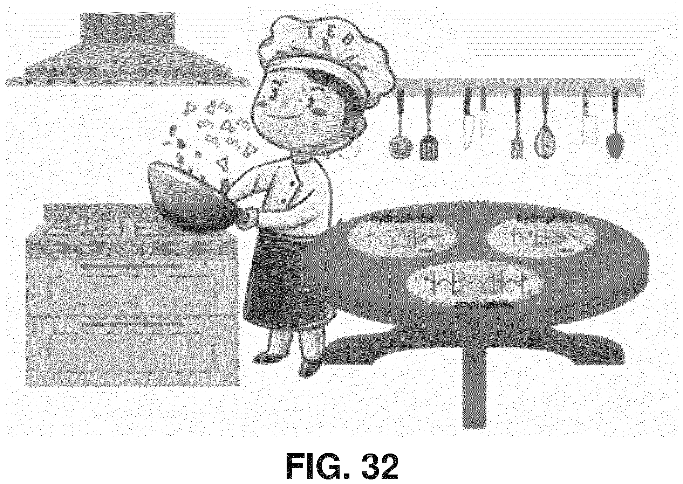

**FIG. 32** illustrates various products that can be synthesized via copolymerization of EO with CO₂ including hydrophobic poly(ethylene carbonate), amphiphilic triblock poly(ethylene oxide -b-ethylene carbonate-ethylene oxide), and hydrophilic degradable poly(ethylene oxide), according to one or more embodiments of the present disclosure.
**FIG. 33** shows a representative ¹H NMR (CDCl₃) spectrum for the crude product from the copolymerization of EO and CO₂ according to one or more embodiments of the present disclosure.
**FIG. 34** shows a representative ¹H NMR (CDCl₃) spectrum for pure PECEO.
**FIG. 35** shows a SEC (THF) trace for the PECEO (Entry 23) used for degradation test.
**FIG. 36** shows a ¹H NMR (CDCl₃) spectrum for the degradation product of a PECEO (Entry 23) at a pH value of 13.
**FIG. 37** shows a SEC (THF) trace for the degradation product of a PECEO (Entry 23) at a pH value of 13.
**FIG. 38** shows SEC (THF) traces for the degradation product of a PECEO (Entry 23) at a pH value of 8.5 at different degradation time.
**FIG. 39** shows a ¹H NMR (CDCl₃) spectrum for the degradation product of a PECEO (Entry 23) at a pH value of 7.4.
**FIG. 40** shows a SEC (THF) trace for the degradation product of a PECEO (Entry 23) at a pH value of 7.4.
**FIG. 41** shows a ¹H NMR (CDCl₃) spectrum for the degradation product of a PECEO (Entry 23) at a pH value of 6.5±0.1.
**FIG. 42** shows a SEC (THF) trace for the degradation product of a PECEO (Entry 23) at a pH value of 6.5.
**FIG. 43** shows a SEC (THF) trace for the copolymer obtained at an EO/AGE ratio of 20 and 1 bar CO₂ pressure.
**FIG. 44** shows a SEC (THF) trace for the copolymer obtained at an EO/AGE ratio of 10 and 1 bar CO₂ pressure.
**FIG. 45** shows a ¹H NMR (CDCl₃) spectrum for the copolymer obtained at an EO/AGE ratio of 20 and 1 bar CO₂ pressure.
**FIG. 46** shows **Scheme 1A-C:** Synthetic routes to degradable hydrophobe (A), amphiphile (B), hydrophile as well as functionalized PEG analogue (C) via TEB-mediated copolymerization of ethylene and CO₂.

### DETAILED DESCRIPTION

The present invention is directed to methods of forming degradable polyethers, and the like. The degradable polyethers can comprise a controllable and tunable content of degradable ester linkages (e.g., ester units) or degradable carbonate linkages (e.g., carbonate units) incorporated into a polyether backbone or multifunctional core of a polyether star. For example, embodiments include degradable polyethers prepared as random copolymers comprising ester units from a cyclic ester (e.g., L-lactide), cyclic anhydride and/or carbonate units from carbon dioxide randomly incorporated into the polyether backbone. Embodiments include degradable polyethers prepared as linear diblock or triblock copolymers comprising arms of a polyether attached to a monofunctional or difunctional (macro-)oligomeric hydrophobes comprising carbonate units or ester units. Embodiments also include degradable polyethers prepared as star polymers comprising arms of a polyether attached to a multifunctional core comprising carbonate units or ester units. The methods disclosed herein provide control over the amount and/or length of the ester units and carbonate units incorporated into the degradable polyether. For example, in one embodiment, the degradable polyether can comprise about 5% ester units into the polyether backbone, with an average length of about two adjacent ester groups or less per ester unit. By incorporating degradable linkages into the polymer backbone in this way, a character of degradability can be imparted to the polyether, without modifying the intrinsic properties of the polymers.

The degradable polyethers of the present disclosure can be directly prepared by anionic ring-opening copolymerization of an ethylene oxide monomer with a cyclic ester, cyclic anhydride or carbon dioxide. The anionic copolymerization can proceed in the presence of an activator - namely, an alkyl borane - and an initiator. The presence of the activator can selectively increase the reactivity of the ethylene oxide monomer, as well as suppress transesterification reactions and/or the formation of cyclic carbonates. For example, the activator and initiator can react under stoichiometric conditions to form an ate complex. The ate complex can be used to initiate anionic copolymerization. In some embodiments, the growing ate complex is not sufficiently nucleophilic to activate the ethylene oxide monomer, in which case the activator can be provided in stoichiometric excess of the initiator to ensure activation of the ethylene oxide monomer. By proceeding in this way, the content of degradable linkages can be precisely controlled to afford well-defined degradable polyethers with controllable molar mass and narrow polydispersity can be achieved. In addition, the method is general and can be applied to synthesize functionalized linear and/or branched poly(ethylene oxide)s, as well as degradable poly(ethylene oxide) star polymers, among others.

In some embodiments, the degradable polyethers can further be prepared as difunctional or hetero-difunctional polyethers for the modification of biological molecules. For example, the degradable polyethers can be formed such that the terminal ends of the degradable polyethers have functional groups that allow the conjugation of biologically active molecules with poly(ethylene oxide) through a process generally referred to as PEGylation. Accordingly, embodiments of the present disclosure further describe modified biological molecules comprising a biologically active molecule conjugated with the degradable polyethers of the present disclosure. In this way, biologically active molecules - such as peptides, proteins, and enzymes, among others - can be modified through covalent conjugation with the degradable polyethers.

### Definitions

The terms recited below have been defined as described below. All other terms and phrases in this disclosure shall be construed according to their ordinary meaning as understood by one of skill in the art.

As used herein, "degradable polyether" refers to any polyether comprising degradable linkages. For example, the degradable linkages can be provided in the polymer backbone, or in the group between the polymer backbone and one or more terminal functional groups of the polymer, or in a multifunctional core of a star polymer, among other places. In the context of star polymers, a degradable polyether star can comprise polyether homostars or heterostars with multifunctional cores comprising degradable linkages.

As used herein, "degradable linkages" refers to any unit or segment of a polymer capable of being degraded. The term "degradable linkages" includes ester units and carbonate units. Accordingly, the terms "ester unit(s)" and "degradable ester linkage(s)," as well as "carbonate unit(s)" and "degradable carbonate linkage(s)," and the like may be used interchangeably herein. The mechanism by which the linkages degrade can depend on the target application. For example, the degradable linkages can be hydrolytically degradable linkages, enzymatically degradable linkages, pH-degradable linkages, acid-degradable linkages, etc.

As used herein, the term "cyclic ester" includes monoesters, cyclic diesters, cyclic triesters, and the like. A non-limiting example of a cyclic ester is lactide. As used herein, "lactide" can refer to one or more of lactide's three stereoisomeric forms. The three stereoisomeric forms of lactide include L-lactide, D-lactide, and *meso-*lactide*.*

As used herein, the term "cyclic anhydride" includes aliphatic and aromatic anhydrides, a non-limiting example of a cyclic ester is phthalic anhydride, succinic anhydride, diglycolic anhydride, glutaric anhydride.

As used herein, "ester unit" refers to any segment of a polymer comprising at least one ester group. The polymer can comprise a plurality of ester units. Each of the ester units can comprise one or more adjacent ester groups. An ester group can be generally represented by the chemical formula: (-RC(=O)OR'-)a, wherein a is at least 1, wherein R and R' are general, not particularly limited, and can depend on the monomer from which the ester group is obtained. For example, an ester unit can comprise one or more adjacent lactides. The ester units of a polymer can be described by an average length, wherein the average length of ester units can refer to the average number of adjacent ester groups found in the polymer.

As used herein, "carbonate unit" refers to any segment of a polymer comprising at least one carbonate group. A polymer can comprise a plurality of carbonate units. Each of the carbonate units can comprise one or more adjacent carbonate groups. A carbonate group can be generally represented by the chemical formula: (-ROC(=O)OR'-)a, wherein a is at least 1, wherein R and R' are general, not particularly limited, and can depend on the monomer form which the carbonate group is obtained. For example, a carbonate unit can comprise one or more adjacent monoethyl carbonates. The carbonate units of a polymer can be described by an average length, wherein the average length of carbonate units can refer to the average number of adjacent carbonate groups found in the polymer.

As used herein, the term "aliphatic" or "aliphatic group" refers to a hydrocarbon moiety, wherein the hydrocarbon moiety can be straight chained (e.g., unbranched or linear), branched, or cyclic and/or can be completely saturated, or contain one or more units of unsaturation, but which is not aromatic. The term "unsaturated" refers to a moiety that has one or more double and/or triple bonds. The term "aliphatic" thus includes alkyl, cycloalkyl, alkenyl, cycloalkenyl, alkynyl, or cycloalkenyl groups, and combinations thereof. An aliphatic group can comprise 30 carbon atoms or less, or any number of carbon atoms in the range of 1 to 30, or any increment within the range of 1 to 30 carbon atoms. Non-limiting examples of aliphatic groups include linear or branched alkyl, alkenyl and alkynyl groups, and mixtures thereof such as (cycloalkyl)alkyl groups, (cycloalkenyl)alkyl groups and (cycloalkyl)alkenyl groups.

As used herein, the term "alkyl" refers to saturated, straight- or branched-chain hydrocarbon radicals in which a hydrogen atom has been removed from an aliphatic moiety. An alkyl group can optionally include a straight or branched chain with 1 to 20 carbons. Non-limiting examples alkyls include methyl group, ethyl group, n- propyl group, iso-propyl group, n-butyl group, iso-butyl group, sec-butyl group, tert-butyl group, sec-pentyl, isopentyl, n-pentyl group, neopentyl, n-hexyl group, sec-hexyl, n-heptyl group, n-octyl group, n-nonyl group, n-decyl group, n-undecyl group, n-dodecyl group, n- tridecyl group, n-tetradecyl group, n-pentadecyl group, n-hexadecyl group, n-heptadecyl group, n-octadecyl group, n-nonadecyl group, n-eicosyl group, 1 , 1-dimethylpropyl group, 1 ,2-dimethylpropyl group, 2,2-dimethylpropyl group, 1-ethylpropyl group, n-hexyl group, 1- ethyl-2-methylpropyl group, 1 , 1 ,2-trimethylpropyl group, 1-ethylbutyl group, 1-methylbutyl group, 2-methylbutyl group, 1 , 1-dimethylbutyl group, 1 ,2-dimethylbutyl group, 2,2-dimethylbutyl group, 1 ,3-dimethylbutyl group, 2,3-dimethylbutyl group, 2-ethylbutyl group, 2- methylpentyl group, 3-methylpentyl group, and the like.

As used herein, the term "alkenyl" refers to a group derived from the removal of a hydrogen atom from a straight- or branched-chain aliphatic moiety having at least one carbon-carbon double bond. The term "alkynyl," as used herein, refers to a group derived from the removal of a hydrogen atom from a straight- or branched-chain aliphatic moiety having at least one carbon-carbon triple bond. Non-limiting examples of alkenyl groups include ethenyl, propenyl, butenyl, 1-methyl-2-buten-1-yl, allyl, 1,3-butadienyl, and allenyl. Non-limiting examples of alkynyl groups include ethynyl, 2-propynyl, and 1-propynyl. As "alkene" refers to the compound or moiety H-R, wherein R is an alkenyl.

As used herein, the terms "cycloaliphatic," "carbocycle," or "carbocyclic" refer to a saturated or partially unsaturated cyclic aliphatic monocyclic or polycyclic (including fused, bridging and spiro-fused) ring system which has from 3 to 20 carbon atoms. An alicyclic group can optionally have from 3 to 15, optionally from 3 to 12, optionally from 3 to 10, optionally from 3 to 8 carbon atoms, and/or optionally from 3 to 6 carbons atoms. The terms "cycloaliphatic," "carbocycle," or "carbocyclic" also include aliphatic rings that are fused to one or more aromatic or nonaromatic rings, such as tetrahydronaphthyl rings, where the point of attachment is on the aliphatic ring. A carbocyclic group may be polycyclic, e.g., bicyclic or tricyclic. It will be appreciated that the alicyclic group can comprise an alicyclic ring bearing one or more linking or non-linking alkyl substituents, such as -CH₂-cyclohexyl. Non-limiting examples of carbocycles include cyclopropane, cyclobutane, cyclopentane, cyclohexane, bicycle[2,2,1]heptane, norborene, phenyl, cyclohexene, naphthalene, spiro[4.5]decane, cycloheptane, adamantine, and cyclooctane.

As used herein, the term "heteroaliphatic group" (including heteroalkyl, heteroalkenyl, and heteroalkynyl) refers to an aliphatic group as defined above, which additionally contains one or more heteroatoms. Heteroaliphatic groups can optionally contain from 2 to 21 atoms, optionally from 2 to 16 atoms, optionally from 2 to 13 atoms, optionally from 2 to 1 1 atoms, optionally from 2 to 9 atoms, and/or optionally from 2 to 7 atoms, wherein at least one atom is a carbon atom. Non-limiting examples of heteroatoms include O, S, N, P and Si. Where heteroaliphatic groups have two or more heteroatoms, the heteroatoms can be the same or different. Heteroaliphatic groups may be substituted or unsubstituted, branched or unbranched, cyclic or acyclic, and include saturated, unsaturated or partially unsaturated groups.

As used herein, the term "alicyclic group" refers to a saturated or partially unsaturated cyclic aliphatic monocyclic or polycyclic (including fused, bridging and spiro-fused) ring system which has from 3 to 20 carbon atoms. An alicyclic group can optionally have from 3 to 15, optionally from 3 to 12, optionally from 3 to 10, optionally from 3 to 8 carbon atoms, and/or optionally from 3 to 6 carbons atoms. The term "alicyclic" incldues cycloalkyl, cycloalkenyl, and cycloalkynyl groups. It will be appreciated that the alicyclic group can comprise an alicyclic ring bearing one or more linking or non-linking alkyl substituents, such as -CH2-cyclohexyl. Specifically, examples of the C_{3.20} cycloalkyl group include cyclopropyl, cyclobutyl, cyclopentyl, cyclohexyl, cycloheptyl, adamantyl and cyclooctyl.

As used herein, the term "heteroalicyclic group" refers to an alicyclic group as defined above which has, in addition to carbon atoms, one or more ring heteroatoms, which are optionally selected from O, S, N, P and Si. Heteroalicyclic groups can optionally contain from one to four heteroatoms, which may be the same or different. Heteroalicyclic groups can optionally contain from 5 to 20 atoms, optionally from 5 to 14 atoms, and/or optionally from 5 to 12 atoms.

As used herein, the term "aryl," "aryl group," or "aryl ring" refers to a monocyclic or polycyclic ring system having from 5 to 20 carbon atoms, wherein at least one ring in the system is aromatic and wherein each ring in the system contains three to twelve ring members. The term "aryl" can be used alone or as part of a larger moiety as in "aralkyl," "aralkoxy," or "aryloxyalkyl." Non-limiting examples of aryls include phenyl group, methylphenyl, (dimethyl)phenyl, ethylphenyl, biphenyl group, indenyl group, anthracyl group, naphthyl group, or azulenyl group, and the like. The term "aryl groups" includes condensed rings such as indan, benzofuran, phthalimide, phenanthridine, and tetrahydro naphthalene. As "arene" refers to the compound H-R, wherein R is aryl.

As used herein, the term "heteroaryl" used alone or as part of another term (such as "heteroaralkyl", or "heteroaralkoxy") refers to a mono- or polycyclic group having from 5 to 14 ring atoms and, in addition to carbon atoms, from one to five heteroatoms. The term "heteroatom" refers to nitrogen, oxygen, or sulfur, and includes any oxidized form of nitrogen or sulfur, and any quaternized form of nitrogen. The term "heteroaryl" also includes groups in which a heteroaryl ring is fused to one or more aryl, cycloaliphatic, or heterocyclyl rings, where the radical or point of attachment is on the heteroaromatic ring. Non-limiting examples of heteroaryls include indolyl, isoindolyl, benzothienyl, benzofuranyl, dibenzofuranyl, indazolyl, benzimidazolyl, benzthiazolyl, quinolyl, isoquinolyl, cinnolinyl, phthalazinyl, quinazolinyl, quinoxalinyl, 4H-quinolizinyl, carbazolyl, acridinyl, phenazinyl, phenothiazinyl, phenoxazinyl, tetrahydroquinolinyl, tetrahydroisoquinolinyl, furanyl, imidazolyl, indolyl, indazolyl, methylpyridyl, oxazolyl, pyridyl, pyrrolyl, pyrimidyl, pyrazinyl, quinolyl, quinazolyl, quinoxalinyl, thienyl, triazinyl, and pyrido[2,3-b]-1 ,4-oxazin-3(4H)-one.

As used herein, the term "aralkyl" refers to an alkyl as previously defined, wherein one of the hydrogen atoms is replaced by an aryl group and/or a heteroaryl group, thus forming a heteroaralkyl, wherein the alkyl, aryl, and/or heteroaryl portions independently are optionally substituted. When used in reference to a ring atom of a heterocycle, the term "nitrogen" includes a substituted nitrogen. Non-limiting examples of aralkyls are: phenylmethyl (benzyl, Bn) and 2-phenyl-ethyl.

Non-limiting examples of alicyclic, heteroalicyclic, aryl and heteroaryl groups include but are not limited to cyclohexyl, phenyl, acridine, benzimidazole, benzofuran, benzothiophene, benzoxazole, benzothiazole, carbazole, cinnoline, dioxin, dioxane, dioxolane, dithiane, dithiazine, dithiazole, dithiolane, furan, imidazole, imidazoline, imidazolidine, indole, indoline, indolizine, indazole, isoindole, isoquinoline, isoxazole, isothiazole, morpholine, napthyridine, oxazole, oxadiazole, oxathiazole, oxathiazolidine, oxazine, oxadiazine, phenazine, phenothiazine, phenoxazine, phthalazine, piperazine, piperidine, pteridine, purine, pyran, pyrazine, pyrazole, pyrazoline, pyrazolidine, pyridazine, pyridine, pyrimidine, pyrrole, pyrrolidine, pyrroline, quinoline, quinoxaline, quinazoline, quinolizine, tetrahydrofuran, tetrazine, tetrazole, thiophene, thiadiazine, thiadiazole, thiatriazole, thiazine, thiazole, thiomorpholine, thianaphthalene, thiopyran, triazine, triazole, and trithiane.

As used herein, the terms "halide", "halo" and "halogen" are used interchangeably and mean a fluorine atom, a chlorine atom, a bromine atom, an iodine atom and the like, optionally a fluorine atom, a bromine atom or a chlorine atom, and optionally a fluorine atom. The term "haloalkyl" includes fluorinated or chlorinated groups, including perfluorinated compounds. Non-limiting examples of haloalkyls include fluoromethyl group, difluoromethyl group, trifluoromethyl group, fluoroethyl group, difluroethyl group, trifluoroethyl group, chloromethyl group, bromomethyl group, iodomethyl group, and the like.

As used herein, the term "alkaryl" refers to an aryl and/or heteroaryl group as previously defined, wherein one or more of the hydrogen atoms is replaced by an alkyl and/or heteroalkyl group as previously defined.

As used herein, the term "alkoxy" refers to the group -OR, wherein R is an alkyl and/or heteroalkyl as defined herein. Non-limiting examples of alkoxy groups include: -OCH₃, -OCH₂CH₃, -OCH₂CH₂CH₃, -OCH(CH₃)₂, -OCH(CH₂)₂, -OC₃H₆, - OC₄H₈, -OC₅H₁₀, -OC₆H₁₂, -OCH₂C₃H₆, -OCH₂C₄H₈, -OCH₂C₅H₁₀, -OCH₂C₆H₁₂, and the like. Non-limiting examples of alkoxy groups include methoxy group, ethoxy group, n-propoxy group, iso-propoxy group, n-butoxy group, iso-butoxy group, sec-butoxy group, tert-butoxy group, n-pentyloxy group, iso-pentyloxy group, sec-pentyloxy group, n-hexyloxy group, iso-hexyloxy group, , n-hexyloxy group, n-heptyloxy group, n-octyloxy group, n-nonyloxy group, n-decyloxy group, n-undecyloxy group, n-dodecyloxy group, n-tridecyloxy group, n-tetradecyloxy group, n-pentadecyloxy group, n-hexadecyloxy group, n-heptadecyloxy group, n-octadecyloxy group, n-nonadecyloxy group, n-eicosyloxy group, 1 , 1-dimethylpropoxy group, 1 ,2-dimethylpropoxy group, 2,2-dimethylpropoxy group, 2-methylbutoxy group, 1-ethyl-2-methylpropoxy group, 1 , 1 ,2-trimethylpropoxy group, 1 , 1-dimethylbutoxy group, 1 ,2-dimethylbutoxy group, 2,2-dimethylbutoxy group, 2,3-dimethylbutoxy group, 1 ,3-dimethylbutoxy group, 2-ethylbutoxy group, 2-methylpentyloxy group, 3-methylpentyloxy group, and the like.

As used herein, the terms alkenyloxy", "alkynyloxy", "aryloxy", "aralkoxy", "heteroaryloxy", and "acyloxy" refer to groups, defined as -OR, in which R is alkenyl, alkynyl, aryl, aralkyl, heteroaryl, and acyl, respectively. Examples include without limitation aryloxy groups such as -O-Ph and aralkoxy groups such as -OCH₂-Ph (-OBₙ) and - OCH₂CH₂- Ph.

As used herein, the term "optionally substituted" means that one or more of the hydrogen atoms in the optionally substituted moiety is replaced by a suitable substituent. Unless otherwise indicated, an "optionally substituted" group may have a suitable substituent at each substitutable position of the group, and when more than one position in any given structure may be substituted with more than one substituent selected from a specified group, the substituent may be either the same or different at every position. Combinations of substituents envisioned by this invention are optionally those that result in the formation of stable compounds. Non-limiting examples of substituents for use in the present invention include halogen, hydroxy, nitro, carboxylate, carbonate, alkoxy, aryloxy, alkylthio, arylthio, heteroaryloxy, alkylaryl, amino, amido, imine, nitrile, silyl, silyl ether, ester, sulfoxide, sulfonyl, acetylide, phosphinate, sulfonate or optionally substituted aliphatic, heteroaliphatic, alicyclic, heteroalicyclic, aryl or heteroaryl groups (for example, optionally substituted by halogen, hydroxy, nitro, carbonate, alkoxy, aryloxy, alkylthio, arylthio, amino, imine, nitrile, silyl, sulfoxide, sulfonyl, phosphinate, sulfonate or acetylide), and the like.

### A. DEGRADABLE POLYETHERS

Embodiments of the present disclosure describe degradable polyethers with a controllable or tunable content of degradable linkages incorporated therein. In some embodiments, the degradable polyethers can be prepared as random copolymers in which ester units or carbonate units are randomly incorporated into a polyether backbone. For example, the degradable polyethers can comprise ester units derived from a cyclic ester such as lactide, cyclic anhydride such as phthalic anhydride or carbonate units derived from carbon dioxide incorporated into a poly(ethylene oxide) backbone. Non-limiting examples of such degradable polyethers include poly(ethylene oxide-co-lactide), poly(ethylene oxide-co-ethyl carbonate), and the like. The degradable polyethers can also be prepared as difunctional or hetero-difunctional copolymers, wherein the terminal ends of the degradable polyethers can have functional groups suitable for biological conjugation and application. In other embodiments, the degradable polyethers are prepared as linear diblock, linear triblock or star polymers in which carbonate units or ester units are incorporated into a linear mono-, difunctional arm, or multifunctional core having polyether arms attached thereto. A non-limiting example of such a degradable polyether includes poly(ethylene oxide) homostars attached to a degradable polycarbonate core.

In some embodiments, the polymer backbone includes poly(ethylene oxide). For example, the polymer backbone can be a poly(ethylene oxide) backbone, which can be linear or branched, substituted or unsubstituted, and functionalized or non-functionalized. In an embodiment, the poly(ethylene oxide) backbone can generally be represented by the following chemical formula:

(-CR₂-CR₂-O-)ₙ

wherein each R is independently selected from hydrogen, alkyls, heteroalkyls, cycloalkyls, alkenyls, heteroalkenyls, cycloalkenes, alkynyls, heteroalkynyls, cycloalkynyls, alkoxys, aryls, heteroaryls, aralkyls, aralkylenes, alkaryls, alkarylenes, halogens, or combinations thereof, each of which can be substituted or unsubstituted, functionalized or non-functionalized; wherein n is at least 1. In an embodiment, the poly(ethylene oxide) backbone is a functionalized linear poly(ethylene oxide). In an embodiment, the poly(ethylene oxide) backbone is a functionalized branched poly(ethylene oxide).

The ester units derived from the cyclic ester, cyclic anhydride or carbonate units derived from carbon dioxide can be incorporated (e.g., randomly incorporated) into the poly(ethylene oxide) backbone or into a multifunctional core of the degradable polyether (e.g., poly(ethylene oxide) homostar). As used herein, the term "ester unit" refers to any segment of the copolymer comprising at least an ester group (e.g., -RC(=O)OR'-). For example, in an embodiment, an ester unit can comprise one or more adjacent lactide units (e.g., L-lactide units), wherein the lactide unit is represented by the following chemical structure:

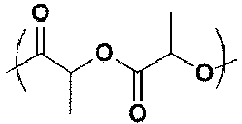

The term "carbonate unit" refers to any segment of the copolymer comprising at least one carbonate group (e.g., -ROC(=O)OR'-). For example, in an embodiment, a carbonate unit can comprise one or more adjacent monoethyl carbonate units, wherein the monoethyl carbonate unit is represented by the following chemical structure:

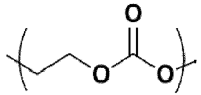

In one embodiment, the degradable polyether can be represented by the following chemical structure: 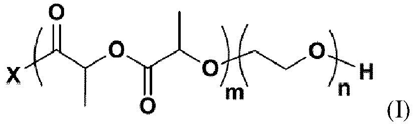 wherein m < n or m << n; wherein X is selected from Cl, Br, N₃, OH, O-, CH₂=CHCH₂O-, or combinations thereof.

In one embodiment, the degradable polyether can be represented by the following chemical structure: 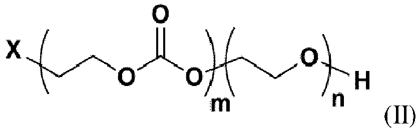 wherein m < n or m << n; wherein X is selected from Cl, Br, N₃, OH, O-, CH₂=CHCH₂O-, or combinations thereof.

In one embodiment, the core of degradable polyether can be represented by the following chemical structure:

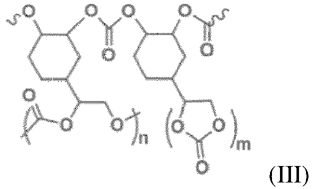

These are provided as examples and thus shall not be limiting as other degradable polyethers are within the scope of the present invention.

The content of the ester units and carbonate units incorporated into the copolymer and multifunctional core is highly tunable, thereby permitting control over the properties and characteristics of the resulting degradable polyether. For example, the poly(ethylene oxide) backbone can be incorporated with a very low to moderate content of ester units or carbonate units sufficient to impart degradable properties to the copolymer, or in the case of some polyether stars, a moderate to high content of ester units and/or carbonate units can be present in the multifunctional core. In some embodiments, the ester units and/or carbonate units can be incorporated without modifying or by retaining the intrinsic properties of either monomer. In one embodiment, the content of ester units and/or carbonate units is very low, for example, about 3% to about 5%. In other embodiments, the ester content and/or carbonate content of the degradable polyether can be about 20% or less. For example, the ester content and/or carbonate content can be about 20% or less, about 19% or less, about 18% or less, about 17% or less, about 16% or less, about 15% or less, about 14% or less, about 13% or less, about 12% or less, about 11% or less, about 10% or less, about 9% or less, about 8% or less, about 7% or less, about 6% or less, about 5% or less, about 4% or less, about 3% or less, about 2% or less, about 1% or less, about 0.5% or less, or about 0.1% or less, or any increment thereof. In other embodiments, such as in the case of star polymers, the ester and/or carbonate content can be at least about 70% or greater. For example, the ester content and/or carbonate content can be about 85%, about 88%, about 89%, or about 90%, or any value or range between 70% and 100%.

The average length of the ester units and carbonate units incorporated into the copolymer and/or multifunctional core can also be tuned. The average length of ester units can refer to the average number of adjacent ester groups found along the copolymer backbone and/or in the multifunctional core, within each ester unit. The average length of carbonate units can refer to the average number of adjacent carbonate groups found along the copolymer backbone and/or in the multifunctional core, within each carbonate unit. The units can be measured in terms of groups, such as ester groups and/or carbonate groups, or it can be measured in terms of the monomers, such as lactides and/or carbonates. For example, in one embodiment, the average length of the ester units and carbonate units found along the copolymer backbone can be about 2 lactides or less and about 2 monoethyl carbonates or less, respectively. In other embodiments, the average length of the ester units and carbonate units found along the copolymer backbone can be about 10 or less. For example, the average length of the ester units and carbonate units can be about 10 or less, about 9 or less, about 8 or less, about 7 or less, about 6 or less, about 5 or less, about 4 or less, about 3 or less, about 2 or less, or about 1. In other embodiments, the average length of the ester units and carbonate units found along the copolymer backbone can be about 10 or more, corresponding to a diblock [polyether-b-polyester(polycarbonate)], or triblock copolymers [polyether-b-polyester(polycarbonate)-b-polyether].

One or more of the terminal ends of the degradable polyether can have functional groups to allow conjugation of biologically active molecules with the poly(ethylene oxide). The functional group can be selected based on the target molecule with which the degradable polyether is to be conjugated. In an embodiment, the functional groups can be selected from halogen-, ester-, acid-, azide-, hydroxyl-, amino-, vinyl-containing end groups, and combinations thereof. For example, the functional groups can be selected from Cl, Br, N₃, OH, O-, CH₂=CHCH₂O-, and combinations thereof. Suitable biologically active molecules include, but are not limited to, proteins, peptides, enzymes, medicinal chemicals or organic moieties, and combinations thereof.

In one embodiment, the degradable polyether can be a linear hydrophilic copolymer (e.g., PEOEC), optionally a functionalized PEG analogue, represented by the following chemical structure: 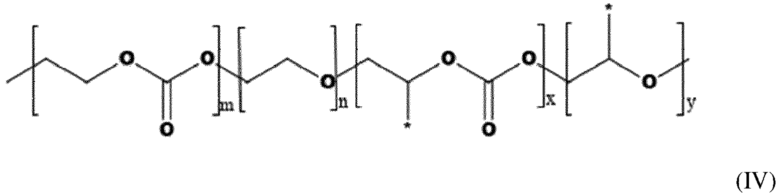 wherein m < norm « n; x and y can be 0 or a positive integer, x+y<m wherein * is -CH₂-O-CH₂CH=CH₂ or any group that can be derivatized through thiol-ene click reaction or by acetal formation.

The degradable polyether can include side chains with functional groups to allow conjugation of biologically active molecules with the poly(ethylene oxide). For example, methods of the present disclosure include a method of making a functionalized degradable polyether copolymer comprising: contacting ethylene oxide and a functionalized epoxide with carbon dioxide in the presence of a solvent, an alkyl borane activator and an onium salt initiator to form poly(ethylene oxide) having degradable carbonate linkages incorporated into the polymer backbone and pendant functional groups, wherein the carbonate content of the copolymer is about 20% by weight or less. For example, to maintain the properties of PEO, the carbonate content should be less than 10 mol%, such as about 5 mol%. The alkyl borane activator can be selected from triethyl borane, triphenyl borane, tributylborane, trimethyl borane, triisobutylborane, and combinations thereof. The onium salt initiator can be selected from the groups described above. The degradable polyether can be formed under metal-free conditions. The functionalized degradable polymer can be a terpolymer or block copolymer. The method can include feeding the ethylene oxide and the functionalized epoxide at a molar ratio within a range of at least 10:1, such as about 20:1 or more. The polymerization can include copolymerization ethylene oxide along with cyclic ester, cyclic anhydride or carbon dioxide; or sequentially copolymerization ethylene oxide along with cyclic ester, cyclic anhydride or carbon dioxide first and then homopolymerization of ethylene oxide in the second step. The reactants can be dissolved in a coordinating solvent, such as tetrahydrofuran. The ethylene oxide and the solvent can be present at a ratio (v:v) within a range of about 3:1 to about 1:1. The initiator can have a chemical formula selected from: {Y⁺, RO⁻}, {Y⁺, RCOO⁻}, {X⁺, N₃⁻}, and {X⁺, Cl⁻}; wherein Y⁺ is selected from K⁺, *t-*BuP₄⁺, and *t*-BuP₂⁺; wherein X⁺ is selected from NBu₄⁺, PBu₄⁺, NOct₄⁺, and PPN⁺; wherein RO⁻ is selected from: 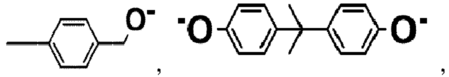 CH₃O(CH₂)₂O(CH₂)₂O⁻, and H₂C=CHCH₂O⁻, wherein RCOO⁻ is an aliphatic or aromatic carboxylate, optionally the onium salt initiator is tetrabutylammonium succinate, tetrabutylammonium chloride, tetraoctylammonium chloride or bis(triphenylphosphine)iminium chloride. The ethylene oxide and the initiator can be present at a molar ratio within a range of about 5000:1 to about 1000:1. The activator and the initiator can be present at a molar ratio within a range of 2:1 to 1:1. The carbon dioxide can be charged at a constant pressure of less than 4 bar, such as 2 bar or less, or about 1 bar. The copolymer can have a molar mass (number) of at least 80 kg/mol. The dispersity of the copolymer can be less than 1.2, such as less than 1.15 or about 1.1. In some cases, the functionalized epoxide is selected from the group consisting of azidoalkyl glycidyl ethers, allyl glycidyl ether, isopropylidene glyceryl glycidyl ether, ethoxy ethyl glycidyl ether, ethoxyl vinyl glycidyl ether, N,N-dibenzyl amino glycidyl, glycidyl methacrylate, 1,2-epoxy-5-hexene, 1,2-epoxy-7-octene, 1,2-epoxy-9-decene, or a combination thereof. Post-polymerization modifications can be performed, i.e., thiol-ene functionalization. The functionalized copolymers can be derivatized in different ways including by reaction with a thiol a side-chain to generate a polythioether, for example, and reaction with an alcohol to generate a side-chain polyacetal, for example.

The degradable polyethers can be well-defined and have a molar mass ranging from about greater than 0 kg/mol to about 50 kg/mol, even up to about 850 kg/mol. In one embodiment, the molar mass of the degradable polyether is about 24 kg/mol or less. In some embodiments, the molar mass of the degradable polymers can be about 50 kg/mol, about 35 kg/mol or less, about 30 kg/mol or less, about 25 kg/mol or less, about 24 kg/mol or less, about 23 kg/mol or less, about 22 kg/mol or less, about 21 kg/mol or less, about 20 kg/mol or less, about 19 kg/mol or less, about 18 kg/mol or less, about 17 kg/mol or less, about 16 kg/mol or less, about 15 kg/mol or less, about 14 kg/mol or less, about 13 kg/mol or less, about 12 kg/mol or less, about 11 kg/mol or less, about 10 kg/mol or less, about 9 kg/mol or less, about 8 kg/mol or less, about 7 kg/mol or less, about 6 kg/mol or less, about 5 kg/mol or less, about 4 kg/mol or less, about 3 kg/mol or less, about 2 kg/mol or less, or about 1 kg/mol or less. In other embodiments, the molar mass of the degradable polyether star is about 850 kg/mol or less, or any value or range between 0 kg/mol and 850 kg/mol.

The degradable polyethers can also have narrow polydispersity. In an embodiment, the polydispersity index of the degradable polyethers can range from about 1 to about 1.6. For example, the polydispersity index of the degradable polyethers can be about 1.6, about 1.5, about 1.4, about 1.30, about 1.29, about 1.28, about 1.27, about 1.26, about 1.25, about 1.24, about 1.23, about 1.22, about 1.21, about 1.20, about 1.19, about 1.18, about 1.17, about 1.16, about 1.15, about 1.14, about 1.13, about 1.12, about 1.11, about 1.10, about 1.09, about 1.08, about 1.07, about 1.06, about 1.05, about 1.04, about 1.03, about 1.02, about 1.01, or about 1.00.

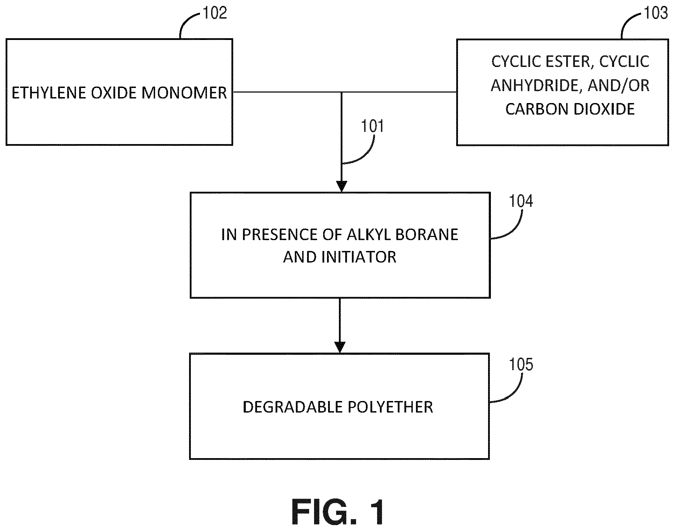

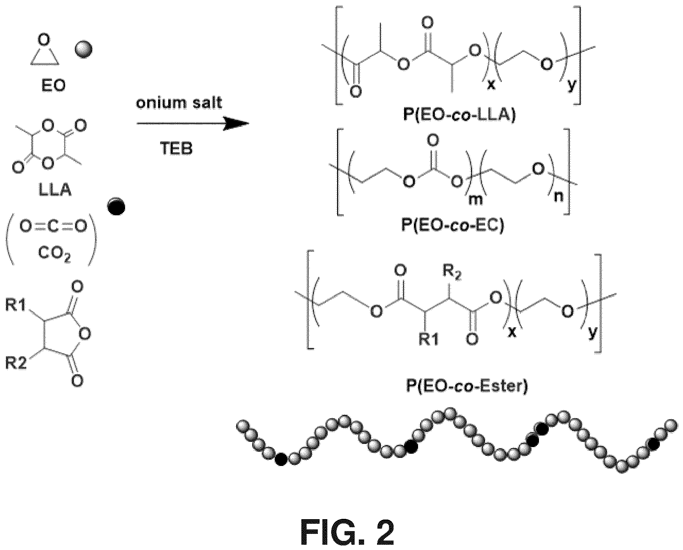

**FIG. 1** is a flowchart of a method of forming a degradable polyether by anionic ring opening copolymerization, according to one or more embodiments of the present disclosure. As shown in **FIG. 1****,** method 100 can proceed by contacting 101 an ethylene oxide monomer 102 with a cyclic ester, cyclic anhydride, and/or carbon dioxide 103 in the presence of an alkyl borane and an initiator 104 to form a polyether 105 having degradable carbonate linkages or degradable ester linkages incorporated into the polymer backbone. A schematic diagram of a reaction scheme in which a degradable polyether is formed is shown in **FIG. 2****.**

The contacting generally proceeds by bringing the ethylene oxide monomer, cyclic ester, cyclic anhydride carbon dioxide, alkyl borane, and/or initiator into physical contact, or immediate or close proximity. The contacting of each component or species can proceed simultaneously or sequentially, in any order, and thus is not particularly limited. Each of the species can be contacted in a solvent, such as apolar solvents or slightly polar solvents. For example, in an embodiment, the solvent can be selected from toluene and tetrahydrofuran, among other such solvents. The contacting can proceed at temperatures in the range of about 0 °C to about 100 °C, or any value or range thereof. Preferably the contacting proceeds at about room temperature, such as temperatures in the range of about 20 °C to about 30 °C. The duration of the contacting should be sufficient to carry out the copolymerization reaction. For example, the duration of the contacting can range from about 1 min to about 1000 min, or longer in some instances.

In embodiments involving cyclic esters such as lactide, the activator and initiator can optionally be contacted separately from the ethylene oxide monomer and cyclic ester. For example, in an embodiment, the activator and initiator can be contacted in a solvent to form a first solution, and the ethylene oxide monomer and cyclic ester can be contacted separately in a solvent to form a second solution. The first solution and the second solution can then be contacted, optionally under stirring, and the reaction allowed to proceed. In embodiments in which the initiator has two components, the initiator can optionally be formed prior to being contacted with the activator. For example, in an embodiment, initiator precursor species can be contacted in a solvent to form the initiator and then the initiator can be contacted with the activator in a solvent to form the first solution. In embodiments involving carbon dioxide, the initiator and carbon dioxide can optionally be contacted and then dissolved in a solvent to form a first solution, and the activator can be contacted with a solvent to form a second solution. The first solution and second solution can then be contacted and thereafter the ethylene oxide monomer can be added and the reaction allowed to proceed (e.g., under 1 bar of carbon dioxide).

The molar ratio of the ethylene oxide monomer to cyclic ester, cyclic anhydride or carbon dioxide can be selected or adjusted to achieve degradable polyethers with varying (and tunable) content of ester units or carbonate units at select or desired lengths. Typically, the ethylene oxide monomer is added in stoichiometric excess of the cyclic ester, cyclic anhydride or carbon dioxide. For example, the molar ratio of the ethylene oxide monomer to the cyclic ester can range from about 1.01:1 to about 10:1. In an embodiment, the molar ratio can be about 2:1, about 3:1, about 4:1, about 5:1, about 6:1, about 7:1, about 8:1, about 9:1, about 10:1, or any increment between those ratios.

Suitable ethylene oxide monomers include monomers of the formula: 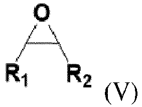 wherein each of R₁ and R₂ can be independently selected from nothing, hydrogen, alkyls, heteroalkyls, cycloalkyls, alkenyls, heteroalkenyls, cycloalkenes, alkynyls, heteroalkynyls, cycloalkynyls, alkoxys, aryls, heteroaryls, aralkyls, aralkylenes, alkaryls, alkarylenes, halogens, or combinations thereof, each of which can be substituted or unsubstituted. In some embodiments, R₁ and R₂ connect to form a fused ring having, for example, five or more carbon atoms in the ring structure, where any of the carbon atoms can optionally be replaced with a heteroatom. In some embodiments, R₁ and/or R₂ comprise one or more additional ethylene oxide monomers. For example, in some embodiments, the ethylene oxide monomer can be characterized as diepoxide monomers, triepoxide monomers, etc. Non-limiting examples of suitable ethylene oxide monomers include: 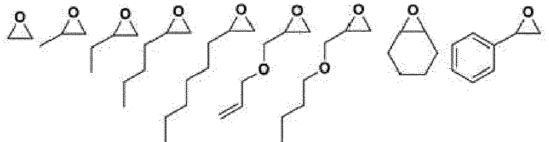 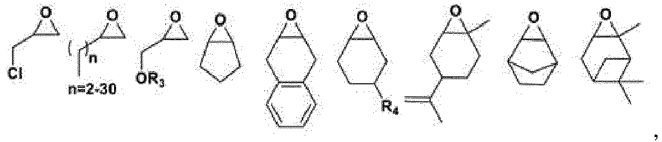 where each of R₃ and R₄ is independently one or more of any alkyl group including saturated and unsaturated, aromatic, cyclic alkyl group, heteroatom (e.g., halide, N₃, O, S, etc) containing alkyl groups. These shall not be limiting as other ethylene oxide monomers can be utilized herein without departing from the scope of the present disclosure. For example, each R₃ and R₄ can be independently selected from the group consisting of alkyl groups including saturated and unsaturated, aromatic and cyclic alkyl groups, azide containing alkyl groups, and heteroatom containing alkyl groups, wherein the heteroatom is a halide, N, O, P, Si, Se, or S, wherein the nitrogen, phosphorous, sulfur, and selenium atoms are optionally oxidized, and the nitrogen heteroatom is optionally be quaternized, optionally wherein the ethylene oxide monomer is ethylene oxide.

The cyclic ester can be selected from any cyclic compound (e.g., cycloalkanes, cycloalkenes, etc.) having one or more carbon atoms replaced by an ester unit/group of the formula -C(O)O-. Suitable cyclic esters include, but are not limited to, cyclic monoesters, cyclic diesters, cyclic triesters, and the like. Non-limiting examples of suitable cyclic esters include lactide, trimethylene carbonate, glycolide, β-butyrolactone, δ-valerolactone, γ-butyrolactone, γ-valerolactone, 4-methyldihydro-2(3H)-furanone, alpha-methyl-gamma-butyrolactone, ε-caprolactone, 1 ,3-dioxolan-2-one, propylene carbonate, 4-methyl-1 ,3-dioxan-2-one, 1,3- doxepan-2-one, 5-C₁₋₄alkoxy-1,3-dioxan-2-one; and mixtures or derivatives thereof; any one of which can be unsubstituted or substituted. In preferred embodiments, the cyclic ester includes a lactide monomer. The lactide monomers can be selected from L-lactide, D-lactide, *meso-*lactide*,* and combinations thereof. The lactide monomers can further be substituted or unsubstituted. For example, the methyl groups of lactide can be replaced with one or more substituents selected from hydrogen, alkyls, heteroalkyls, cycloalkyls, alkenyls, heteroalkenyls, cycloalkenes, alkynyls, heteroalkynyls, cycloalkynyls, alkoxys, aryls, heteroaryls, aralkyls, aralkylenes, alkaryls, alkarylenes, halogens, or combinations thereof, each of which can be substituted or unsubstituted. The aforementioned substituents shall not be limiting as any substituent known in the art can be used herein.

The cyclic anhydride may be a saturated cyclic anhydride, an unsaturated cyclic anhydride, or a mixture thereof. "Saturated" anhydrides include anhydrides that contain no reactive ethylenic unsaturation, but which may have aromatic rings. Exemplary saturated cyclic anhydrides include, but are not limited to, succinic anhydride, phthalic anhydride, tetrahydrophthalic anhydride, alkyl and aryl-substituted succinic anhydrides, halogenated saturated cyclic anhydrides such as tetrabromophthalic anhydride, and mixtures thereof. In some cases, the cyclic anhydride is selected from unsaturated cyclic anhydrides (i.e., cyclic anhydrides with ethylenic unsaturation) or from mixtures of an unsaturated cyclic anhydride and a saturated cyclic anhydride. Examples of unsaturated cyclic anhydrides include, but are not limited to, maleic anhydride, citraconic anhydride, itaconic anhydride, halogenated unsaturated cyclic anhydrides, and mixtures thereof. In one or more embodiments, the cyclic anhydride can be one or more aromatic and aliphatic anhydrides, such as phthalic anhydride, succinic anhydride, diglycolic anhydride, glutaric anhydride, maleic anhydride, and mixtures thereof.

The activator can be selected to achieve one or more of the following: selectively activate the ethylene oxide monomer, form an ate complex with the initiator, suppress transesterification reactions, and suppress the formation of cyclic carbonates. The alkyl borane is typically provided in stoichiometric excess of the initiator. In one embodiment, a ratio of the alkyl borane to initiator can be about 5:1. In some embodiments, the ratio of the alkyl borane to initiator is in the range of about 1:1 to about 5:1. In other embodiments, a ratio of the alkyl borane to initiator can be about 2:1, about 3:1, about 4:1, about 5:1, about 6:1, about 7:1, about 8:1, about 9:1, about 10:1, or even greater. The activator used in the methods described herein can be an alkyl borane, such as a trialkyl borane. Non-limiting examples of suitable activators include triethyl borane, triphenyl borane, tributylborane, trimethyl borane, triisobutylborane, and combinations thereof. In certain embodiments, the alkyl borane is triethyl borane.

The initiator, which forms an ate complex with the activator, can include salts or organic bases. The salts and organic bases can include organic cations or alkali metals associated or mixed with anions. For example, in an embodiment, the initiator includes an organic cation associated or mixed with an alkoxide having an organic substituent. In an embodiment, the initiator includes an alkali metal associated or mixed with an alkoxide having an organic substituent. In an embodiment, the initiator includes an organic cation associated or mixed with an azide. In an embodiment, the initiator includes an organic cation associated or mixed with a halogen.

The organic cations can be based on one or more of phosphazenium, ammonium, and phosphonium. For example, in an embodiment, the organic cation can be based on phosphazene bases, such as *t*-Bu-P_{Y}, where Y is 2 or 4; or ammonium salts or phosphonium salts, wherein the nitrogen or phosphorous thereof is connected to four alkyl groups, each of which can be the same or different. The alkali metal can include any alkali metal. For example, in an embodiment, the alkali metals can be selected from lithium, potassium, sodium, and combinations thereof. The anions can include any negatively charged species. For example, in an embodiment, the anions can be selected from hydroxyls, esters, acids, alkoxides, azides, and halogens. The alkoxides can be formed from any alcohol having at least one hydroxyl group. Any halogen can be used. For example, in an embodiment, the halogen can be selected from Cl⁻ and Br⁻.

In an embodiment, the initiator can be selected from the following chemical formulas:

{Y⁺, RO⁻}, {Y⁺, RCOO⁻}, {X⁺, N₃⁻}, and {X⁺, Cl⁻};

wherein Y⁺ is selected from K⁺, *t*-BuP₄⁺, and *t*-BuP₂⁺; wherein X⁺ is selected from NBu₄⁺, PBu₄⁺, NOct₄⁺, and PPN⁺; wherein RO⁻ is selected from CH₃O(CH₂)₂O(CH₂)₂O⁻, H₂C=CHCH₂O⁻, 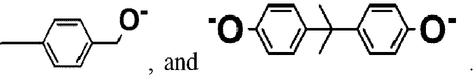 For example, the initiator can be selected and/or prepared from p-methyl benzyl alcohol (PMBA) and *t*-BuP₄, diethylene glycol monomethyl ether (DGME) and *t*-BuP₄, bisphenol A (BPA) and *t*-BuP₄, *p-*methyl benzyl alcohol (PMBA) and *t*-BuP₂, tetra butyl ammonium chloride (TBAC or Bu₄NCl), bis(triphenylphosphine)iminium chloride (PPNCl), tetra octyl ammonium chloride (TOACl or Oct₄Cl), tetra butyl phosphonium chloride (TBPCl), tetra butyl ammonium azide (TBAA), and Allyl alcohol and *t*-BuP₄.

The initiator can be a mono-functional initiator such as Tetrabutylammonium chloride, tetraoctylammonium chloride and bis(triphenylphosphine)iminium chloride, or a bi-functional initiator such as tetrabutylammonium succinate (TBAS). Initiators can be synthesized and purified according to the literature.

In one embodiment, the method of forming a degradable polyether can proceed as shown in the following reaction scheme:

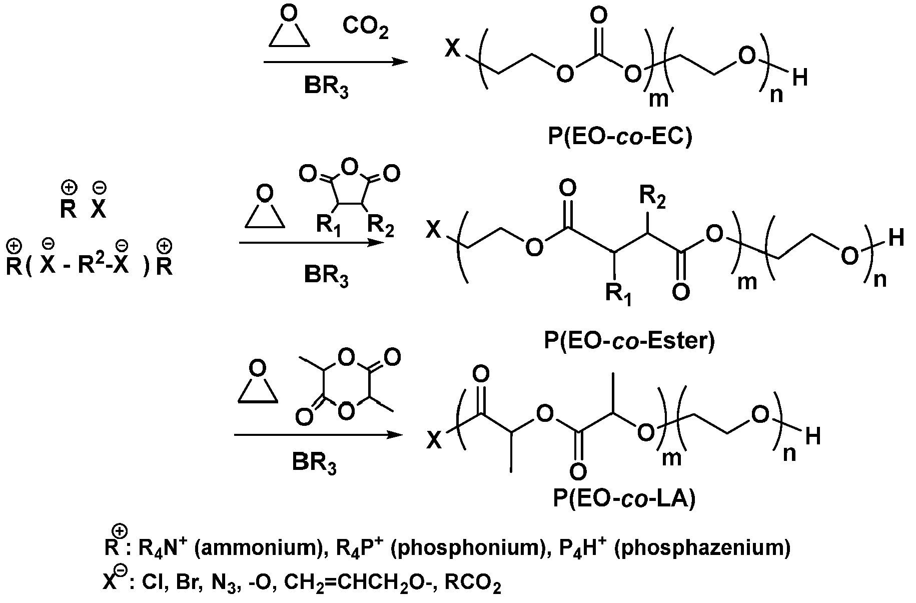

Embodiments of the present disclosure further describe modified biological molecules comprising a biologically active molecule conjugated with a degradable polyether having ester units or carbonate units incorporated into a poly(ethylene oxide) backbone. Typically, the biologically active molecule is modified through covalent conjugation with the degradable polyether. The biologically active molecule can be selected from proteins, peptides, enzymes, medicinal chemicals or organic moieties, and combinations thereof. The degradable polyether can comprise any of the copolymers of the present disclosure.

### B. DEGRADABLE POLYETHER STARS

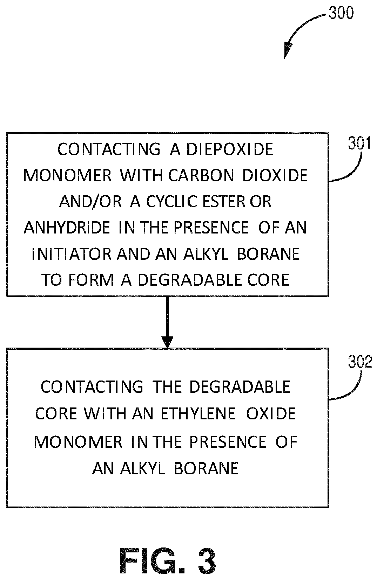

**FIG. 3** is a flowchart of a method of forming a degradable polyether star, according to one or more embodiments of the present disclosure. As shown in **FIG. 3****,** the method 300 can proceed by contacting 301 a diepoxide monomer with carbon dioxide a cyclic ester, and/or cyclic anhydride, in the presence of an initiator and a first amount of an alkyl borane. In this step, the diepoxide monomer can copolymerize, e.g., by anionic ring-opening copolymerization, with the carbon dioxide, cyclic ester, and/or cyclic anhydride to yield a multifunctional core comprising carbonate units and/or ester units. For example, the carbonate units can be derived from the carbon dioxide, yielding degradable carbonate linkages. The ester units can be derived from the cyclic ester or cyclic anhydride, yielding degradable ester linkages. The presence of the carbonate units and/or ester units can depart degradability to the resulting multifunctional core. Examples of such multifunctional cores include, but are not limited to, polycarbonate cores, polyether cores, polyester cores, and the like.

The contacting 301 can proceed by sequentially or simultaneously adding, in any order, the initiator, a solvent, alkyl borane, diepoxide monomer, carbon dioxide, and/or cyclic ester, and/or cyclic anhydride to a reaction vessel, which can optionally proceed under mechanical stirring. For example, in some embodiments, a suitable preparation sequence includes sequentially adding the initiator to the reaction vessel, followed by the sequential addition of the solvent, alkyl borane, and diepoxide monomer, with or without mechanical stirring. Upon adding one or more of the foregoing components, carbon dioxide, cyclic ester, and/or cyclic anhydride can be introduced into the reaction vessel and the copolymerization reaction can be allowed to proceed. During or through the copolymerization reaction, the epoxide rings of the diepoxide monomer can ring open and each can copolymerize with carbon dioxide, the cyclic ester, and/or cyclic anhydride in the presence of the initiator and alkyl borane. In this way, the diepoxide monomer can serve as crosslinker, linking at least two polymer chains, each being formed through the copolymerization.

Suitable initiators, solvents, and/or alkyl boranes are described above and thus not repeated here. The diepoxide monomer can be selected from any monomer comprising at least two epoxides. An example of a suitable diepoxide monomer include vinyl cyclohexene dioxide and its derivatives. Other suitable diepoxide monomers include, but are not limited to, butadiene dioxide; 1,2,3,4-diepoxybutane; 1,2,7,8-diepoxyoctane; 1,2,5,6-diepoxycyclooctane; dicylopentadiene diepoxide; poly(ethylene glycol diglycidal); diglycidyl ethers such as glycerol diglycidal as well as diglycidyl ethers of such compounds as 1,3-propanediol, 1,4-butanediol, 1,6-hexandiol, cyclohexane-1,4-diol, cyclohexane-1,1-dimethanol, cyclohexane-1,2-dimethanol, cyclohexane-1,3-dimethanol, cyclohexane-1,4-dimethanol, diethylene glycol, hydroquinone, resorcinol, 4,4-isopropylidenebisphenol, naphthalene diols, and the like; or derivatives thereof. While diepoxide monomers are described, other multifunctional epoxides can be utilized herein, including, for example, triepoxides, and the like.

The extent or degree of crosslinking may affect the degradability of the resulting multifunctional core. For example, while it can depend on the selection of the reagents and reaction conditions, among other things, a high degree of crosslinking may not yield degradable multifunctional cores but form a gel. Accordingly, in carrying out the copolymerization, it may be desirable for the extent or degree of crosslinking of the diepoxide monomer to be kept or maintained at a low to moderate level. This can be achieved, for example, by using low to moderate amounts of the diepoxide monomer. For example, in some embodiments, the molar ratio of diepoxide monomer to initiator is kept below about 10, but no greater than about 20. For example, the molar ratio of diepoxide monomer to initiator can be about 20 or less, about 19 or less, about 18 or less, about 17 or less, about 16 or less, about 15 or less, about 14 or less, about 13 or less, about 12 or less, about 11 or less, preferably about 10 or less, or about 9 or less, about 8 or less, about 7 or less, about 6 or less, or more preferably about 5 or less, or about 4 or less, about 3 or less, or about 2 or less, or any value or range thereof.

The volumetric ratio of diepoxide monomer to solvent can be in the range of about 1:1 to about 1:10. For example, in some embodiments, the volumetric ratio of diepoxide monomer to solvent is about 1:1, about 1:1.5, about 1:2, about 1:2.5, about 1:3, about 1:3.5, about 1:4, about 1:4.5, about 1:5, about 1:5.5, about 1:6, about 1:6.5, about 1:7, about 1:7.5, about 1:8, about 1:8.5, about 1:9, about 1:9.5, or about 1:10, or any range therebetween or value thereof.

The carbon dioxide can be charged to the reaction vessel at pressures in the range of about 0.01 bar to about 25 bar. For example, in some embodiments, the carbon dioxide can be charged at pressures in the range of about 5 bar to about 15 bar, preferably about 10 bar. In other embodiments, the carbon dioxide is charged at a pressure of about 1 bar, about 2 bar, about 3 bar, about 4 bar, about 5 bar, about 6 bar, about 7 bar, about 8 bar, about 9 bar, about 10 bar, about 11 bar, about 12 bar, about 13 bar, about 14 bar, about 15 bar, about 16 bar, about 17 bar, about 18 bar, about 19 bar, about 20 bar, about 21 bar, about 22 bar, about 23 bar, about 24 bar, or about 25 bar, or any value or range thereof.

The temperatures at or under which step 301 is performed can be in the range of about 0 °C to about 100 °C. In some embodiments, the contacting proceeds at a temperature in the range of about 50 °C to about 80 °C. For example, the contacting can proceed at a temperature of about 50 °C, about 51 °C, about 52 °C, about 53 °C, about 54 °C, about 55 °C, about 56 °C, about 57 °C, about 58 °C, about 59 °C, about 60 °C, about 61 °C, about 62 °C, about 63 °C about 64 °C, about 65 °C, about 66 °C, about 67 °C, about 68 °C, about 69 °C, about 70 °C, about 71 °C, about 72 °C, about 73 °C, about 74 °C, about 75 °C, about 76 °C, about 77 °C, about 78 °C, about 79 °C, or about 80 °C, or any value therebetween or range thereof. In addition, the contacting can proceed for durations of about a week or less, preferably less than about 24 h, or more preferably less than about 17 h, such as about 15 h.

Upon forming the multifunctional core in step 301 and optionally cooling of the reaction vessel, the arms of the degradable polyether star can be polymerized. Accordingly, at step 302, the degradable multifunctional core from step 301 is contacted with an ethylene oxide monomer in the presence of a second amount of the alkyl borane. The ethylene oxide monomer is polymerized in the ensuing reaction, yielding arms of a polyether attached to the degradable multifunctional core, thereby forming the degradable polyether star. In some embodiments, the arms of the polyether star are chemically identical, thereby affording homostars. In some embodiments, two or more ethylene oxide monomers can be reacted, or monomers other than ethylene oxide monomers can be reacted, to afford heterostars with different arms, or stars with arms comprising copolymers (e.g., block copolymers), among other types of polymers.

To form the arms of the polyether star, the ethylene oxide monomer can be added to the reaction vessel. Suitable ethylene oxide monomers are described above and thus not repeated here. In some embodiments, a solution comprising the ethylene oxide monomer, solvent, and the second amount of alkyl borane are injected into the reaction vessel, following the purging or release of unreacted carbon dioxide. In embodiments involving cyclic esters, the reaction in step 301 can be allowed to proceed until full or complete consumption of the cyclic ester is obtained, or unreacted cyclic ester can be separated and/or removed from the reaction vessel. Upon the addition of the ethylene oxide monomer, solvent, and second amount of alkyl borane, the polymerization can be allowed to proceed, optionally under mechanical stirring, to form the polyether arms of the star polymer.

The volumetric ratio of ethylene oxide monomer to solvent can be in the range of about 1:1 to about 1:20. For example, in some embodiments, the volumetric ratio of ethylene oxide monomer to solvent is about 1:1, about 1:2, about 1:3, about 1:4, about 1:5, about 1:6, about 1:7, about 1:8, about 1:9, about 1:10, about 1:11, about 1:12, about 1:13, about 1:14, about 1:15, about 1:16, about 1:17, about 1:18, about 1:19, or about 1:20, preferably about 1:5 to about 1:15, or more preferably about 1:10.

Although not required, in some embodiments, the alkyl borane added in step 301 of the present method is added to the reaction vessel in stoichiometric quantities with the initiator, each of which react to form an ate complex that can be utilized to activate the copolymerization in step 301. In some instances, a second amount of the alkyl borane in step 302 can be added to the reaction vessel such that the alkyl borane is present in stoichiometric excess to activate the ethylene oxide and ring-open polymerization. In some embodiments, the excess alkyl borane may be utilized to activate the ethylene oxide monomer in the polymerization of the polyether arms. In some embodiments, the first amount and second amount of the alkyl borane is the same. In some embodiments, the first amount and the second amount of the alkyl borane is different. For example, in some embodiments, the first amount of the alkyl borane is less than the second amount. In some embodiments, the first amount of the alkyl borane is greater than the second amount.

In some embodiments, either at the time of contacting 302 or throughout the polymerization of the ethylene oxide monomer, or both, the molar ratio of the multifunctional core to alkyl borane can be selected or maintained at a molar ratio in the range of about 1:1 to about 1:10. For example, in some embodiments, the molar ratio of the multifunctional core to alkyl borane is selected or maintained at about 1:1, about 1:1.5, about 1:2, about 1:2.5, about 1:3, about 1:3.5, about 1:4, about 1:4.5, about 1:5, about 1:5.5, about 1:6, about 1:6.5, about 1:7, about 1:7.5, about 1:8, about 1:8.5, about 1:9, about 1:9.5, or about 1:10, or any value or range thereof. Preferably, the molar ratio of the diepoxide monomer to alkyl borane is in the range of about 1:3 to about 1:5, or any value thereof, more preferably about 1:3.

The temperatures at or under which step 302 is performed can be in the range of about 0 °C to about 100 °C. In some embodiments, the contacting proceeds at a temperature in the range of about 30 °C to about 50 °C. For example, the contacting can proceed at a temperature of about 30 °C, about 31 °C, about 32 °C, about 33 °C, about 34 °C, about 35 °C, about 36 °C, about 37 °C, about 38 °C, about 39 °C, about 40 °C, about 41 °C, about 42 °C, about 43 °C about 44 °C, about 45 °C, about 46 °C, about 47 °C, about 48 °C, about 49 °C, or about 50 °C, or any value therebetween or range thereof. Preferably, the polymerization reaction is carried out at a temperature of about 40 °C. In addition, the contacting can proceed for durations of about a week or less, preferably about 24 h or less.

In further step 303 (not shown), the reaction mixture from step 302 can be quenched using an acid, such as HCl, in an alcohol, such as methanol. To obtain the fine product, the crude product can be dissolved and/or precipitated in diethyl ether, and then centrifuged and dried.

### C. HYDROPHOBIC COPOLYMERS

The present disclosure further relates to hydrophobic copolymers of ethylene oxide monomers and carbon dioxide, cyclic esters, or cyclic anhydrides. The synthetic routes for forming the hydrophobic copolymers may proceed under metal-free conditions. In these embodiments, the initiating system only needs to include an organic cation and borane as an activator for the copolymerization to proceed metal-free.

The method can include a first step of contacting an ethylene oxide monomer (e.g., EO) and carbon dioxide, cyclic ester or cyclic anhydride in the presence of an activator including trialkyl borane, solvent, and an initiator. The method can include separating the activator from the ethylene oxide monomer before charging the carbon dioxide or adding the cyclic ester or anhydride to prevent homopolymerization. The ethylene oxide monomer may include one or more of ethylene oxide, propylene oxide, 1-butene oxide, 1-hexene oxide, 1-octene oxide, styrene oxide, cyclohexene oxide, allyl glycidyl ether, and butyl glycidyl ether.

Contacting and/or adding may refer to bringing two or more components into proximity, such as physical and/or chemical proximity. In many embodiments, contacting may include adding and/or mixing two or more components in a reaction vessel and/or charging a chamber including the reaction vessel with a gaseous component sufficient to bring at least two of the components into physical and/or chemical proximity. In some cases, contacting includes ensuring the mixture is homogeneous. In many embodiments, the contacting and adding is generally in the presence of the same activator and initiator. In other embodiments, the contacting and adding may be in the presence of a different activator and/or a different initiator.

The contacting can proceed at temperatures in the range of about 0 °C to about 100 °C, or any value or range thereof. Preferably the contacting proceeds at about room temperature, such as temperatures in the range of about 20 °C to about 30 °C. The duration of the contacting should be sufficient to carry out the copolymerization reaction. For example, the duration of the contacting can range from about 1 min to about 1000 min (e.g., about 15 hours), or longer in some instances (e.g., up to about 50 hours).

Any of the activators and initiators described above may be used. In many embodiments, the activator includes one or more of triethyl borane (TEB), trimethyl borane, triisobutylborane, and triphenylborane. In other embodiments, the activator may include an alkyl borane and/or alkyl aluminum. The initiator may include an organic cation, such as phosphazenium, ammonium, and phosphonium. The initiator can be a monofunctional initiator or a bifunctional initiator.

In some embodiments, the activator added to the reaction vessel in stoichiometric quantities with the initiator, each of which react to form an ate complex that can be utilized to activate the copolymerization. The activator can be selected to achieve one or more of the following: selectively activate the ethylene oxide monomer, form an ate complex with the initiator, suppress transesterification reactions, and suppress the formation of cyclic carbonates. The alkyl borane activator is typically provided in stoichiometric excess of the initiator. In one embodiment, a ratio of the alkyl borane to initiator can be about 1:1 to about 5:1. In some embodiments, the ratio of the alkyl borane to initiator is in the range of about 1.2:1, about 1.4:1, about 1.6:1, about 1.8:1, about 2: 1, about 2.2:1, or even greater. The activator used in the first step can be an alkyl borane. Non-limiting examples of suitable activators include triethyl borane, triphenyl borane, tributylborane, trimethyl borane, triisobutylborane, and combinations thereof. In certain embodiments, the alkyl borane is triethyl borane. The initiator used in the first step can be a monofunctional or bifunctional initiator, as described above, such as TBACl, TOACl, and PPNCl, or TBAS. For example, to synthesize a polycarbonate first block having a high carbonate content, the activator can be TEB, the initiator can be TBAS, and the ratio of activator to initiator of about 1:1-1.6:1.

The synthetic route can be selectively modified according to embodiments of the present invention to tune the carbonate or ester content from about 50% to about 100%, from about 80% to about 99%, and from about 90% to about 95%, for example. The wettability of the copolymer can be reduced by increasing the carbonate or ester content. Selectively modifying can include increasing the amount of carbonate or ester in the resulting copolymer, for example. In some cases, a hydrophobic copolymer has a carbonate or ester content of at least about 50%, such as about 80%, about 85%, about 90%, about 91%, about 92%, about 93%, or about 95%. Carbonate contents can be tuned by varying the feeding ratio of monomer to the initiator and polymerization pressure of carbon dioxide.

For example, the carbon dioxide can be charged to the reaction vessel at pressures in the range of about 0.01 bar to about 30 bar. In some embodiments, the carbon dioxide can be charged at pressures in the range of about 1 bar to about 30 bar. In other embodiments, the carbon dioxide is charged at a pressure of about 1 bar, about 2 bar, about 3 bar, about 4 bar, about 5 bar, about 6 bar, about 7 bar, about 8 bar, about 9 bar, about 10 bar, about 11 bar, about 12 bar, about 13 bar, about 14 bar, about 15 bar, about 16 bar, about 17 bar, about 18 bar, about 19 bar, about 20 bar, about 21 bar, about 22 bar, about 23 bar, about 24 bar, about 25 bar, about 26 bar, about 27 bar, about 28 bar, about 29 bar, or about 30 bar, or any value or range thereof. In some cases, the carbon dioxide is charged to the reaction vessel at a pressure of 30 bar.

The synthetic routes can be selectively modified according to embodiments of the present invention to target a specific degree of polymerization (DP).

The volumetric ratio of ethylene oxide monomer to solvent can be varied in the range of about 0.1:1 to about 1:5. For example, in some embodiments, the volumetric ratio of ethylene oxide monomer to solvent is about 0.5:1, about 1:1, and about 1:2. The solvent can be selected from coordinating and apolar solvents. For example, the solvent can be THF, toluene, or hexane. In some cases, the solvent is THF.

In some embodiments, the first ethylene oxide monomer is added to the reaction vessel in stoichiometric quantities with the initiator. For example, the ratio of first ethylene oxide monomer to initiator can be about 100 to about 4000, such as about 100, about 200, about 500, about 1000, about 2000, and about 4000. In some cases, the ratio of first ethylene oxide monomer to initiator is 100.

In one embodiment, the degradable polyether can be a hydrophobic copolymer represented by the following chemical structure: 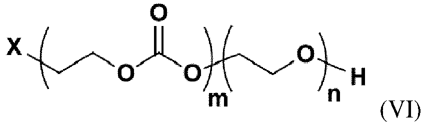 (e.g., PECEO) wherein n < m or n << m; wherein X is selected from Cl, Br, N₃, OH, O-, CH₂=CHCH₂O-, or combinations thereof. Thus, the hydrophobic copolymer is characterized as having relative high carbonate (EC) content as compared with the ethylene oxide (EO) content. The carbonate content can vary from more than 50% to about 99%.

### D. DEGRADABLE BLOCK COPOLYMERS

The present disclosure further relates to degradable block copolymers including di- and tri- block polymers, such as AB and/or ABA block copolymers, where block A is different from block B. The degradable block copolymer can be an amphiphilic copolymer using blocks of different wettability. The block copolymers can include blocks composed of any of the polyether copolymers described above, such as the copolymers according to method 100 and the hydrophobic polyethers above, in any arrangement. For example, in some cases, block A is a hydrophilic block, such as a PEO-based block (e.g., pure poly(ethylene oxide) or ester- or carbonate-containing poly(ethylene oxide)), and block B is a hydrophobic block, such as a CO₂-based polycarbonate block comprising higher carbonate content than the A block (e.g., poly(ethylene carbonate-co-ethylene oxide) (PECEO)) or a cyclic ester- or cyclic anhydride-based polyethylene block comprising higher ester content than the A block. In some cases, the block copolymer has a HLB within a range of about 2-9 or about 11-18. Block B can include a hydrophobic copolymer of ethylene oxide and CO₂ having a carbonate content of at least 60% by weight of the block, such as at least about 70%, at least about 75%, at least about 80%, at least about 85%, at least about 90%, about 90-98% or about 92-95% by weight. In some cases, block B can have a carbonate or ester content that does not exceed 60% by weight of the copolymer (e.g., not more than 50% by weight of the copolymer. Block A can include a hydrophilic copolymer of ethylene oxide and CO₂ having a carbonate content of no more than 50%, such as no more than 25%, no more than 20%, no more than 15%, no more than 12%, no more than 10%, no more than 7%, no more than 5%, or no more than 3% by weight. Thus, both A and B blocks can include degradable carbonate linkages.

Embodiments of the present disclosure include an ABA block copolymer comprising a hydrophilic block A containing a polyethylene backbone and a hydrophobic block B containing a CO₂-based polycarbonate backbone. In some cases, the content of the A block is 20 to 80% by weight of the ABA block copolymer, such as about 30 to about 70%, about 35% to about 75%, about 40% to about 60%. The ABA block copolymer can be characterized by a critical micelle concentration (cmc). For example, an ABA block copolymer of the present disclosure can have a cmc of at least 0.003 g/L, such as at least about 0.005 g/L, or at least about 0.08 g/L at 25 °C. The ABA block copolymer can form micelles with a hydrodynamic radius of at least about 60 Å. For example, the hydrodynamic radius of micelles formed by an ABA block copolymer of the present disclosure can be at least about 70 Å, such as at least about 80 Å, or at least about 150 Å. The micelle diameter can be measured at room temperature, e.g., at 25 °C.

The methods of the present disclosure provide various synthetic routes that are simple, scalable, and modifiable. The synthetic routes for forming the degradable block copolymers may proceed under metal-free conditions. In these embodiments, the initiating system only needs to include an onium salt initiator and a trialkylborane as an activator for the copolymerization to proceed metal-free.

The method can include a first step of contacting a first ethylene oxide monomer (e.g., EO) and carbon dioxide in the presence of a trialkyl borane activator, a solvent, and an initiator to form a first block (e.g., a polycarbonate block), and adding a second ethylene oxide monomer to form a second block (e.g., a polyalkylene oxide block) that is attached to the first block. The block copolymer can be prepared in one-pot through sequential ring-opening polymerization of ethylene oxide, for example. The method can include releasing the carbon dioxide before charging the second ethylene oxide monomer. In some cases, however, the presence of carbon dioxide can provide a second block comprising polyether copolymers with degradable carbonate linkages (e.g., random or gradient copolymers).

The first ethylene oxide monomer may include one or more of ethylene oxide, propylene oxide, 1-butene oxide, 1-hexene oxide, 1-octene oxide, styrene oxide, cyclohexene oxide, allyl glycidyl ether, and butyl glycidyl ether. The second ethylene oxide monomer can be the same as the first, or the first and second ethylene oxide monomers can be different. In some cases, the first ethylene oxide monomer and second ethylene oxide monomer are ethylene oxide.

Contacting and/or adding may refer to bringing two or more components into proximity, such as physical and/or chemical proximity. In many embodiments, contacting may include adding and/or mixing two or more components in a reaction vessel and/or charging a chamber including the reaction vessel with a gaseous component sufficient to bring at least two of the components into physical and/or chemical proximity. In many embodiments, the contacting and adding is generally in the presence of the same activator and initiator. In other embodiments, the contacting and adding may be in the presence of a different activator and/or a different initiator.

The contacting can proceed at temperatures in the range of about 0°C to about 100 °C, or any value or range thereof. Preferably the contacting proceeds at about room temperature, such as temperatures in the range of about 20 °C to about 30 °C. The duration of the contacting should be sufficient to carry out the copolymerization reaction. For example, the duration of the first contacting step can range from about 1 min to about 1000 min (e.g., about 15 hours), or longer in some instances (e.g., up to about 50 hours). The duration of the second contacting step can range from about 1 min to about 300 min (e.g., about 4 hours), or longer in some instances.

In some embodiments, the activator is added to the reaction vessel in stoichiometric quantities with the initiator. The activator can be selected to achieve one or more of the following: selectively activate the ethylene oxide monomer, form an ate complex with the initiator, suppress transesterification reactions, and suppress the formation of cyclic carbonates. The alkyl borane activator is typically provided in stoichiometric excess of the initiator. In one embodiment, a ratio of the alkyl borane to initiator can be about 1:1 to about 5:1. In some embodiments, the ratio of the alkyl borane to initiator is in the range of about 1.2:1, about 1.4:1, about 1.6:1, about 1.8:1, about 2:1, about 2.2:1, or even greater. The activator used in the first step can be an alkyl borane. Non-limiting examples of suitable activators include triethyl borane, triphenyl borane, tributylborane, trimethyl borane, triisobutylborane, and combinations thereof. In certain embodiments, the alkyl borane is triethyl borane. The initiator used in the first step can be a monofunctional or bifunctional initiator, as described above, such as TBACl, TOACl, and PPNCl, or TBAS. For example, to synthesize a polycarbonate first block having a high carbonate content, the activator can be TEB, the initiator can be TBAS, and the ratio of activator to initiator of about 1:1-1.6:1.

The synthetic route for forming the degradable block copolymers can be selectively modified according to embodiments of the present invention to tune the carbonate content of the first block from about 50% to about 100%, from about 60% to about 99%, from about 80% to about 98%, or from about 90% to about 95%, for example. In some cases, the first block has a carbonate content of at least about 50%, such as about 80%, about 85%, about 90%, about 91%, about 92%, about 93%, or about 95%. The wettability of the first block can be reduced, and hydrophobicity increased, by increasing the carbonate content. Selectively modifying can include increasing the amount of carbonate in the resulting copolymer.

Carbonate contents (50-95%) of the first block can be tuned by varying the feeding ratio of monomer to the initiator and pressure of carbon dioxide. For example, in the first step, the carbon dioxide can be charged to the reaction vessel at pressures in the range of about 0.01 bar to about 30 bar. In some embodiments, the carbon dioxide can be charged at pressures in the range of about 1 bar to about 30 bar. In other embodiments, the carbon dioxide is charged at a pressure of about 1 bar, about 2 bar, about 3 bar, about 4 bar, about 5 bar, about 6 bar, about 7 bar, about 8 bar, about 9 bar, about 10 bar, about 11 bar, about 12 bar, about 13 bar, about 14 bar, about 15 bar, about 16 bar, about 17 bar, about 18 bar, about 19 bar, about 20 bar, about 21 bar, about 22 bar, about 23 bar, about 24 bar, about 25 bar, about 26 bar, about 27 bar, about 28 bar, about 29 bar, or about 30 bar, or any value or range thereof. In some cases, the carbon dioxide is charged to the reaction vessel at a pressure of 30 bar.

The synthetic routes for forming the degradable block copolymers can be selectively modified to target a specific degree of polymerization (DP) for a block, or for the block copolymer. For example, the ratio of activator to ethylene oxide monomer can be varied to provide a first block having a DP of 200-4,000, such as about 500.

The volumetric ratio of ethylene oxide monomer to solvent can be varied in the range of about 0.1:1 to about 1:5. For example, in some embodiments, the volumetric ratio of ethylene oxide monomer to solvent is about 0.5:1, about 1:1, and about 1:2. The solvent can be selected from coordinating and apolar solvents. For example, the solvent can be THF, toluene, or hexane. In some cases, the solvent is THF.

In some embodiments, the first ethylene oxide monomer is added to the reaction vessel in stoichiometric quantities with the initiator. For example, the ratio of first ethylene oxide monomer to initiator can be about 100 to about 1000, such as about 100, about 200, about 500, and about 1000. In some cases, the ratio of first ethylene oxide monomer to initiator is within the range of about 100 to about 500.

The first block produced in the first step acts as a macroinitiator of the second step. The ratio of macroinitiator to second ethylene oxide monomer can be varied based on the targeted DP. For example, a degradable block composition having a DP of at least 25, such as about 35-40, or about 75-80, or greater can be targeted using a stochiometric excess of second ethylene oxide monomer to macroinitiator of at least 50, at least 100, at least 125, or at least 150.

In some cases, method includes releasing carbon dioxide and charging the second ethylene oxide monomer to produce a homopolymeric block, such as PEO. For example, embodiments of the present disclosure include an amphiphilc block copolymer (e.g., P(EO-ECEO-EO)) represented by chemical structure (VII): 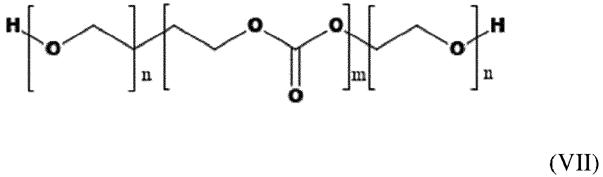 wherein m < n or m << n. The weight fraction for the PEO can vary, thereby conferring differing surfactant properties to the copolymer. The wettability of the degradable block copolymer can be tuned by manipulating the PEO content. The PEO content of the block copolymer can be at least 40% by weight, at least 50% by weight, at least 60% by weight or greater. An amphiphilic block copolymer of the disclosure can have a hydrophilic character (i.e., HLB>10), or a hydrophobic (lipophilic character (i.e., HLB<10). Blends of amphiphilic copolymers having different HLB values can be used to enhance dispersion or dirt and/or oil removal in aqueous systems. Critical micelle concentration (CMC) can also be used to characterize the surfactant efficiency of the amphiphilic copolymers of the present disclosure.

The following Examples are intended to illustrate the above invention and should not be construed as to narrow its scope. One skilled in the art will readily recognize that the Examiners suggest many other ways in which the invention could be practice. Numerous variations and modifications may be made while remaining within the scope of the invention.

### EXAMPLE 1

### Degradable Poly(Ethylene Oxide) Through Anionic Copolymerization of Ethylene Oxide With L-Lactide

The following Example describes a simple and convenient method for the preparation of degradable poly(ethylene oxide) (PEO). Through anionic copolymerization of ethylene oxide and L-Lactide (LLA), a very low content of LLA was randomly incorporated into the backbone of PEO in the presence of triethylborane. With the help of the latter Lewis acid, the reactivity of LLA was curtailed, and transesterification reactions were suppressed. The copolymerization of EO with LLA resulted in P(EO-co-LLA) samples with low to moderate content in ester units, controlled molar mass, and narrow polydispersity. Reactivity ratios were determined using Kelen-Tüdos and Meyer-Lowry terminal model methods. The resulting copolymers were further studied by differential scanning calorimetry (DSC); hydrolysis experiments were carried out to show the degradability of these PEO samples.

The objective of the work presented in this Example was to incorporate a low to very low percentage of LLA units within PEO chains by anionic copolymerization of EO with LLA, in order to impart degradability to these PEO chains without modifying their intrinsic properties of hydrophilicity, crystallinity, etc. The role of triethylborane in the anionic copolymerization of EO with LLA was particularly studied. Unlike the coordinative catalytic pathway that affords LLA-EO copolymers of broad molar mass distribution and generally ill-defined, the boron-activated anionic copolymerization of EO and LLA produced well-defined P(EO-co-LLA) samples exhibiting narrow polydispersity and a tunable content of EO and LLA units (see scheme below). The scheme presented below illustrates a reaction scheme of an anionic ring-opening polymerization of ethylene oxide and L-lactide using triethylborane as activator:

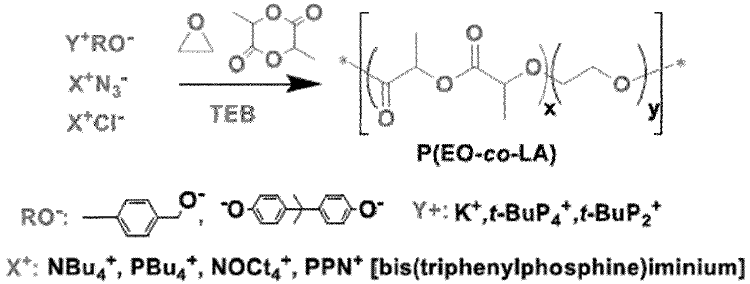

### EXPERIMENTAL SECTION

### General Methods

All reactions were carried out under a dry and oxygen-free argon atmosphere in a Braun Labmaster glovebox. Ethylene oxide (EO), L-Lactide (LLA), diethylene glycol monomethyl ether, p-methyl benzyl alcohol (PMBA), bisphenol A (BPA), t-BuP4, t-BuP2, tetra butyl ammonium chloride (TBACl), Bis(triphenylphosphine)iminium chloride (PPNCl), tetra octyl ammonium chloride (TOACl), tetra butyl phosphonium chloride (TBPCl), tetra butyl ammonium azide (TBAA), Allyl alcohol (Allyl A) were purchased from Aldrich. Tetrahydrofuran (THF) and toluene (Tol) were distilled over sodium/benzophenone mixture before used. 1,4-dioxane was distilled over CaH2 after stirring for two days. Ethylene oxide was purified by stirring over CaH2 for one day and distilled into a flask containing n-BuLi. It was then stirred for a couple of hours, which was followed by further distillation. LLA was purified by two times recrystallization from ethyl acetate followed by lyophilization from dry dioxane. Diethylene glycol monomethyl ether was purified by azeotropic distillation from toluene. PMBA and BPA were lyophilized from dioxane. All ¹H and ¹³C NMR spectra were recorded on a Bruker AVANCE III-400 Hz instrument in CDCl3. GPC traces were recorded by VISCOTEK VE2001 equipped with Styragel HR2 THF (1 mL/min) as eluent. Narrow Mw polystyrene standards were used to calibrate the instrument. DSC measurements were performed with a Mettler Toledo DSC1/TC100 under air. The samples were first heated from RT to 200 °C in order to erase the thermal history, then cooled to -100 °C, and finally heated again to 200°C at a heating/cooling rate of 10 °C min⁻¹. This cycle was repeated until constant melting and cooling temperatures (Tₘ and T_{c}) were recorded.

Representative procedure for the synthesis of P(EO-co-LLA) using tetrabutylammonium chloride (TBACl) as initiator: A pre-dried 30 mL glass Schlenk tube tube (80 mm × 28 mm) composed of rotaflo stopcocks and equipped with a magnetic stirring bar was used to carry out this reaction. Under argon atmosphere, about 86 µL of triethylborane (about 0.086 mmol) was first added to a solution of TBACl (about 4.8 mg, about 0.017 mmol) in toluene (about 0.5 mL) in the glass Schlenk tube. The premixed solution of LLA (about 100 mg, about 0.69 mmol) and ethylene oxide (about 150 mg, about 3.47 mmol) in about 1 mL of toluene were then added into initiator-borane system. The polymerization was carried out at about room temperature (about 25 °C) for about 4 hours under stirring. Then the reaction was quenched with a few drops of 5 % HCl in methanol and the polymer was precipitated in cold diethyl ether. The obtained polymer after filtration was dried in vacuum oven and characterized by GPC and NMR.

Representative procedure for the synthesis of P(EO-co-LLA) using t-BuP4 initiator: A pre-dried 30 mL glass Schlenk tube (80 mm × 28 mm) composed of rotaflo stopcocks and equipped with a magnetic stirring bar was used to carry out this reaction. Under argon atmosphere, to a solution of PMBA (about 4.3 mg, about 0.035 mmol) in toluene (about 0.5 mL), t-BuP4 solution (about 35 µL, about 0.035 mmol) was charged into reaction flask, and stirred for a few minutes under about room temperature. Then, triethylborane (about 176 µL, about 0.176 mmol) and the premixed monomer solution of LLA (about 75 mg, about 0.520 mmol) and ethylene oxide (about 152 mg, about 3.47 mmol) in toluene (about 1 mL) were sequentially added into the initiator-borane system and the polymerization was carried out at about room temperature for about 1 hour under stirring. The reaction was quenched with a few drops of 5 % HCl in methanol and precipitated in cold diethyl ether. The polymer obtained after filtration was dried in vacuum oven and characterized by GPC and NMR.

### RESULTS AND DISCUSSION

### Copolymerization of Ethylene Oxide and L-Lactide

Since EO and LLA exhibit very different reactivity and since the monomer unit corresponding to LLA is prone to transesterification reactions under anionic conditions, EO and LLA cannot be copolymerized using even a mild base as initiator. It takes, for instance, about 3 days to complete the polymerization of EO in the presence of an alcohol and a mild base, such as t-BuP₂, whereas only about 1 minute is necessary to achieve the full conversion of LLA under the same conditions. This has been the primary reason for using coordinative chemistry to copolymerize these two monomers.

Catalytic processes which imply a necessary coordination step of the monomer have advantages, such as the production of long chains, but they also have drawbacks, such as chains that are not necessarily well-defined and have broad molar mass distributions. In this Example, a novel approach for the copolymerization of EO with LLA is proposed. The novel approach is based not on purely anionic species, but on an ate complex involving a Lewis acid, namely triethylborane, and a base, which is typically an alkoxide. Ate complexes were used for the successful copolymerization of epoxides and CO₂ without the formation of cyclic carbonates, which are generally obtained by purely ionic species. Likewise, boron-based ate complexes were found very efficient for initiating and bringing about a controlled polymerization of glycidyl azide, an epoxide monomer that could never be polymerized before. In each of the two above examples in addition to the boron-based ate complex, free trialkylboron had to be added to activate the monomer for the polymer to occur as the growing ate complex was generally not nucleophilic enough. 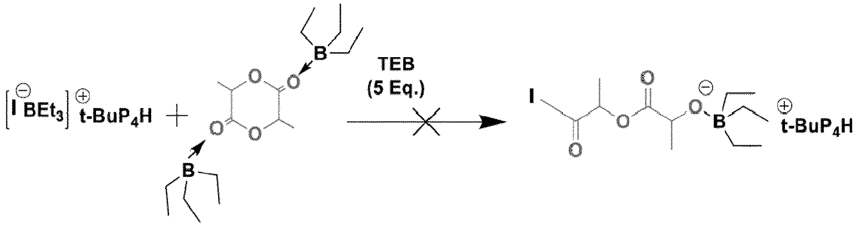 It first attempt was tried to homopolymerize EO and LLA using PMBA/t-BuP4 as the initiator system and TEB as the Lewis acid to form the ate complex responsible for the polymerization. Both homopolymerizations were carried out in the presence of an excess of 5 eq. TEB to activate the monomer. In the case of EO, the homopolymerizations occurred as expected affording samples with the expected molecular weights either in THF or toluene: clearly the presence of free TEB was essential to trigger the polymerization (Entry 1 and 2,

Table 1). In contrast, hardly any homopolymerization was observed in the case of LLA (see scheme immediately above), in spite of the presence of 5 eq. of excess of TEB (conversion below 1%) and the addition of further excess of TEB did not help to increase the conversion of LLA (Entry 3 and 4, Table 1).

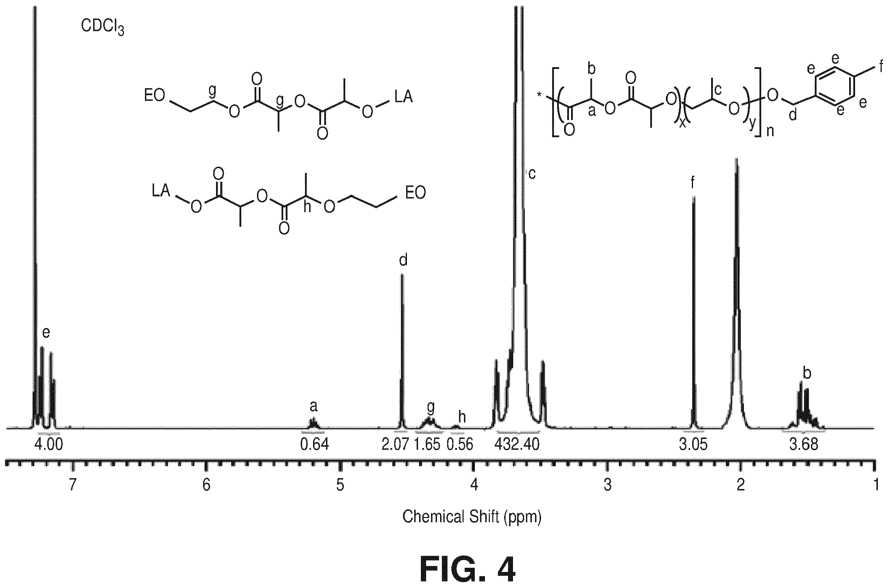

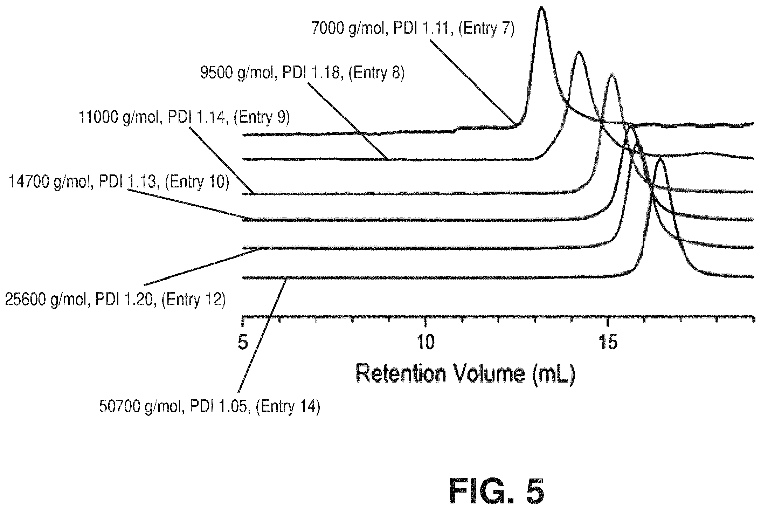

Interestingly, a monomer like LLA, which homopolymerizes very fast when subjected to purely ionic species, stayed "put" in this case and failed to ring-open in the presence of boron-based ate complexes. The copolymerization of LLA with EO in the presence of 5 eq. of TEB was then investigated. About 15-20 mol % of LLA were fed to the reaction medium to see whether a low content of ester could be incorporated into the PEO backbone. In all the following experiments, toluene, an apolar solvent, was used in the copolymerizations of EO with LLA. After polymerization, the reaction mixture was poured in cold ether to collect all the produced polymer and characterized by GPC and NMR. A representative ¹H NMR spectrum is shown in **FIG. 4****.** The characteristic peaks of LLA and of EO units were clearly detected at 5.2 and 1.5 ppm (peaks a, b) and at 3.5 ppm (peak c) indicating the incorporation of the ester units. The peaks g and h at 4.3 ppm and 4.10 ppm, respectively, corresponded to the methylene protons of EO and methine protons of LLA connected between EO and LLA units -CH₂C***H***₂OOCC***H***(CH₃)OOCCH(CH₃)O-, and to the methine protons of LLA units connected between LLA and EO units - OCCH(CH₃)OOCC***H***(CH₃)OCH₂CH2O-, which is shown in **FIG. 4****.** The presence of characteristic and connection peaks of two PEO and PLLA units indicated the formation of a random copolymer. The integral ratio of peak g to h was close to 3, indicating negligible transesterifications of LLA. Based on the NMR data, the content of LLA units could then be calculated and the molar mass of the obtained copolymer estimated using the peaks of initiator p-methylbenzene alcohol (d, e, f at 4.5, 7.1, 2.3 ppm) as reference (please refer to related data listed in Table 1). The average segment length of PLLA was determined to be equal to about 1.57 by the equation LLLA = (SI_{5.21 ppm} + 2SI_{4.10 ppm})/2SI_{4.10 ppm}, where SI is the integral intensity of the respective peaks. This meant that, on average, less than 2 units of LLA were found adjacent along the polymer backbone, confirming the very low value of the reactivity ratio of LLA, r_{LLA}. Following the same procedure, the polymerization was initiated by the system PMBA /t-BuP4 in the presence of TEB and different molar masses were targeted (Entry 6-12, Table 1). Values of molar mass obtained from NMR for the various samples were close to the theoretical ones; a molar mass as high as 24 kg/mol was reached and ester contents in all cases were kept around 5%. Upon changing the feeding ratio of LLA to EO, the content in ester in the obtained copolymer varied (entry 11, Table 1). Analysis by GPC of the copolymer samples obtained shows unimodal traces with a narrow distribution of molar masses **(****FIG. 5****);** the latter being close to the theoretical values and to ones generated from NMR calculations. It was thus demonstrated that, under these conditions, EO and LLA copolymerized in a "living" manner and transesterification was totally suppressed.

It is believed that this is not only the first successful attempt at copolymerizing monomers as different as EO and LLA under "living" conditions, but it also proves that very small amounts of ester linkages can be incorporated in polyether chains, a feat never before achieved. When carried out in THF (entry 5, Table **1),** a slightly polar solvent, a loss of control of the molar mass of copolymer sample was observed, indicating the occurrence of transesterification reaction and thus very likely of back-biting reactions.

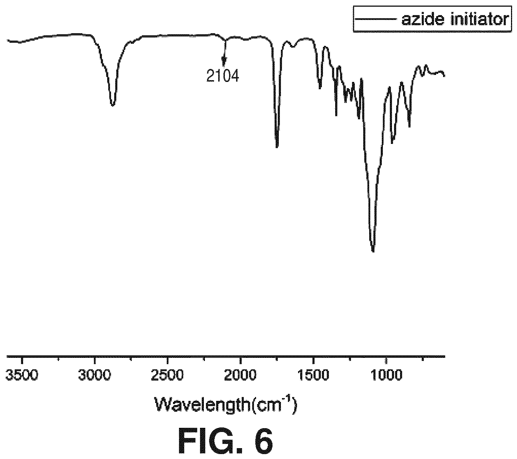

Apart from polymerizations initiated by the system PMBA/tBuP4, other organic initiators ammonium and phosphonium halides, like TBACl and TBPCl, were also utilized in the presence of TEB for the copolymerizations. Similar results were obtained, but the ester contents within the isolated copolymer tended to be slightly higher than for the copolymers generated from the alkoxide/tBuP4 system (entry 15, 19 and 20, Table 1). This may have been due to the difference of reactivity between EO and LLA in the presence of the various cations associated with alkoxides (vide infra). Using various initiators, difunctional and hetero-difunctional copolymers were also prepared. For instance, upon choosing bisphenol A as initiator, two hydroxyl-ended PEO were obtained including about 3% ester content (entry 13 of Table **1);** if starting from allyl alcohol and tetrabutyl azide as initiators (entry 21, 22, Table **1),** copolymer samples carrying vinyl and azide end groups were generated **(****FIG. 6****),** which are interesting and powerful functional groups for biological conjugation and application.

**Table 1. Random copolymelization results of EO with LLA with different initiating systems,**

| **Entry No.** | EO/LLA/I/TEB | Initiator | Time (min) | Solvent | Yield (%) | Ester^{d} (%) | Mₙ₍ₜₕₑₒ₎^{c} | M_{n(NMR)}^{d} | M_{n(GPC)}^{e} | PDI |
|---|---|---|---|---|---|---|---|---|---|---|
| **1** | 600/0/1/5 | PMBA/P₄ | 10 | THF | 54 | 0 | 13800 | 15100 | 13100 | 1.28 |
| **2** | 500/0/1/5 | PMBA/P₄ | 30 | Tol | 95 | 0 | 19400 | 24000 | 21000 | 1.20 |
| **3** | 0/100/1/5 | PMBA/P₄ | 960 | THF | 0 | 0 | - | - | - | - |
| **4** | 0/100/1/5 | PMBA/P₄ | 960 | Tol | 0 | 0 | - | - | - | - |
| **5^{a}** | 260/40/1/5 | MDEG/P₄ | 180 | THF | 40 | 7 | 9200 | 15100 | 5900 | 1.17 |
| **6** | 50/7/1/5 | PMBA/P₄ | 15 | Tol | 53 | 1 | 1700 | 2700 | 5200 | 1.19 |
| **7** | 100/15/1/5 | PMBA/P₄ | 45 | Tol | 65 | 1 | 4100 | 4700 | 7000 | 1.11 |
| **8** | 150/25/1/5 | PMBA/P₄ | 75 | Tol | 63 | 2 | 6400 | 6600 | 9500 | 1.18 |
| **9** | 200/30/1/5 | PMBA/P₄ | 120 | Tol | 70 | 3 | 9800 | 10000 | 11000 | 1.14 |
| **10** | 300/45/1/5 | PMBA/P₄ | 150 | Tol | 53 | 2 | 10500 | 10800 | 14200 | 1.13 |
| **11** | 300/60/1/5 | PMBA/P₄ | 360 | Tol | 66 | 7 | 13500 | 11600 | 10900 | 1.11 |
| **12** | 500/70/1/5 | PMBA/P₄ | 180 | Tol | 62 | 3 | 20000 | 23500 | 24000 | 1.20 |
| **13^{b}** | 500/70/1/5 | BPA/P₄ | 180 | Tol | 68 | 3 | 21200 | 20100 | 22000 | 1.26 |
| **14** | 100/15/1/5 | PMBA/P₂ | 120 | Tol | 64 | 5 | 4200 | 5700 | 11000 | 1.17 |
| **15** | 200/40/1/5 | TBACl | 240 | Tol | 48 | 11 | 7000 | - | 9800 | 1.19 |
| **16** | 200/40/1/5 | TBACl | 120 | Tol | 25 | 7 | 3500 | - | 6900 | 1.20 |
| **17** | 300/60/1/5 | PPNCl | 180 | Tol | 38 | 5 | 8100 | - | 9700 | 1.19 |
| **18** | 300/60/1/5 | TOACl | 420 | Tol | 37 | 9 | 7600 | - | 11800 | 1.11 |
| **19** | 300/60/1/5 | TBPCl | 420 | Tol | 52 | 16 | 10200 | - | 11400 | 1.18 |
| **20** | 300/60/1/5 | TBPCl | 210 | Tol | 20 | 9 | 3800 | - | 6800 | 1.17 |
| **21** | 300/60/1/5 | TBAA | 300 | Tol | 39 | 11 | 8800 | - | 9500 | 1.12 |
| **22** | 200/40/1/5 | Allyl A/P₄ | 150 | Tol | 67 | 3 | 9000 | 7800 | 14800 | 1.13 |

| | | | | | | | | | | |
|---|---|---|---|---|---|---|---|---|---|---|
| p-methyl benzyl alcohol (PMBA) was used with P₄ and P₂ otherwise noted, P₄ = t-BuP₄, P₂ = t-BuP₂, ^{a} diethylene glycol monomethyl ether as alcohol ^{b}Bisphenol A is used as alcohol ^{c}Mₙ₍ₜₕₑₒ₎= (mₚ/N_{I}), mₚ, = Total weight of polymer recovered, N_{I} = mole of initiator. ^{d} Ester content and M_{n(NMR)} calculated based on ¹H NMR ^{e} GPC determined with THF as eluent and calibrated by polystyrene standards. | | | | | | | | | | |

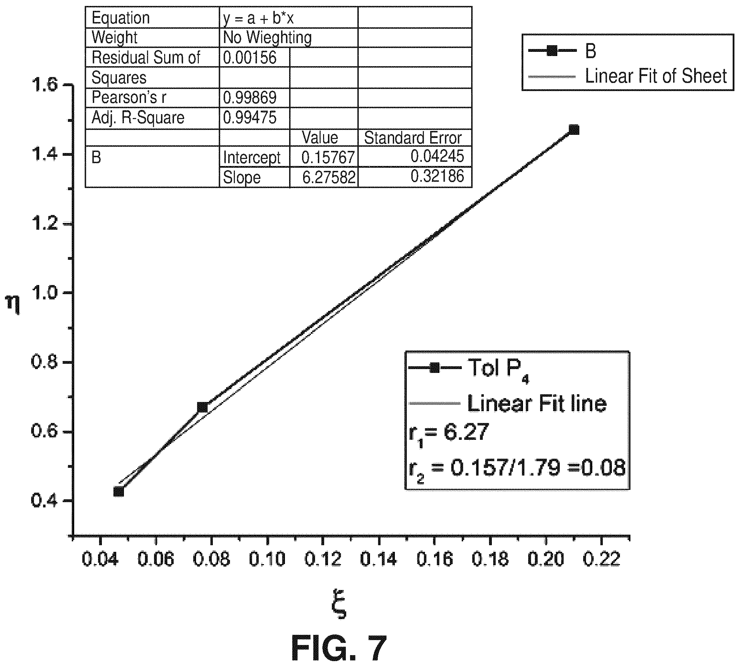

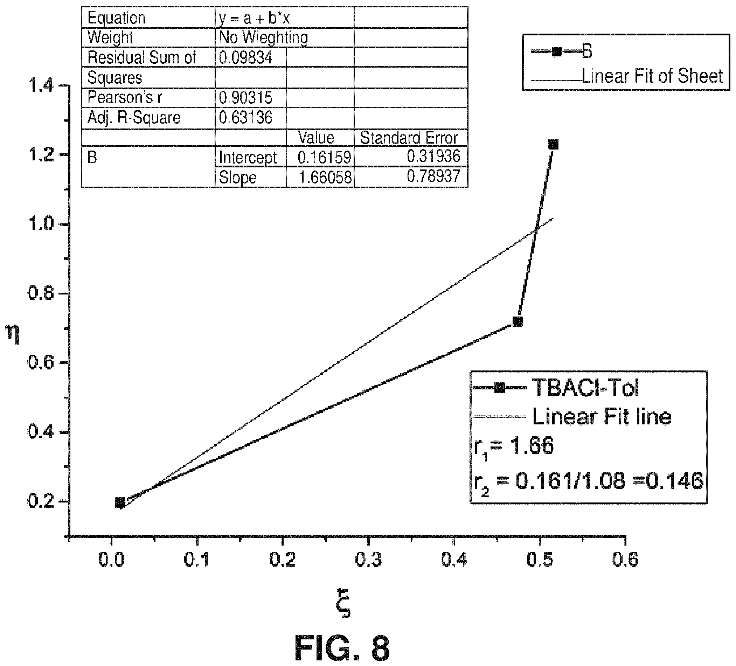

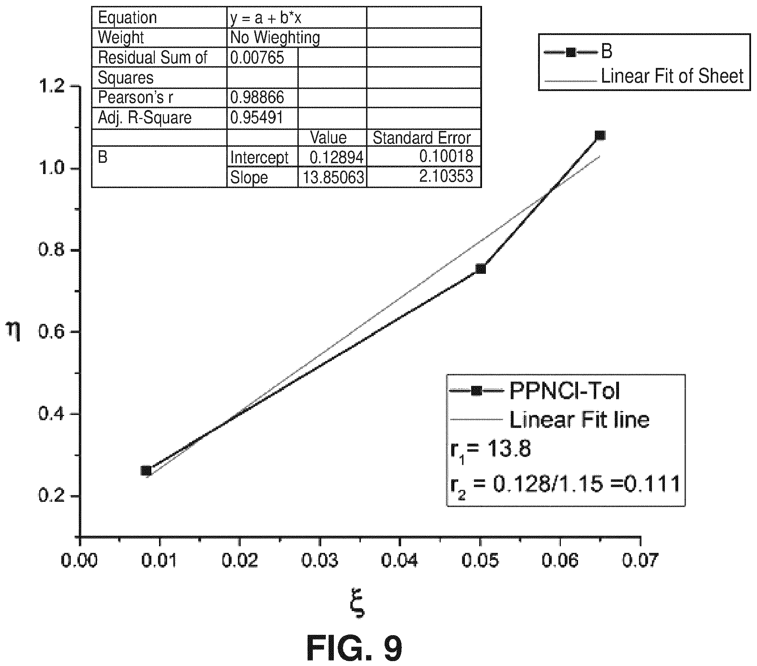

To identify the nature of the copolymer formed, kinetic data were collected and monomer conversions were measured under the same initial feeding ratio, using PMBA/tBuP4, TBACl, and PPNCl as initiators. The related polymerization data are listed in Table 2. With increasing polymerization time, the ester content gradually increased, though at a much lower rate than the ether content, indicating that EO was consumed much faster. The reactivity ratio r_{EO} and r_{LLA} were calculated and the tendency of self-propagation or incorporation of the other monomer was determined by terminating the polymerization at different intervals and analyzing the composition of the corresponding copolymer. Various methods of determination of reactivity ratios were available including Mayo-Lewis, Fineman-Ross, and Kelen-Tüdos, etc. In this Example, the reactivity ratios were calculated using Kelen-Tüdos method. In the case of tBuP4/alkoxide system, the reactivity ratio for EO rEO was 6.27 and for LLA rLA was 0.08. While with TBACl as initiator a value of 1.67 was found for rEO and of 0.15 for rLLA (see **FIGS. 7-9****).** With the decrease of cation size associated with alkoxide, the reactivity of EO decreased, under a same feeding ratio, and therefore more ester units were incorporated. However, in both cases, the reactivities of EO were much higher than those of LLA, which resulted in a low content of LLA units in the obtained copolymer P(EO-co-LLA) and in very short ester segments.

**Table 2. Copolymerization results of EO with LLA with different conversion**

| Entry No. | EO/LLA/I/TEB | Initiator | Time (min) | Solvent | Yield (%) | Ester^{b} (%) | Mₙ₍ₜₕₑₒ₎^{a} | M_{n(NMR)}^{b} | M_{n(GPC)}^{c} | PDI |
|---|---|---|---|---|---|---|---|---|---|---|
| **1** | 300/60/1/5 | P₄ | 120 | Tol | 22 | 3 | 5200 | 7700 | 9000 | 1.18 |
| **2** | 300/60/1/5 | P₄ | 360 | Tol | 60 | 7 | 13500 | 11600 | 10900 | 1.11 |
| **3** | 300/60/1/5 | P₄ | 1080 | Tol | 74 | 10 | 16700 | 11400 | 12500 | 1.11 |
| **4** | 200/40/1/5 | TBACl | 240 | Tol | 48 | 11 | 7000 | - | 9800 | 1.19 |
| **5** | 200/40/1/5 | TBACl | 480 | Tol | 71 | 12 | 10300 | - | 11500 | 1.18 |
| **6** | 200/40/1/5 | TBACl | 840 | Tol | 91 | 14 | 13000 | - | 13100 | 1.17 |
| **7** | 200/40/1/5 | PPNCl | 180 | Tol | 52 | 4 | 7500 | - | 9100 | 1.19 |
| **8** | 200/40/1/5 | PPNCl | 300 | Tol | 62 | 6 | 9000 | - | 11000 | 1.17 |
| **9** | 200/40/1/5 | PPNCl | 450 | Tol | 74 | 8 | 10500 | - | 12200 | 1.16 |

| | | | | | | | | | | |
|---|---|---|---|---|---|---|---|---|---|---|
| PMBA was used with P₄ otherwise noted, P₄ = t-BuP₄. = (mₚ/N_{I}), mₚ = Total weight of polymer recovered. N_{I} = mole of initiator. ^{b} Ester content and M_{n(NMR)} calculated based on ¹H NMR. ^{c} GPC determined with THF as eluent and calibrated by polystyrene standards. | | | | | | | | | | |

Since Kelen-Tüdos method worked best for "instantaneous" composition and rather low conversions, the non-terminal model of chain copolymerization was used (BSL) for the determination of the reactivity ratios rEO and rLLA of the two monomers. This model assumes that the reactivity of the propagating species only depends on the reactivity of the incoming monomer, and ignores the nature of the last monomer featuring the active species; it is applicable up to full conversion. The reactivity ratios were calculated based on the data shown in Table 3 and it was found to be about equal to: r_{LLA} = 0.17±0.04, r_{EO} = 5.37± 0.4 for P₄⁺ as counter cation, r_{LLA} = 0.49±0.08, r_{EO} = 2.07± 0.25 for TBA⁺ and r_{LLA} = 0.14±0.01, r_{EO} = 6.61± 0.67 for PPN⁺. In the three cases investigated with three different cations (P₄⁺, TBA⁺, PPN⁺) the product of reactivity ratios r_{EO} × r_{LLA} is very close to one, confirming the character by ¹H NMR which indicated the formation of gradient copolymers. The terminal model of ML for the determination of the reactivity ratios, r_{EO} and r_{LLA} was also tried. Assuming that the copolymers formed are of gradient nature with no tendency to blockiness or alternation. We derived a simple relation of reactivity ratios as function of the conversion upon starting from generic, conversion dependent version of the copolymer equation of Meyer and Lowry.

| Table 3. Reactivity ratios calculated using different methods | | | | | | | |
|---|---|---|---|---|---|---|---|
| **No.** | initiator | Kelen Tüdos | | BSL Model | | ML Model | |
| | | r_{EO} | r_{LLA} | r_{EO} | r_{LLA} | r_{EO} | r_{LLA} |
| 1 | PMBA/P₄ | 6.27 | 0.08 | 5.37 ± 0.40 | 0.17 ± 0.04 | 5.15 ± 0.56 | 0.19 ± 0.02 |
| 2 | TBACl | 1.67 | 0.15 | 2.07 ± 0.25 | 0.49 ± 0.08 | 2.03 ± 0.27 | 0.50 ± 0.07 |
| 3 | PPNCl | 13.80 | 0.11 | 6.61 ± 0.67 | 0.14 ± 0.01 | 6.49 ± 0.46 | 0.15 ± 0.01 |
| | | | | | | | |

| | | | | | | | |
|---|---|---|---|---|---|---|---|
| The terminal model of ML thus affords for the copolymerization of EO with LLA in the presence of TEB the following values of reactivity ratios: r_{LLA} = 0.19±0.02, r_{EO} = 5.15±0.56 for P₄⁺, r_{LLA} = 0.50±0.07, r_{EO} = 2.03±0.27 for TBA⁺ and r_{LLA} = 0.15±0.01, r_{EO} = 6.49±0.46 for PPN⁺ (Table 3). | | | | | | | |

As one of the aims of this investigation was to control as precisely as possible the incorporation of ester units in the PEO chains and if possible to a limited percentage (-5%), the thermal properties of the copolymer samples obtained were checked by DSC. The melting transitions of PEO were all detected, and compared to those of pure PEO; the melting temperature (Tm) of the copolymers obtained gradually decreased with more incorporation of ester units into the PEO backbone. With the incorporation of about 3 % ester, Tm reduced to about 52.3 °C from about 58.9 °C. On a further increment of ester linkages to about 7%, Tm decreased further to about 38.5 °C and then to about 28.6 °C on about 14% incorporation of ester units (**FIG**. **10**). Especially, in the latter case due to more ester units incorporated, a pronounced cold crystallization transition at about -17.6 °C was detected. However, no melting transition of PLLA was detected, even for the sample containing about 14% of ester, indicating the incorporation of very short PLLA segments along the PEO backbone. As a comparison, a melting temperature (Tm) due to PLLA was clearly detected in the case of Gross' multiblock P(EO-co-LLA) copolymers which contained about 17% of ester units.

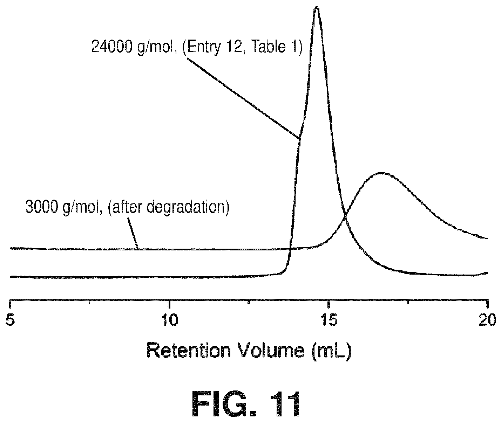

Lastly the degradation of P(EO-co-LLA) was performed to check the average length of PEO segments. The copolymer was dissolved in about 0.5 M NaOH solution in 40:60 methanol: water, and stirred for about two days to hydrolyze the ester linkages. The polymer recovered after such treatment was characterized by ¹H NMR, which indicated the complete degradation and disappearance of ester linkages. The molar mass of PEO after degradation was analyzed by GPC. As shown in **FIG. 11****,** the copolymer sample exhibiting an initial molar mass of about 24 Kg/mol was reduced to about 3 Kg/mol.

In summary, through anionic ring opening copolymerization of EO and LLA, degradable poly(ethylene oxide)s were directly prepared in a controlled way with a narrow polydispersity and a well-defined structure. The presence of TEB selectively increased the reactivity of EO, and suppressed transesterification reactions. The method is general and can be applied not only to synthesize functionalized linear PEOs, but also branched PEOs with high molar mass without concern of the degradability issue. In addition, a metal-free synthesis gives more credit to this approach for biomedical applications.

### EXAMPLE 2

### Degradable Poly(Ethylene Oxide) Through Anionic Copolymerization of Ethylene Oxide with Lactide or Carbon Dioxide

The scheme shown below illustrates a direct way of forming degradable PEG through anionic copolymerization of EO and lactide or carbon dioxide in the presence of trialkylborane. As described in this Example, the random incorporation of a very low content (around 5%) of lactide and carbon dioxide resulted in the formation of ester or carbonate linkages within the backbone of PEG chain, which imparted the obtained PEG with degradable properties; in addition, the copolymer obtained still maintained its hydrophilicity and well-defined structure. Heterobifunctional end-capped degradable PEG cam thus be prepared or derivatized to conjugate molecules for biological applications.

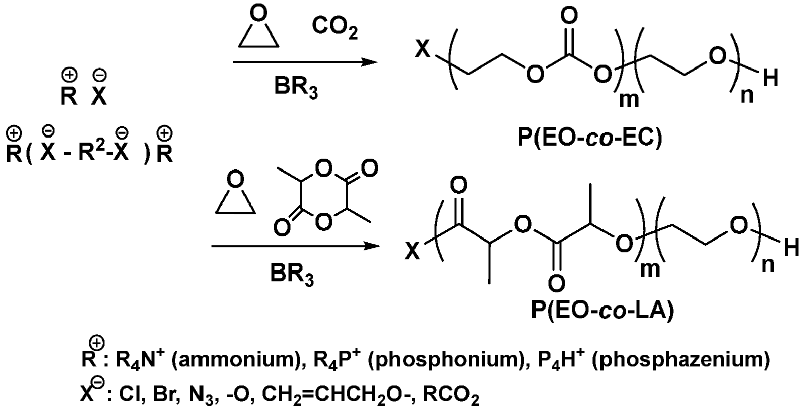

### Methods

*Representative procedure for synthesis of poly(ethylene oxide)-co-(L-Lactide) using tetrabutylammonium chloride (TBACl) as initiator:* A pre-dried 30 mL glass schlenk tube (80 mm x 28 mm) composed of rotaflo stopcocks and fitted with magnetic stirring bar was used to carry out this reaction. Under argon atmosphere, 86 µL of triethyl borane (0.086 mmol) was first added to a solution of TBACl (4.8 mg, 17 µmol) in toluene (0.5 mL) in the glass schlenk tube. The premixed solution of L-Lactide (100 mg, 0.69 mmol) and ethylene oxide (150 mg, 3.47 mmol) in 1 mL of toluene were then added into initiator-borane system. The polymerization was carried out at room temperature for 4 hours under stirring. Then the reaction was quenched with few drops of 5 % HCl in methanol and the solution of polymer was precipitated in cold diethyl ether. The obtained polymer after filtration was dried in a vacuum oven and characterized by GPC and NMR.

*Representative procedure for synthesis of poly(ethylene oxide)-co- (L-Lactide) using P4 as initiator:* A pre-dried 30 mL glass schlenk tube (80 mm x 28 mm) composed of rotaflo stopcocks and fitted with magnetic stirring bar was used to carry out this reaction. Under argon atmosphere, to a solution of p-methyl benzyl alcohol (4.3 mg, 35 µmol) in toluene (0.5 mL), t-BuP4 solution (44 µL, 0.044 mmol) was charged into reaction flask, and stirred for a few minutes under RT. Then, triethyl borane (176 µL, 0.176 mmol) and the premixed monomer solution of L-Lactide (75 mg, 0.520 mmol) and ethylene oxide (152 mg, 3.47 mmol) in Toluene (1 mL) were sequentially added into the initiator-borane system and the polymerization was carried out at room temperature for 1 hour under stirring. The reaction was quenched with a few drops of 5 % HCl in methanol and precipitated in cold diethyl ether. The polymer obtained after filtration was dried in vacuum oven and characterized by GPC and NMR.

*Representative procedure for synthesis of poly(ethylene oxide)-co-(ethylene carbonate) using tetrabutyl ammonium chloride (TBACl) as initiator:* A pre-dried 30 mL glass schlenk tube (80 mm x 28 mm) composed of rotaflo stopcocks, septum and fitted with magnetic stirring bar was used to carry out this reaction. 27.8 mg of TBACl (100 µmol) was first charged under atmosphere of dried carbon dioxide, then dissolved in 2 mL of THF. Triethyl borane in THF (150 µL, 0.15 mmol) and EO (1 mL, 20 mmol) were injected sequentially into the tube. The polymerization was carried out under 1 bar of carbon dioxide at room temperature for 12 hours. The reaction was quenched with a few drops of 5 % HCl in methanol and precipitated in cold diethyl ether. The polymer obtained after filtration was dried in vacuum oven and characterized by GPC and NMR.

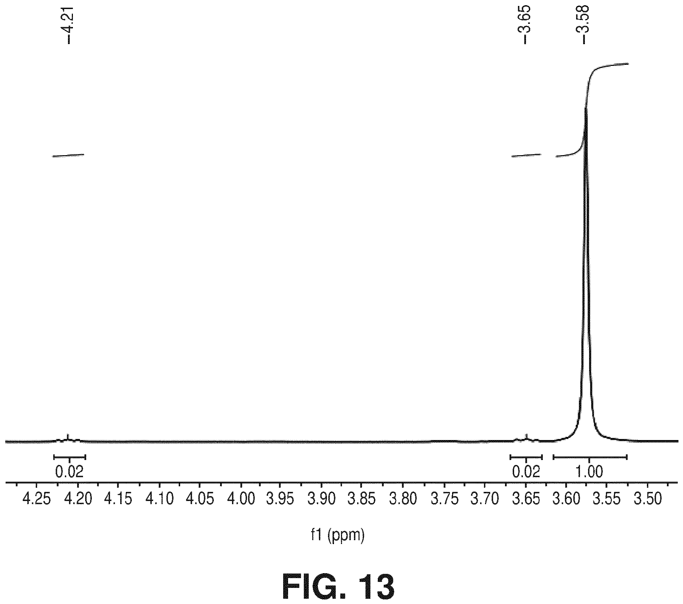

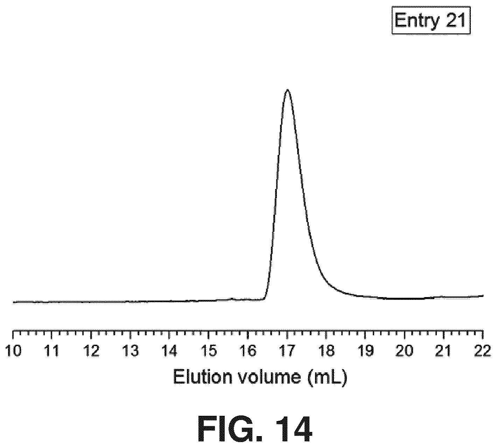

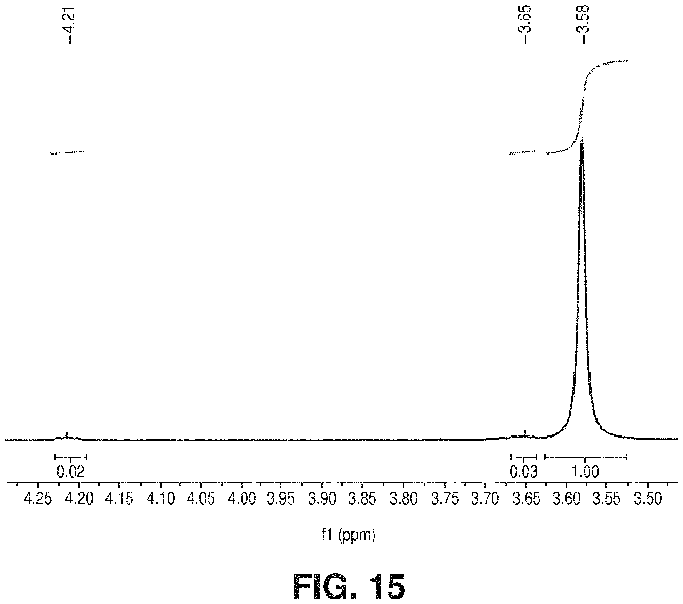

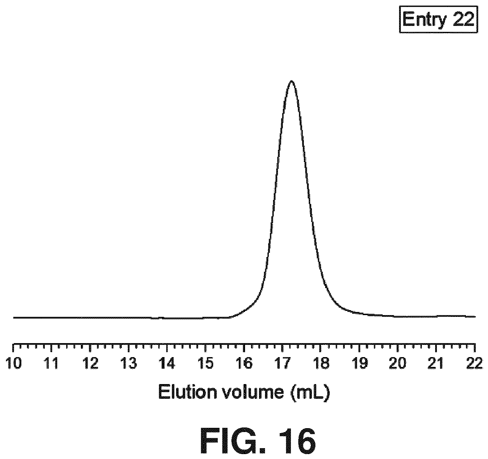

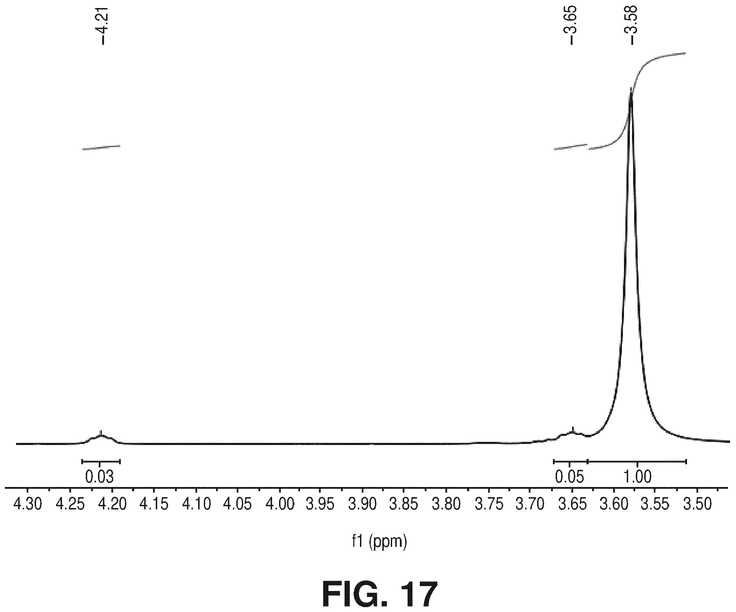

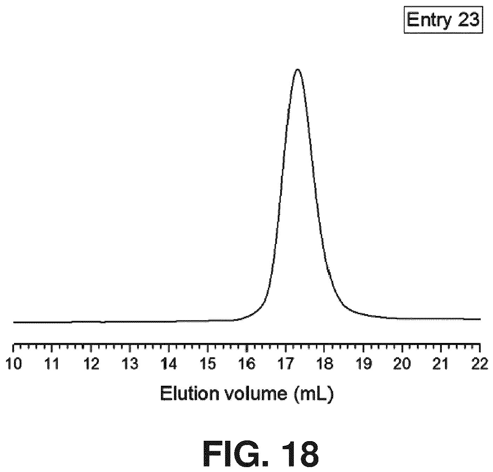

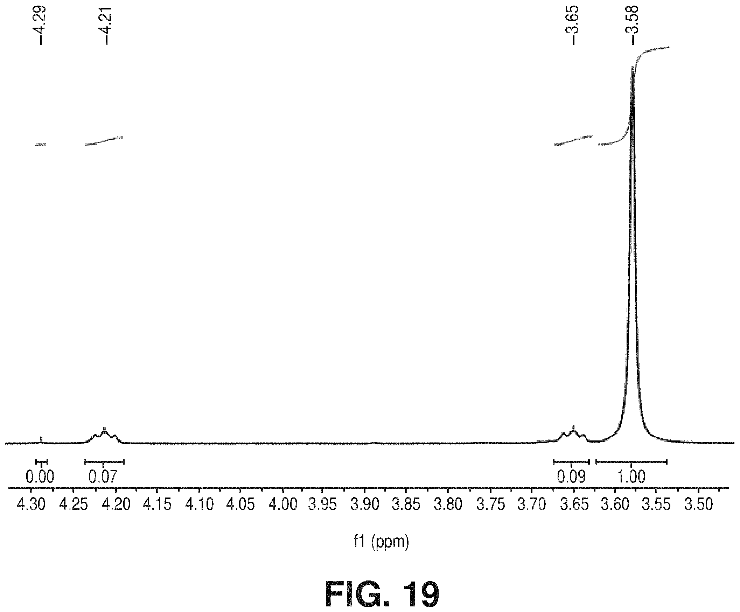

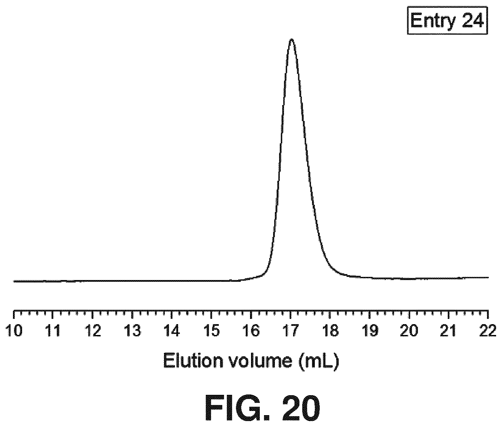

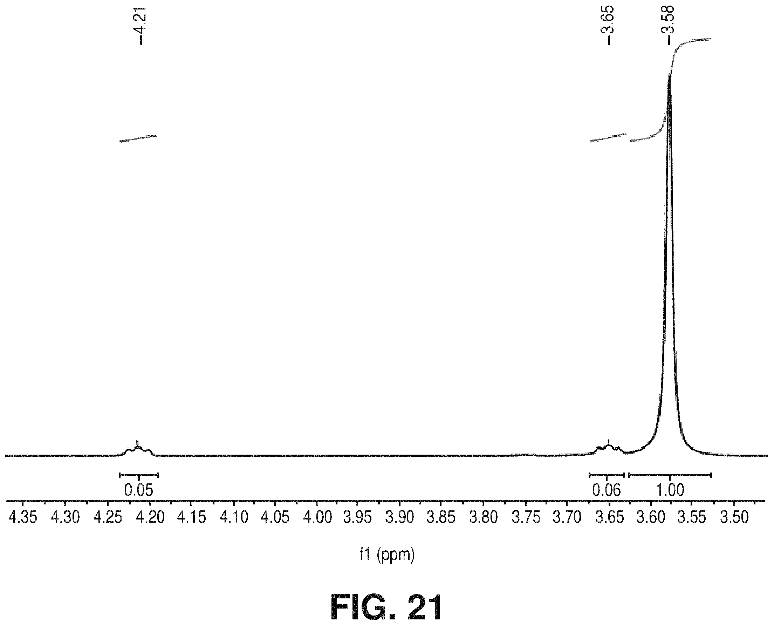

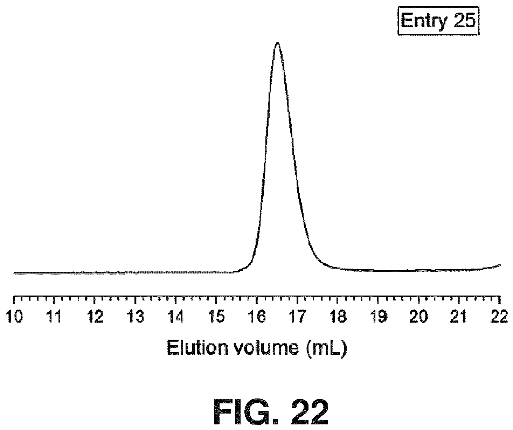

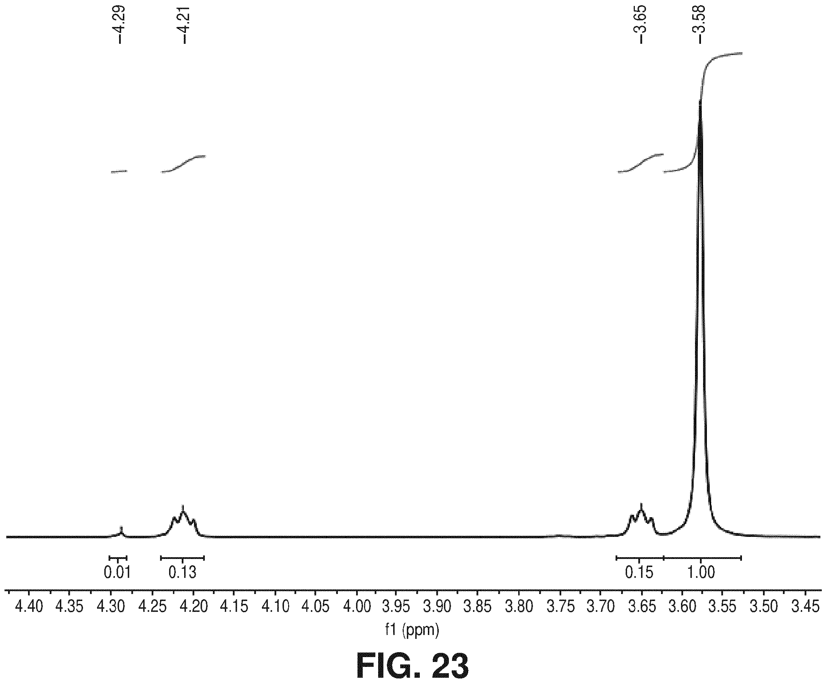

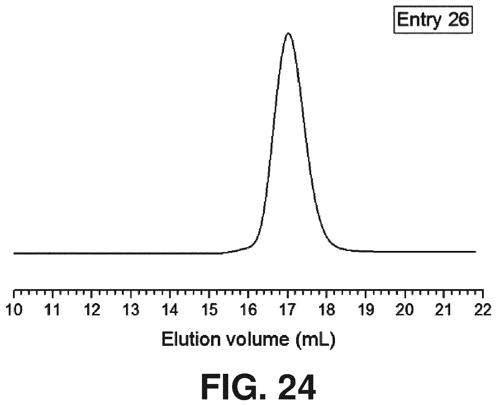

**FIGS. 13-24** provide ¹H NMR spectra and GPC traces for certain entries presented below in Table **4.**

**Table 4: Random Copolymerization Results of EO respectively with LLA and CO₂**

| **Entry No.** | **EO/LLA/I/TEB** | **Initiator** | **Time (min)** | **Solvent** | **Yield (%)** | **Ester (%)** | **Mₙ₍ₜₕₑₒ₎** | **M_{n(NMR)}** | **M_{n(GPC)}** | **PDI** |
|---|---|---|---|---|---|---|---|---|---|---|
| 1 | 600/0/1/5 | P4 | 10 | THF | 54 | 0 | 13800 | 15100 | 13100 | 1.28 |
| **2** | 500/0/1/5 | P₄ | 30 | Tol | 95 | 0 | 19400 | 24000 | 21000 | 1.20 |
| **3^{b}** | 260/40/1/10 | K | 900 | THF | 56 | 3 | 12900 | 14100 | 10700 | 1.16 |
| **4^{b}** | 260/40/1/5 | P₄ | 180 | THF | 40 | 7 | 9200 | 15100 | 5900 | 1.17 |
| **5** | 300/300/1/5 | TBACl | 660 | THF | 70 | 8 | 12100 | - | 4800 | 1.11 |
| **6** | 50/7/1/5 | P₄ | 15 | Tol | 98 | 3 | 2100 | 2700 | 5200 | 1.19 |
| **7** | 100/15/1/5 | P₄ | 45 | Tol | 96 | 2 | 4100 | 4700 | 7000 | 1.11 |
| **8** | 150/30/1/5 | P₄ | 75 | Tol | 95 | 3 | 6400 | 6600 | 10500 | 1.10 |
| **9** | 200/30/1/5 | P₄ | 120 | Tol | 99 | 3 | 9300 | 10000 | 14600 | 1.11 |
| **10** | 300/50/1/5 | P₄ | 150 | Tol | 80 | 3 | 10900 | 10800 | 14200 | 1.13 |
| **11** | 300/60/1/5 | P₄ | 360 | Tol | 99 | 7 | 13500 | 11600 | 15300 | 1.11 |
| **12** | 500/70/1/5 | P₄ | 180 | Tol | 96 | 3 | 21100 | 23500 | 24000 | 1.20 |
| **13 ^{a}** | 500/70/1/5 | P₄ | 180 | Tol | 99 | 4 | 21200 | 20100 | 22000 | 1.26 |
| **14** | 100/15/1/5 | P₂ | 120 | Tol | 96 | 5 | 4200 | 5700 | 11000 | 1.17 |
| **15** | 200/40/1/5 | TBACl | 240 | Tol | 48 | 11 | 7000 | - | 13400 | 1.10 |
| **16** | 200/40/1/5 | PPNCl | 180 | Tol | 87 | 3 | 7500 | - | 13900 | 1.12 |
| **17** | 300/50/1/5 | TOACl | 420 | Tol | 18 | 23 | 2400 | - | 11300 | 1.11 |
| **18** | 300/60/1/5 | TBPCl | 420 | Tol | 87 | 16 | 10900 | - | 15700 | 1.13 |
| **19** | 300/60/1/5 | TBAA | 300 | Tol | 65 | 11 | 8800 | - | 14200 | 1.12 |
| **20** | 75/10/1/5 | KOH | 75 | THF | 62 | 5 | 1600 | - | 3300 | 1.39 |
| **21^{c}** | 200/0/1/2.0 | TBACl | 720 | THF | 100 | 2 | 8980 | - | 16800 | 1.03 |
| **22^{c}** | 200/0/1/1.6 | TBACl | 720 | THF | 100 | 2 | 8980 | - | 16000 | 1.05 |
| **23'** | 200/0/1/1.4 | TBACl | 720 | THF | 100 | 3 | 9070 | - | 15200 | 1.04 |
| **24^{c}** | 200/0/1/1.2 | TBACl | 720 | THF | 100 | 6 | 9300 | - | 17200 | 1.03 |
| **25^{d}** | 200/0/1/2.0 | TBACl | 720 | THF | 100 | 5 | 9240 | - | 18600 | 1.05 |
| **26^{e}** | 200/0/1/2.0 | TBACl | 720 | THF | 100 | 12 | 9860 | - | 17400 | 1.04 |

| | | | | | | | | | | |
|---|---|---|---|---|---|---|---|---|---|---|
| p-methyl benzyl alcohol was used with P4 and P2 otherwise noted, P₄ = t-BuP₄, P₂ = t-BuP₂, LLA = L-lactide, EO = Ethylene Oxide, THF = tetrahydrofuran, Tol = Toluene, TBACl = tetrabutyl ammonium chloride, PPNCl = Bis(triphenylphosphine)iminium chloride, TOACl = tetra octyl ammonium chloride, TBPCI = tetra butyl phosphonium chloride, TBAA = tetra butyl ammonium azide GPC determined with THF as eluent and calibrated by polystyrene standards. ^{a}. Bisphenol A is used as alcohol. ^{b}. diethylene glycol monomethyl ether as alcohol. ^{c}. polymerized under 1 bar of carbon dioxide. ^{d.} polymerized under 2 bar of carbon dioxide ^{e.} polymerized under 4 bar of carbon dioxide. | | | | | | | | | | |

### EXAMPLE 3

### Synthesis of PEO stars with Degradable Polycarbonate Core

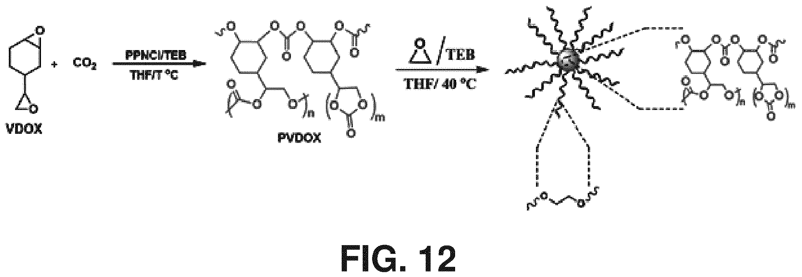

The degradable PEO stars was prepared by core first approach, where the core was composed of carbonate linkage to impart its degradability as shown in **FIG. 12****.** Here, diepoxide, vinyl cyclohexene dioxide (VDOX) was used as cross-linker to form the degradable polycarbonate core through copolymerization with CO₂. In order to obtain soluble polycarbonate core with low crosslinking extent, very low amount of diepoxide was used and the ratio of VDOX to onium salt initiator was kept less than about 10. Once the core was formed, ethylene oxide together with THF solvent was injected into same Parr reactor after CO₂ was gradually released, and the polymerization of ethylene oxide with generated polycarbonate core were subsequently carried out at about 40 °C under stirring. The polymerization conditions and results are listed in Table **5.**

*Representative procedures for the synthesis of polyethylene oxide stars with polycarbonate cores (PVDOX-EO) by core-first method.* Reactions were carried out in 100 mL Parr reactor with in-built charging port which was dried at about 120 °C overnight and then evacuated in glovebox chamber for about 3 h. For illustrating the synthetic procedure, PEO star sample designated as PVDOX1-EO1 of entry 27 in Table 5 is taken as representative. PPNCI (0.114 g, 0.2 mmol) was first added into the reactor followed by THF (about 2.5 mL) and TEB (about 0.2mL, about 1 eq.). To this reaction mixture, vinyl cyclohexene dioxide (about 0.14 g, about 1 mmol) was introduced and then reactor was closed and taken out from glovebox for charging at about 10 bar CO₂. The polymerization was carried out at about 80 °C for about 15 h. After cooling the reactor, CO₂ was slowly released to a minimum level, EO (about 2.6 mL, about 60 mmol), TEB (about 0.6 mL) and THF (about 20 mL) were charged to the reactor through charging port and polymerization was done at about 40 °C for about 15 h. Finally, the reaction mixture was quenched with HCl in methanol (about 1 mol/L). The obtained crude product was purified by precipitating in diethyl ether and centrifuged and dried in vacuum oven at about 40 °C for about 15 h to obtain the final product (Yield = about 90 %).

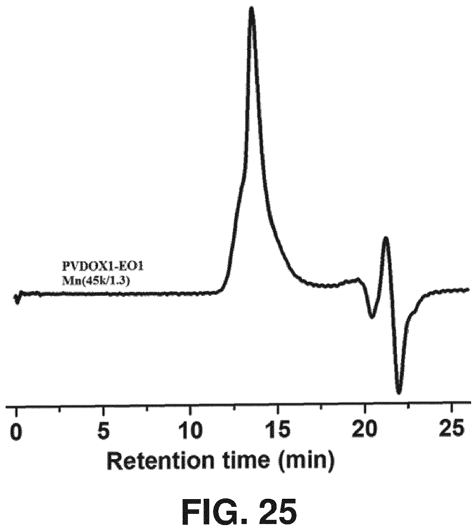

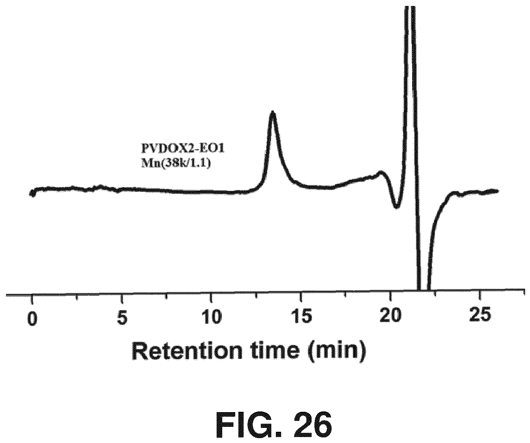

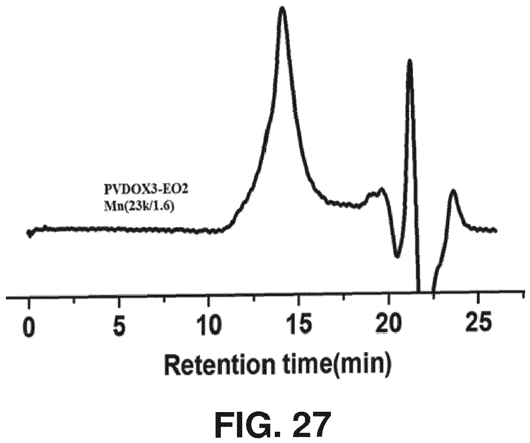

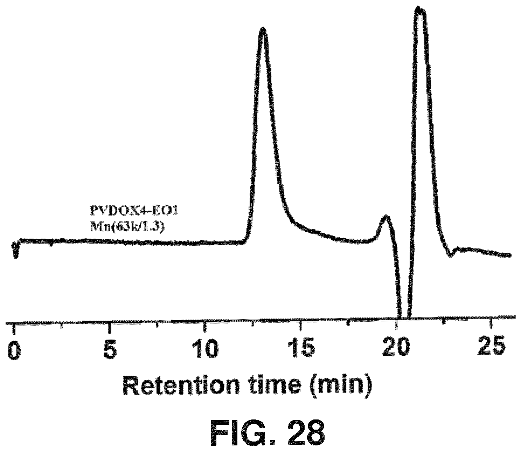

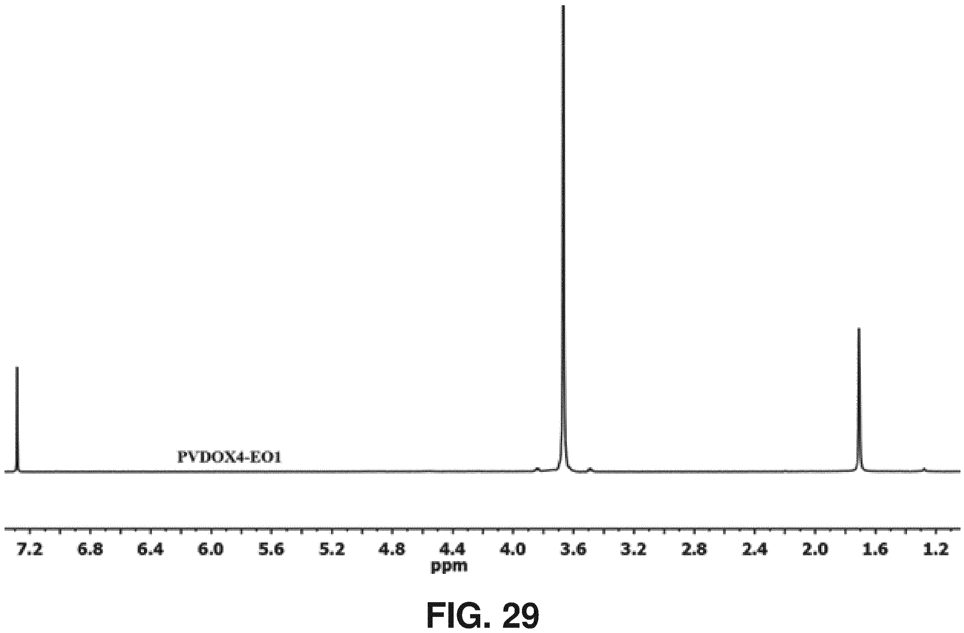

**FIGS. 25-29** provide ¹H NMR spectra and GPC traces for certain entries presented in Table 5 below.

**Table 5. Summary of PVDOX-EO star polymers synthesized by core-first method^{a}**

| **Entry** | Reference | [PPNCl]:[TEB]:[VDOX]:[EO] | T (°C) | Carbonate of core (%) | Mₙ/Ð^{b} (kg/mol) | Mₙ/Ð^{c} (kg/mol) | PEO Mₙ^{c} (kg/mol) | Nₙₘ^{d} |
|---|---|---|---|---|---|---|---|---|
| **27** | PVDOX1-EO1 | 1:1:5:300 | 80 | 85 | 45.4/1.3 | 57.2 | 12.6 | 4.6 |
| **28** | PVDOX2-EO1 | 1:1:5:300 | 70 | 88 | 38/1.1 | 77.7 | 12.2 | 6.1 |
| **29** | PVDOX2-EO2 | 1:1:5:500 | 70 | 88 | 41.5/1.1 | 125 | 190 | 6.5 |
| **30** | PVDOX3-EO2 | 1:1:5:100 | 60 | 90 | 23.4/1.6 | 40.3 | 4.4 | 7.8 |
| **31** | PVDOX3-EO3 | 1:1:5:300 | 60 | 90 | 49.3/1.3 | 804 | 10.2 | 7.8 |
| **32** | PVDOX3-EO4 | 1:1:5:400 | 60 | 90 | 48.1/1.5 | 140 | 15.0 | 9.3 |
| **33** | PVDOX4-EO1 | 1:1:5:1000 | 50 | 90 | 63.2/1.3 | 835 | 40.1 | 20.8 |
| **34** | PVDOX5-EO1 | 1:1:6:400 | 80 | 90 | 62.4/2 | 151 | 16.3 | 9.2 |
| **35** | PVDOX7-EO1 | 1:1.5:5:500 | 70 | 88 | 44.4/1.6 | 148 | 19.2 | 7.7 |
| **36^{e}** | FVDOX9-EO1 | 1:1:5:300 | 70 | 89 | 38.8/1.4 | 70.1 | 12.0 | 5.8 |
| **37^{f}** | PVDOX10-EO1 | 1:1:5:300 | 80 | 90 | 34.7/1.5 | 143 | 12.8 | 11.2 |
| **38^{g}** | PVDOX11-EO1 | 1:1:5:300 | 80 | 90 | 54.7/1.2 | 90.2 | 12.1 | 7.4 |

| | | | | | | | | |
|---|---|---|---|---|---|---|---|---|
| ^{a.} PVDOX was prepared using PPNCl as initiator at T (50-80°C) under 10 bar of CO₂ with VDOX/THF(v/v) ratio as 1:2.5 or otherwise mentioned, followed by subsequent polymerization of EO with formed core by keeping ratio of PVDOX:TEB as 1:3 and EO/THF(v/v) ratio as 1:10 at 40 °C for 24 h. ^{b.} Measured by GPC with THF as the eluent based on polystyrene standard. ^{c.} Measured by GPC equipped with multiangle laser light scattering (GPC-MALLS). ^{d.} Nₐᵣₘ = M_{w,LS} x arm_{wt%} /M_{n,PEO}.^{e.} Ratio of VDOX:THF was 1:2. ^{f.} Monofuntional CHO was added to crosslinker in the ratio of VDOX:CHO as 1:1 and VDOX:THF was 1:2.5. ^{g.} Polymerization was initiated by NBu₄Cl and reaction was carried out at 80 °C for 3 h. | | | | | | | | |

### EXAMPLE 4

### Hydrophobic poly(ethylene carbonate), Amphiphilic poly(ether carbonate) and hydrophilic Degradable poly(ethylene oxide) through Metal-free Copolymerization of Ethylene Oxide and CO₂

This Example describes the preparation of three types of EO-based copolymers through (homo)copolymerization of ethylene oxide (EO) with CO₂ under metal-free conditions in the presence of triethylborane (TEB) using onium salts (OS) as initiator. Hydrophobic poly(ethylene carbonate-co-ethylene oxide)s (PECEO) with carbonate content above 90% was first prepared under polymerization pressure of CO₂ in the range 10-30 bar with molar ratio of TEB to OS (1-1.2 eq.) in THF or hexane; With above prepared PECEO (carbonate >91 %) as macroinitiator, amphiphilic PEO-*b*-PECEO-*b*-PEOs were then prepared in one-pot through sequential ring-opening polymerization of EO; Lastly, copolymerization of EO under low pressure of CO₂ (1-2 bar) with molar ratio of TEB to OS (1.2-2.0 eq.) afforded hydrophilic PEOECs with carbonate contents below 10%, allyl glycidyl ether (AGE) was also terpolymerized with EO and CO₂ under same conditions to introduce functionality into the backbone of PEO chains. The critical micelle concentration (cmc) and size of micelles were measured for amphiphilic PEO-*b*-PECEO-*b*-PEO samples as a non-ionic surfactant. "PEO-like" properties of hydrophilic PEOECs were characterized by thermogravimetric analysis (TGA), differential scanning calorimetry (DSC) and wettability test, their degradation behavior was further investigated under different conditions.

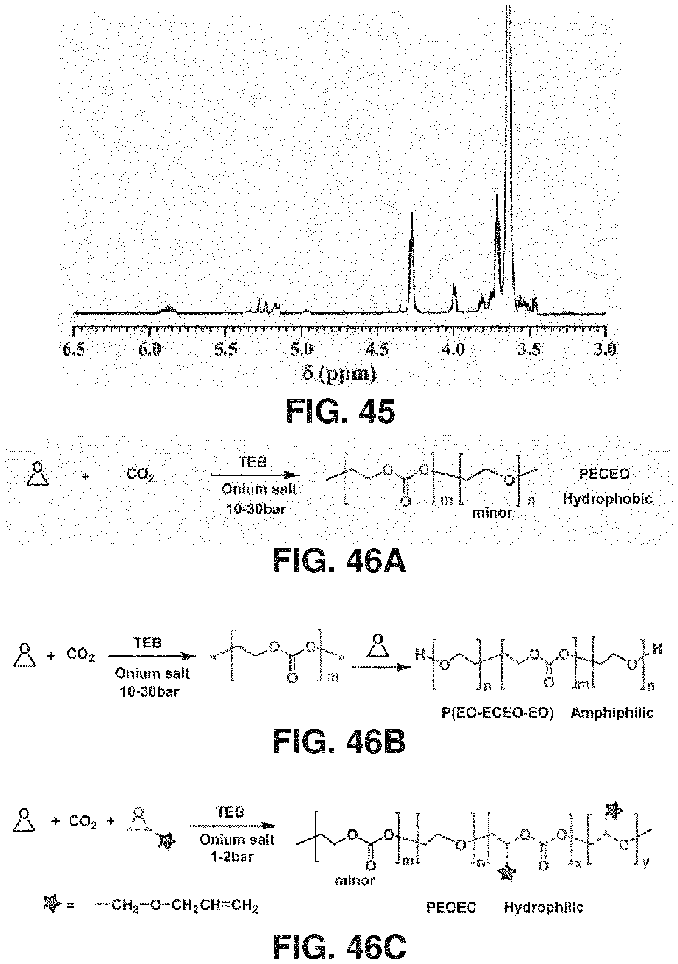

Taking advantage of the versatility and tunability of TEB-mediated polymerization system combined with the specialty of EO, this example describes copolymerization of EO with CO₂ and ROP of EO to access a series of EO-based polymers spanning from hydrophobic (PECEO), amphiphilic (PEO-PECEO-PEO) to hydrophilic (PEOEC) for different applications (Scheme 1 (FIG. **46**)). First, through copolymerization of EO with CO₂ initiated by onium salts, PECEO with high carbonate content (>90%) could be obtained (Scheme 1A (FIG. **46**)). Based on the above process, after copolymerization of EO with CO₂, sequential ROP of EO in one pot affords amphiphilic PEO-PECEO-PEO triblock copolymers (Scheme 1B (FIG. **46**)), which could be a good non-ionic surfactant. Indeed, in comparison to its commercial homologs Poloxamers or Pluronics PEO-PPO-PEO, the use of inexpensive, abundant CO₂ and imparted degradability to PEO-PECEO-PEO will generate profound economic and environmental benefits. Lastly, adjustment of polymerization pressure of CO₂, very low carbonate content (∼ 5 mol%), degradable PEO-like PEOEC could be generated (Scheme 1C (FIG. **46**)); in addition, other functional epoxides like ally glycidyl ether (AGE), could be terpolymerized with EO and CO₂ with an aim to introduce functional groups for subsequent conjugation as a drug delivery vehicle. It should be noted that in all cases the EO-based polymers produced do not contain any metal residues, without concerns in application as biomaterials and surfactants for personal care.

### RESULTS AND DISCUSSION

**Table 6. Copolymerization Data for the Synthesis of PECEO with various carbonate Content Using TEB¹**

| Entry | Initiator (I) | EO/I | TEB/I | Solvent (S) | P_{CO2} (Bar) | EO/S (v:v) | Selectivity² (%) | carbonate %³ | *M*ₙ⁴ (kg/mol) | *Ð*⁴ | Yield⁵ (%) |
|---|---|---|---|---|---|---|---|---|---|---|---|
| 1 | TBACl | 100 | 2.0 | THF | 10 | 1.0 | 96 | 15 | 5.0 | 1.23 | 96 |
| 2 | TBACl | 100 | 1.0 | THF | 10 | 0.5 | 82 | 81 | 5.1 | 1.11 | 66 |
| 3 | TBACl | 100 | 1.0 | Hexane | 10 | 0.5 | 81 | 91 | 4.4 | 1.10 | 47 |
| 4 | PPNCl | 100 | 1.0 | Hexane | 10 | 0.5 | 87 | 85 | 4.9 | 1.19 | 58 |
| 5 | TOACl | 100 | 1.0 | Hexane | 10 | 0.5 | 98 | 81 | 6.0 | 1.16 | 70 |
| 6 | TBACl | 100 | 1.2 | Hexane | 10 | 0.5 | 95 | 64 | 4.5 | 1.32 | 41 |
| 7 | TBACl | 100 | 1.2 | Hexane | 20 | 0.5 | 85 | 92 | 4.3 | 1.12 | 46 |
| 8 | TBACl | 100 | 1.2 | Hexane | 20 | 1.0 | 95 | 90 | 5.7 | 1.10 | 69 |
| 9 | TBACl | 100 | 1.2 | THF | 30 | 1.0 | 90 | 92 | 4.5 | 1.11 | 47 |
| 10 | TBAS | 100 | 1.0 | THF | 30 | 1.0 | >99 | 95 | 6.9 | 1.09 | 87 |
| 11 | TBACl | 500 | 1.0 | THF | 10 | 1.0 | 84 | 92 | 7.5 | 1.13 | 24 |
| 12 | TBAS | 500 | 1.0 | THF | 10 | 1.0 | >99 | 93 | 14 | 1.12 | 41 |
| 13 | PPNCl | 500 | 1.0 | THF | 10 | 1.0 | 95 | 90 | 9.0 | 1.31 | 43 |
| 14 | TOACl | 500 | 1.0 | THF | 10 | 1.0 | 95 | 93 | 9.0 | 1.16 | 31 |
| 15 | TOACl | 500 | 1.1 | THF | 10 | 1.0 | 98 | 92 | 9.5 | 1.15 | 31 |
| 16⁶ | TOACl | 500 | 1.0 | THF | 10 | 1.0 | 96 | 92 | 21 | 1.33 | 57 |
| 17 | TBACl | 200 | 2.0 | THF | 4 | 1.0 | >99 | 11 | 7.0 | 1.04 | 99 |
| 18 | TBACl | 200 | 2.0 | THF | 2 | 1.0 | >99 | 4.6 | 6.6 | 1.05 | 99 |
| 19 | TBACl | 200 | 2.0 | THF | 1 | 1.0 | >99 | 1.7 | 6.8 | 1.03 | 99 |
| 20 | TBACl | 200 | 1.4 | THF | 1 | 1.0 | >99 | 2.9 | 6.1 | 1.04 | 99 |
| 21 | TBACl | 200 | 1.2 | THF | 1 | 1.0 | >99 | 6.9 | 6.9 | 1.03 | 99 |
| 22 | TBACl | 500 | 2.0 | THF | 1 | 1.0 | >99 | 2.3 | 15 | 1.06 | 99 |
| 23 | TBACl | 500 | 1.2 | THF | 1 | 1.0 | >99 | 11 | 15 | 1.09 | 81 |
| 24 | TBAS | 4000 | 1.6 | THF | 1 | 2.0 | >99 | 4.4 | 208 | 1.16 | 92 |
| 25⁷ | TBAS | 2000 | 1.6 | THF | 1 | 2.0 | >99 | 5.8 | 98 | 1.07 | 99⁸ |
| 26⁹ | TBAS | 2000 | 1.6 | THF | 1 | 2.0 | >99 | 8.9 | 88 | 1.15 | 93⁸ |

| | | | | | | | | | | | |
|---|---|---|---|---|---|---|---|---|---|---|---|
| ¹The copolymerizations were performed at room temperature over a period of 15 hours. ²Determined from the ¹H NMR spectrum of the crude product; ³Calculated from the ¹H NMR spectrum of the pure product. ⁴Determined by SEC using DMF (Entry 1-15) or THF (16-23) as the eluent and linear polyethylene oxide standard. ⁵Yield was calculated using the equation: yield = weight of polymer obtained/(weight of EO added + carbonate content × weight of EO added). ⁶The reaction time was 45 hours. ⁷AGE was used as a comonomer with an AGE/EO feeding ratio of 20:1. ⁸The yield was calculated using the equation: yield = weight of polymer obtained/(weight of EO added + carbonate content × weight of EO added + 114.14 × AGE incorporation content × molar of EO added).⁹AGE was used as a comonomer with an AGE/EO feeding ratio of 10:1. Abbreviations: TBACl = tetrabutylammonium chloride; PPNCl = bis(triphenylphosphine)iminium chloride; TOACl = tetraoctylammonium chloride; TBAS = tetrabutylammonium succinate. | | | | | | | | | | | |

### A. Synthesis of PECEO through EO/CO₂ copolymerization

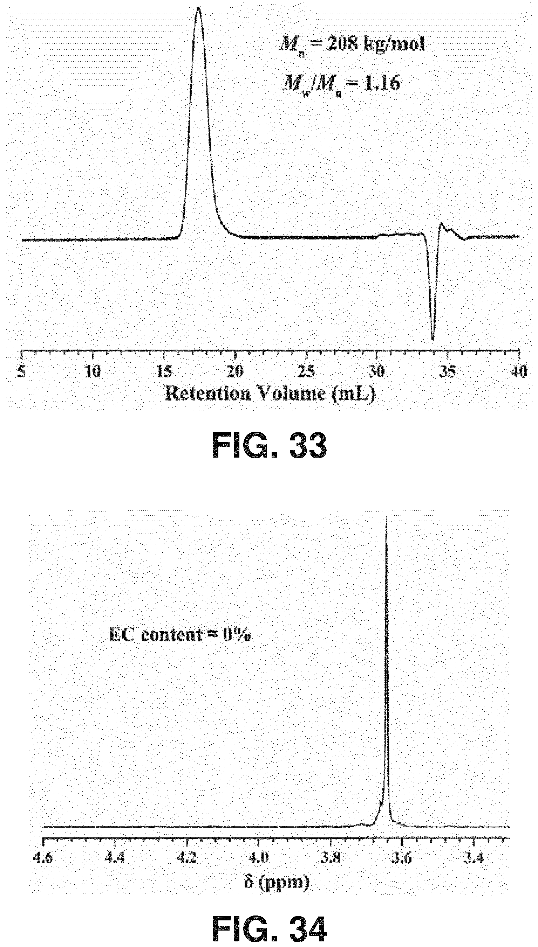

Following the first report of CO₂/PO(CHO) copolymerization catalyzed by TEB, the versatility of such system for copolymerization of CO₂ with other epoxides was recently investigated, and their copolymerization results demonstrated that copolymerization activities of epoxides with CO₂ are dependent much on their pendent groups on the epoxide ring, the hindrance and functionality in the pendent substituents could decrease the activity of epoxides while more TEB to the initiator has to be added to favor the copolymerization over backbiting cyclic carbonate formation. Among all the epoxide monomers, EO is simplest without any substituent which is most active during ROP. Indeed, copolymerization of EO and CO₂ under similar conditions with that to PO (2 eq. TEB to TBACl) affords PECEO with high linear vs. cyclic selectivity, but low carbonate content (entry 1, Table **6**). As can be seen from the ¹H NMR spectra of the crude products (FIG. **33**), the signals for the protons in linear polyethylene carbonate (PEC) and cyclic ethylene carbonate (CEC) respectively appeared at 4.31-4.23 and 4.46 ppm, giving linear vs. cyclic selectivity of the polymerization 96%; while calculating based on the intensities of peaks from the ¹H NMR spectra of purified product (FIG. **34**) appearing at 3.66-3.58 ppm for the ether linkages and at 4.31-4.23 ppm for linear carbonate linkages, the carbonate content of the resulting copolymers is quite low, of 15 mol %. It is evident that higher activity of EO in comparison to PO plus the activation by TEB favors the homopolymerization for ether formation rather than copolymerization. In order not to activate EO too much and to suppress the homopolymerization of EO, less borane (1 eq. TEB to the initiator) was attempted, and copolymerization was conducted in THF under 10 bar CO₂ pressure at room temperature (Entry 2, Table 6). In contrast, the carbonate content in the obtained PECEO was remarkable increased up to 81% but linear vs. cyclic selectivity was sacrificed to 82%. Using aploar solvent hexane instead of coordinating solvent THF increased the carbonate content to 91% of obtained PECEO with a lower yield of 47%, while the selectivity (81%) remained nearly constant (Entry 3, Table 6). Due to the non-dissociating effect of hexane, the tighter alkoxide/TEB ate-complexes suppress the homopolymerization, but exhibit lower activity resulting in lower yield of polymers. Using initiators such as PPNCl (Entry 4, Table 6) and TOACl (Entry 5, Table 6) increased the selectivity (87% and 98%) and yield (58% and 70%), however, lowered carbonate content (85% and 81%) in comparison to that with TBACl, which is correlated to the higher activity of ate-complex composed of bulkier onium. Slightly elevating the amount of TEB to TBACl to 1.2 eq. (Entry 6, Table 6) led to a higher selectivity of 95% with lower carbonate content (64%). In order to incorporate more CO₂ (>90%) without losing linear vs. cyclic selectivity, the copolymerization conditions (1.2 eq. TEB to TBACl, and hexane as the solvent) were kept and the CO₂ pressure was increased from 10 bar to 20 bar, a remarkable influence of CO₂ pressure on the polycarbonate content was observed, the carbonate content of obtained PECEO increased from 64% to 92% and a moderate selectivity of 85% with a yield of 46% (Entry 7, Table 6). Further decreasing the volume of apolar solvent hexane in copolymerization system (EO/hexane volume ratio = 1:1, Entry 8) generated PECEO with improved linear vs. cyclic selectivity (95%) and carbonate content being 90% with a yield of 69%. Following the idea of increasing the carbonate content in obtained PECEO by higher CO₂ pressure, similar good copolymerization result could be achieved with coordinating solvent THF under 30 bar of CO₂ (92% carbonate content, Entry 9, Table 6). When performing the copolymerization with 1 eq. of TEB to bifunctional initiator TBAS under 30 bar of CO₂ pressure (Entry 10, Table 6), PECEO diol could be obtained with 95% of carbonate linkages and a yield of 87% with negligible CEC, which could be utilized as precursor for polyurethane production like PPC polyols.

The optimized conditions for the synthesis of PECEO with high EC content and selectivity were further explored at a targeted DP of 500. Interestingly, using 1 eq. of TEB to tetrabutylammonium in THF under lower pressure of CO₂ pressure at 10 bar, high carbonate content (> 92%) in PECEO can be obtained with a selectivity of 89% in the case of TBACl (Entry 11, Table 6), and negligible CEC found in the case of TBAS (Entry 12, Table 6) as entry 10. In contrast, using bulkier onium chlorides like PPNCl and TOACl gave PECEO with >90% of carbonate content, and higher linear vs. cyclic selectivities (>93%) and yields (Entry 13-15 in Table 6). Obviously, the highly active onium ate-complexes in THF was somehow neutralized by their low concentrations in high DP targeting system, it is such compromise that afford above good copolymerization results without need of mixing EO with apolar solvent or increasing CO₂ polymerization pressure. The analysis by SEC using DMF as the eluent and calibrated by polyethylene oxide gave apparent molar masses of the obtained PECEOs lower than expected values, but in all cases exhibit unimodal and narrow distributions. Through extending reaction time from 15 hours to 45 hours using TOACl as the initiator, 57% of yield could be reached with M_{n(GPC)} up to 21 kg/mol without sacrifice of selectivity and CO₂ incorporation (Entry 16, Table 6).

### B. Synthesis of amphiphilic PEO-b-PECEO-b-PEO triblock copolymers

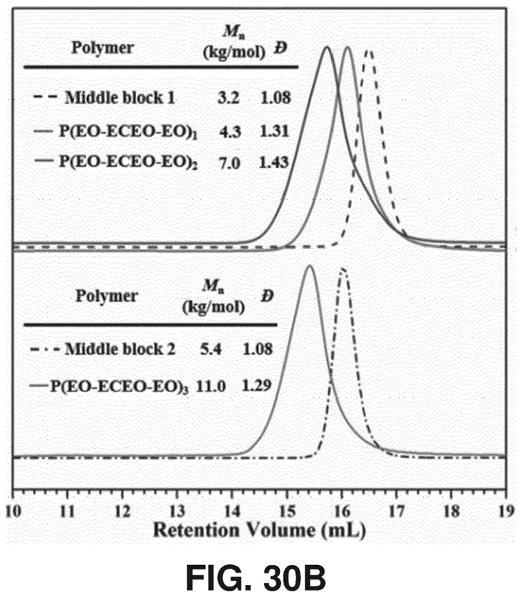

Succeeded in preparation of PECEO with high carbonate content, the synthesis of amphiphilic triblock copolymers was attempted through sequential ROP of EO with the former as macroinitiator. Due to the TEB-mediated system working both for EO/CO₂ copolymerization and ROP of EO, triblock copolymers with structures similar to PEO-PPO-PEO surfactant can be carried out in one pot as shown in Scheme 1B (FIG. **46**): copolymerization of EO with CO₂ using bifunctional initiator TBAS first under the conditions described as entry 10 in Table **6,** and ROP of EO next after releasing CO₂ and charging additional EO monomer. Generally, CO₂-based amphiphilic copolymers are prepared through immortal CO₂/epoxide copolymerization in the presence of macrotransfer agents, in this context, the amphiphilic copolymers are giving structures only of PEO-PC or PC-PEO-PC. To the inventors' best knowledge, nonionic surfactants composed of PEO as the hydrophilic block at two ends and hydrophobic CO₂-based polycarbonates in the middle has not been reported before. Three amphiphilic copolymers with different molar masses and compositions are thus prepared with approximately same carbonate contents (91 mol%) in the central PECEO block. Their ¹H NMR spectra showed the peaks due to PEC and the peaks with higher intensity due to PEO after ROP of EO (FIG. **30A**). The peak due to the methylene protons of succinate residing at 2.66 ppm could be used to calculate the molar masses of the triblock copolymers. The SEC traces of the triblock copolymers displayed a clear shift from their precursors after ROP of EO in the second step, confirming the successful formation of triblock copolymers (FIG. **30B**). Related characterization data of these three copolymer samples are listed in Table 7. P(EO-ECEO-EO)₁ and P(EO-ECEO-EO)₂ has the same PEC middle block but different PEO weight fractions, which are 45% for P(EO-ECEO-EO)₁ and 65% for P(EO-ECEO-EO)₂. P(EO-ECEO-EO)₃ has the same PEO weight fraction (65%) but higher molar mass than that of P(EO-ECEO-EO)₂.

**Table 7. Characterization Data of the Amphiphilic Triblock Copolymers Derived from EO and CO₂**

| **Polymer** | ***M*ₙ¹ (kg/mol)** | ***Ð*¹** | ***M*_{n NMR}² (kg/mol)** | **PEO³ wt%** | **HLB⁴** | **cmc⁵** | | ***R*ₕ (Å)/*Ð*⁶** |
|---|---|---|---|---|---|---|---|---|
| | | | | | | **w/v (mg/L)** | **mM/10⁻³** | |
| P(EO-ECEO-EO)₁ | 4.3 | 1.31 | 5.0 | 45 | 9 | 37 | 7.4 | 70/0.04 |
| P(EO-ECEO-EO)₂ | 7.0 | 1.43 | 7.2 | 65 | 13 | 81 | 11.3 | 83/0.03 |
| P(EO-ECEO-EO)₃ | 11.0 | 1.29 | 11.8 | 65 | 13 | 55 | 4.7 | 153/0.10 |

| | | | | | | | | |
|---|---|---|---|---|---|---|---|---|
| ¹Determined by SEC using DMF eluent and PEO standard at 60 °C; ²Calculated from ¹H NMR spectra using the equation: *M*_{n NMR} = (*I*_{4.37}×88+*I*_{3.63}×44)/*I*_{2.66}; ³Calculated from ¹H NMR spectra using the equation: PEO wt% = 100×*I*_{3.63}x×44/(*I*_{4.37}×88+*I*_{3.63}×44); ⁴HLB (hydrophilic-lipophilic balance) was calculated using Griffin's method (HLB= 20 × weight fraction of hydrophilic block); ⁵Obtained through fluorescence spectroscopy using pyrene as a probe at 25 °C; and ⁶Determined by dynamic light scattering at 25 °C. | | | | | | | | |

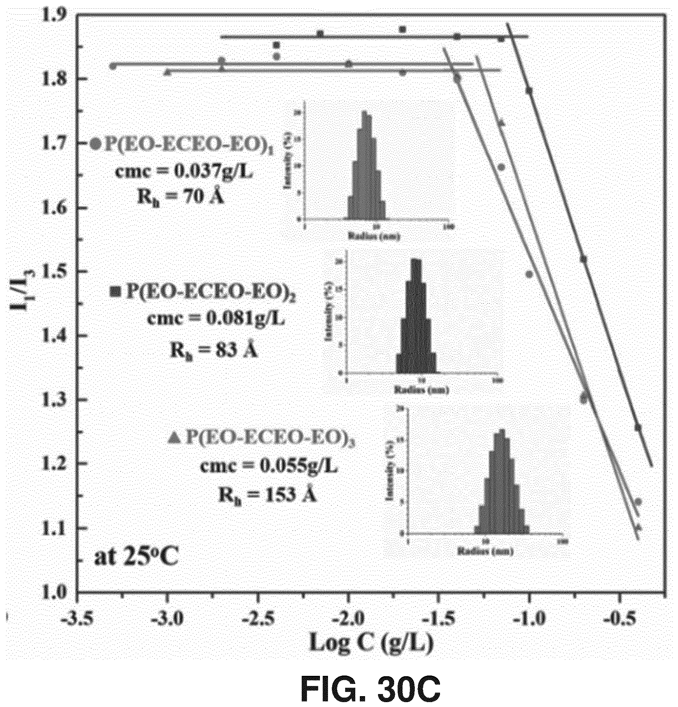

The cmc values of these copolymers were measured by fluorescence spectroscopy using pyrene as a probe. The plot of the ratios between the intensities at 373 nm and 384 nm (*I*₁/*I*₃) as a function of polymer concentration was provided in FIG. **30C****.** The cmc value was adopted as the concentration at the intersection point of the two best-fit lines. P(EO-ECEO-EO)₁ has a cmc value of 0.0037 g/L or 0.0074 mM at 25 °C. The value is significantly lower than that of the PEO-PPO-PEO surfactant polymer with similar HLB value. For example, the Pluronic copolymer P104 (HLB =8) has a cmc value of 0.508 mM at 25 °C. As can be concluded, the nature of PECEO is more hydrophobic than PPC, and partly incorporated EO (9 mol%) does not affect much the hydrophobic nature of PECEO. In addition, in the case of PPC-PEO-PPC with similar HLB values (9.9), such triblock copolymer is not water soluble, indicating the importance of the structure on the micelle effect. Increasing the hydrophilic PEO weight fraction from 45% to 65% results in increased cmc value to 0.081 g/L. P(EO-ECEO-EO)₃ has a lower cmc value of 0.055g/L than that of P(EO-ECEO-EO)₂. The size of the micelles formed by the amphiphilic triblock copolymers were also measured using dynamic light scattering spectroscopy (FIG. **30C** insets). The hydrodynamic radii (*R*ₕ) for P(EO-ECEO-EO)₁, P(EO-ECEO-EO)₂ and P(EO-ECEO-EO)₃ are 70, 83 and 153 Å, respectively. Narrow size distributions in the range of 0.04-0.1 were observed for the micelles formed by these triblock copolymers. The lower cmc value and much bigger *R*ₕ of P(EO-ECEO-EO)₃ with same HLB in comparison to P(EO-ECEO-EO)₂ imply that the micelle is easier to form and also more molecules need to shield longer hydrophobic block, a trend consistent with previous report. For comparison, the *R*ₕ of the micelles by a PEO-*b*-PPO-*b*-PEO triblock copolymer (Pluronics P-85) with a declared molar mass of 4.5 kg/mol and 49 wt% of PEO segments was 80 Å at 25 °C.

### C. Synthesis of "PEO-like" PEOEC and functional PEOEC

To maintain the properties of PEO and endow degradability, the incorporated CO₂ should not be higher than 10 mol% with an optimal content around 5mol%. Based on previous reports, there are two options: varying the ratio of TEB to the initiator or the pressure of CO₂ to tune the carbonate contents during CO₂/epoxides copolymerization. As shown in Table **6** (entry 17-24), the methods through either charging more TEB to the initiator or decreasing pressure of CO₂, or even by both were adopted to obtain poly(ethylene oxide-co-ethylene carbonate) (PEOEC) with low carbonate contents. For instance, using 2 eq. of TEB to initiator TBACl, copolymerizing EO and CO₂ under 4 bar afforded PEOEC with remarkably low carbonate content (12%, Entry 17, Table 6); further lowering the CO₂ pressure to 2, and 1 bar, the carbonate contents fall to 4.6% and 1.7% (Entry 18, 19, Table 6). Keeping CO₂ polymerization pressure under 1 bar, and performing the same copolymerization using TEB less than 2 eq. such as 1.4, 1.2 eq., the carbonate contents of the obtained PEOEC increase from 1.7% to 2.9% and 6.9%, respectively (Entry 20, 21, Table 6). Comparison of the obtained results between the entry 19 and 22, entry 21 and 23, showed that copolymerization under same conditions but targeting higher DP from 200 to 500, the carbonate contents of obtained PEOECs were increased. The relatively lower ratio of TEB to EO in the cases of entry 22 and 23 activated EO less that favored on the other hand more incorporation of CO₂. When targeting DP of 4000 and using 1.6 eq. of TEB to TBAS, a high-molar-mass (208 kg/mol) PEOEC with 4.4% of carbonate content could be synthesized without any difficulty (Entry 23, Table 6). It should be mentioned that no cyclic ethylene carbonate was detected during such copolymerization, and all the obtained PEOEC samples are water soluble and narrow dispersed in the range of 1.03-1.16 as characterized by SEC using THF as the eluent and PEO standard.

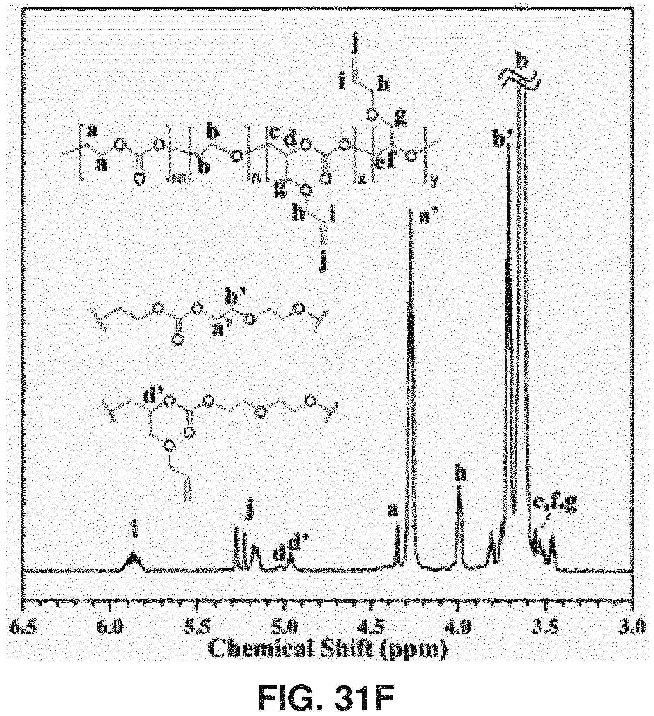

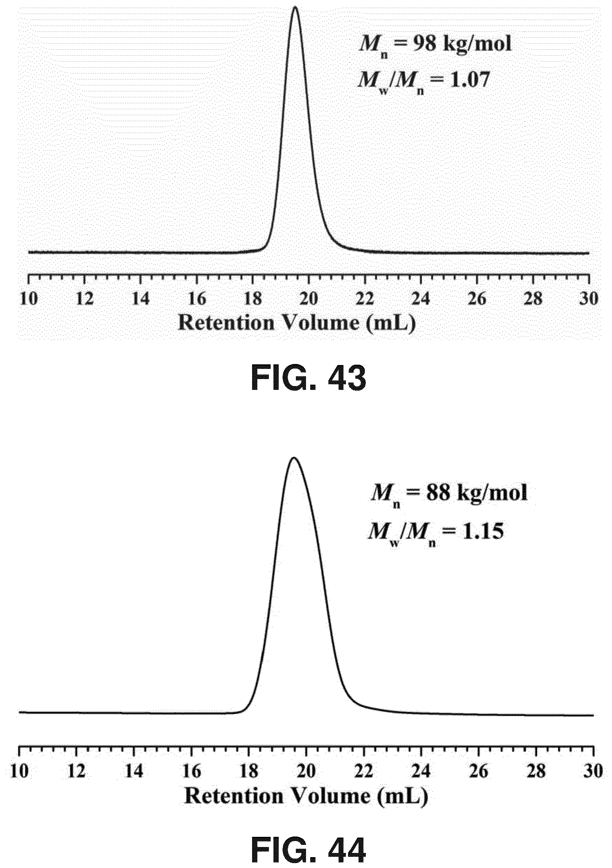

To overcome the lack of functional groups in the degradable PEOEC hydrophiles, a third functional monomer such as AGE, glycidyl azide could be introduced through terpolymerization with EO and CO₂ in order to meet requirements for various bioapplication purposes. As a proof of concept, AGE was chosen for terpolymerization. Under a constant CO₂ pressure of 1 bar, using 1.6 eq. of TEB to TBAS, P(EO-EC-AGE) was obtained with 5.8% of carbonate content and 3.0% of AGE under an EO/AGE feeding ratio of 20/1 (Entry 25, Table **6**). The ¹H NMR spectrum for the copolymer was given in FIG. **45** and the SEC (THF) trace for the copolymer is given in FIG. **43****.** At an EO/AGE feeding ratio of 10/1, the values are 8.9% and 3.2, respectively (Entry 26, Table **6**). The ¹H NMR spectrum for the latter copolymer was given in FIG. **31F** and the SEC (THF) trace for the copolymer is given in FIG. **44****.** The characteristic allylic group peaks at 5.88 and around 5.23 ppm in the ¹H NMR spectrum confirms the incorporation of AGE. If inspected carefully, some AGE monomers are incorporated with CO₂ (5.03 and 4.96 ppm) along with ether linkages and the former carbonate linkages are found to be 75% in the total 3.2 % of AGE incorporation. The observation of the signal at 4.96 ppm which corresponds to the methane proton in PAGEC adjacent to PEO linkages, together with the fact that AGE is much less reactive than EO due to the steric hindrance and the interaction between double bond and TEB, suggested the tapered nature of copolymers. The double bonds in these copolymers could be further derivatized through thiol-ene click reaction, bestowing PEO in the meantime degradability and functionalization.

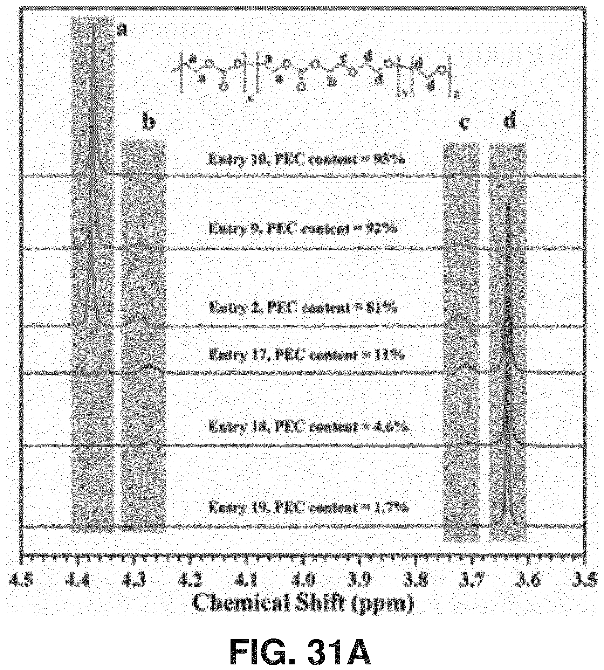

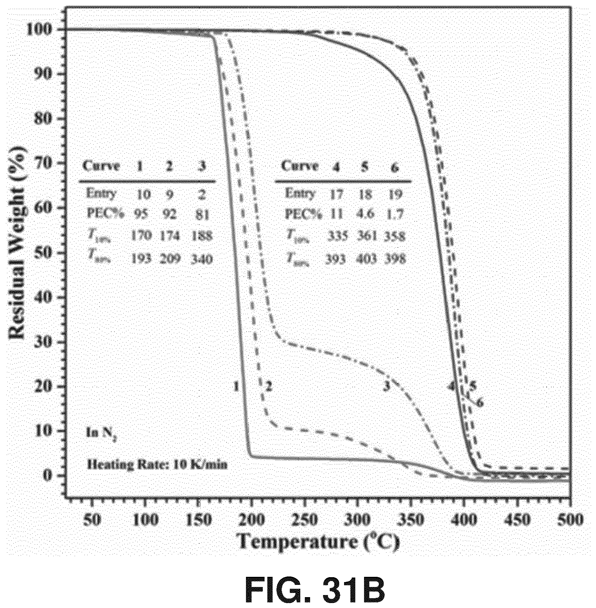

The physical properties of degradable PEOECs were characterized along with PECEOs as references. Their different EC contents are clearly demonstrated in ¹H NMR spectra shown in FIG. **31A****.** The thermal stability decreased with increase of carbonate contents. As can be seen in FIG. **31B** as characterized by thermogravimetric analysis (TGA), PECEO samples with high carbonate contents showed clear two-stage degradation behavior with the first one starting at about 160 °C corresponding to the break of carbonate linkages and the second at about 350 °C due to the break of ether linkages. On the contrary, PEOECs with low carbonate content displayed higher stability than their counterparts of high carbonate contents. The *T*_{5%} for PEOEC with 11% (Entry 17, Table 6), 4.6% (Entry 18, Table 6) and 1.7% (Entry 19, Table 6) are 335 °C, 358 °C and 361 °C, respectively.

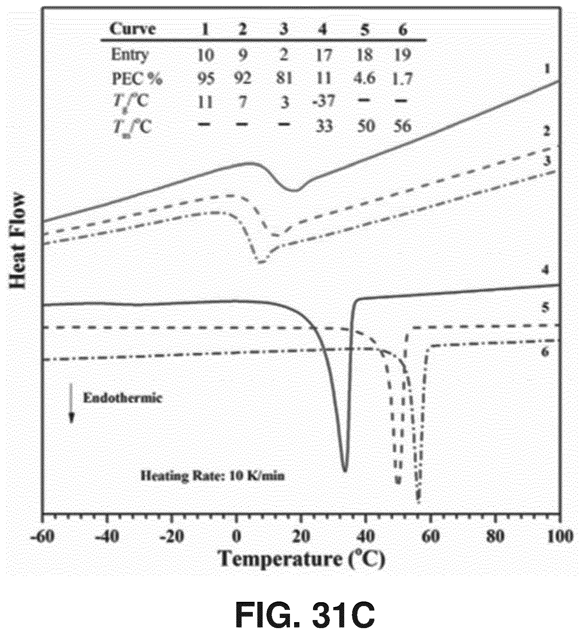

The "PEO-like" properties of PEOECs were also witnessed by differential scanning calorimetry (DSC) and wettability test. For the three PEOEC samples with low carbonate contents, sharp melting peaks were all detected respectively (FIG. **31C**) at 33 °C for sample with carbonate content of 11% (Entry 17, Table 6), 50 °C with that of 4.6% of carbonate (Entry 18) and 56 °C with that of 1.7% (Entry 19, Table 6), the latter is very close to the value of pure PEO (58.9 °C). The insignificant incorporation of CO₂ into PEOECs does not change the crystallization behavior of PEOs. As for PECEO samples with high carbonate content only glass transition temperatures (*T*_{g}) were found at 3, 7 and 11 °C when carbonate contents increase from 81%, 92% to 95%.

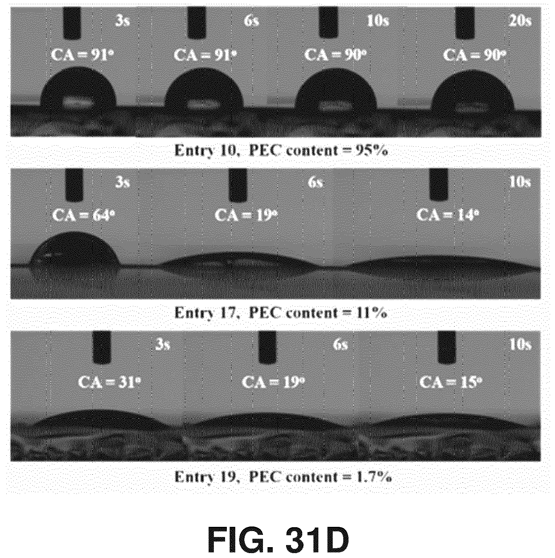

The wettability or hydrophilicity of the PEOECs was evaluated by the contact angle (CA) of water droplet on the surface of solvent-casted copolymers. The images showing the CA evolved over time are displayed in FIG. **31D****.** The CA of the PECEO sample (Entry 10, Table 6) with 95% of carbonate content is 91° and remains nearly constant over time, indicating its hydrophobic nature. The water droplet on the surface of PEOEC (Entry 17, Table 6) with 11% of carbonate content showed an initial CA to be 64° and quickly spread onto the surface to afford a CA of 14°. The CA for the PEOEC (Entry 19, Table 6) with 1.7% of carbonate content changed from 31° to 15° over the time of observation. The low CA of two PEOEC samples confirm their hydrophilic nature.

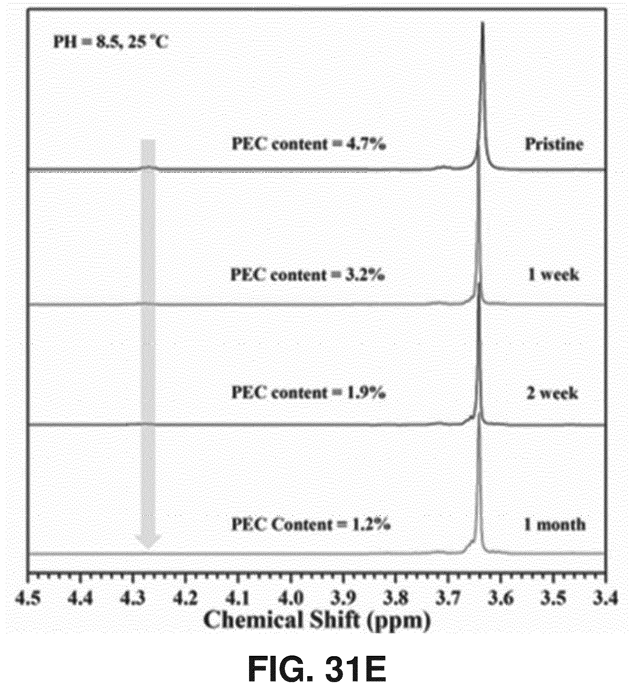

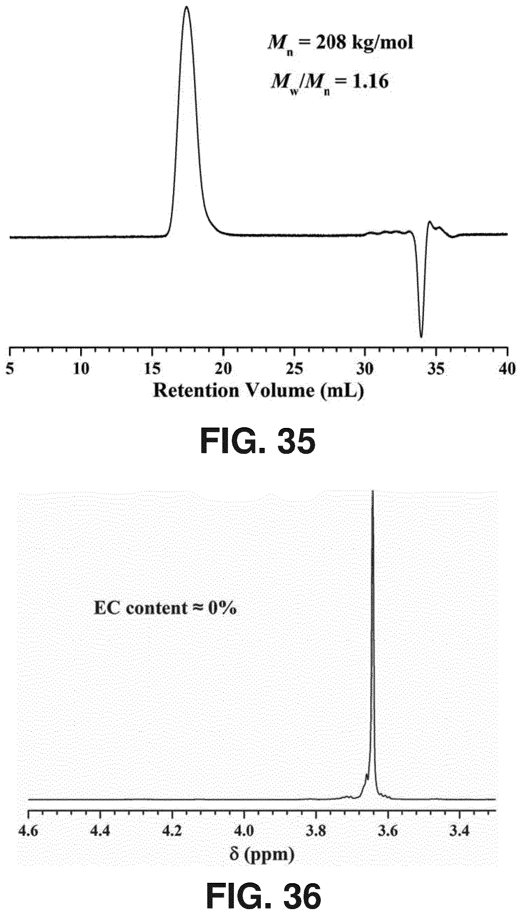

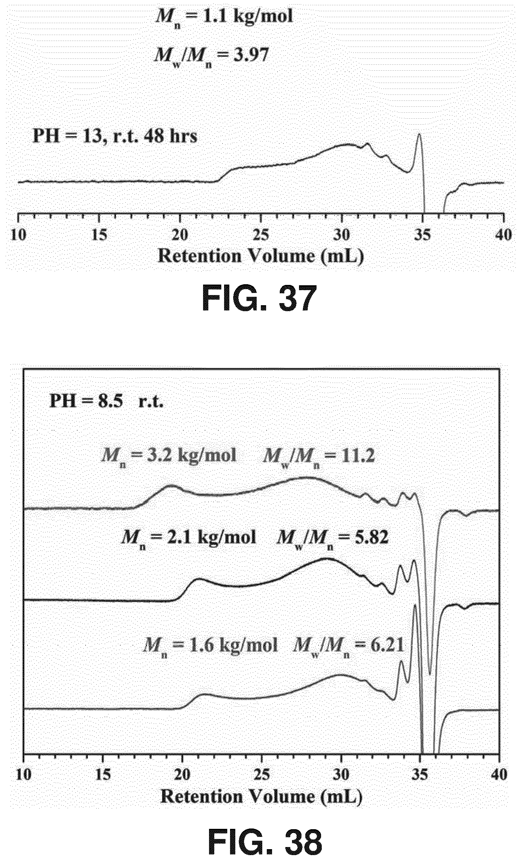

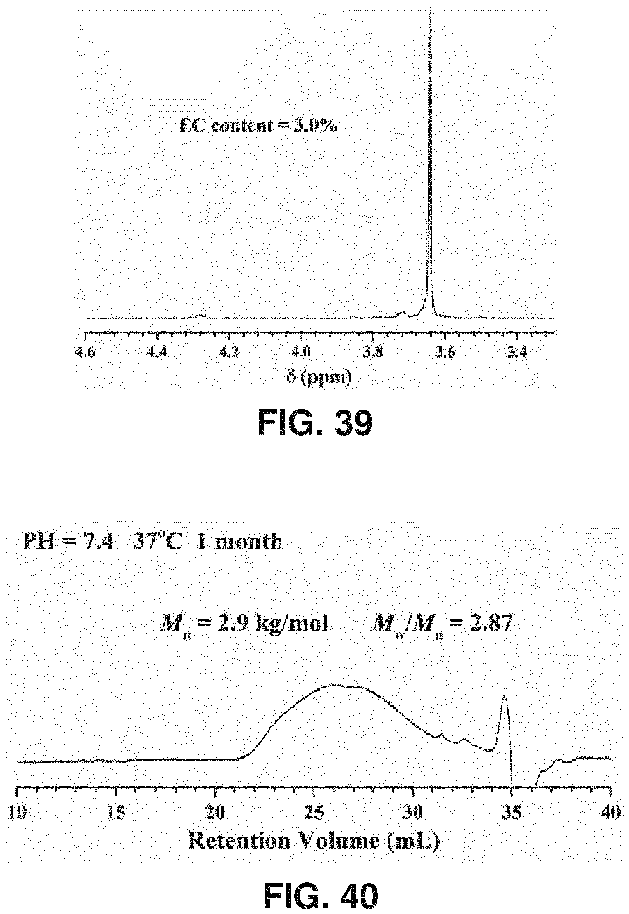

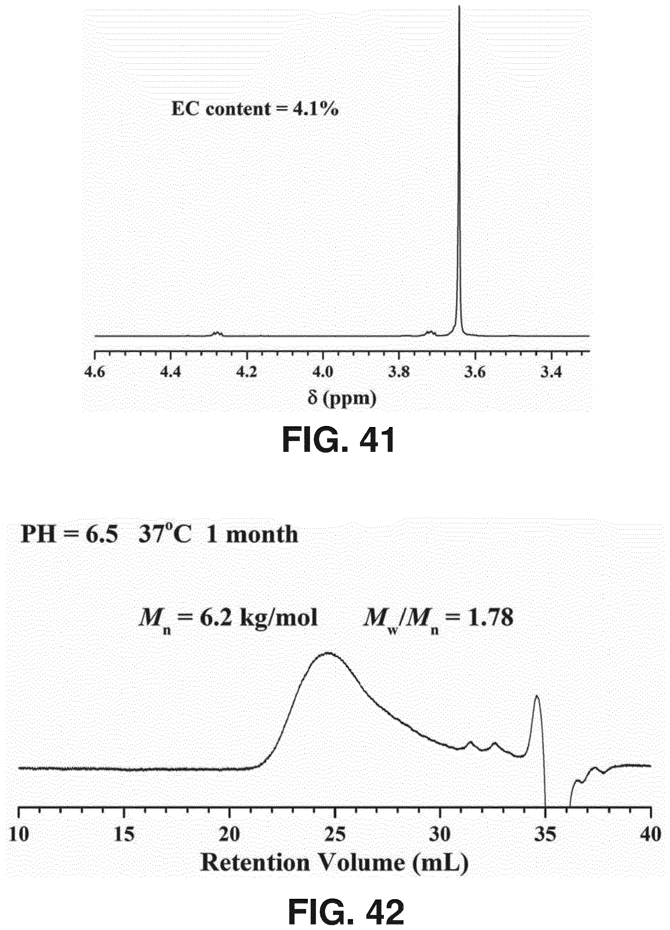

Knowing the PEOECs prepared possess "PEO-like" properties, their degradation behavior was investigated. In order to easily follow the degradation process, the PEOEC sample (*M*_{n(GPC)} =208 kg/mol, FIG. **35****,** 4.4 % of carbonate content, Entry 24 in Table **6**) with high molar mass was taken for experiment. First degradation was carried out in harsh conditions to assure the complete degradation, which was done in aqueous NaOH solution (pH=13) at 25 °C in 2 days. The concentrated product was characterized by ¹H NMR and GPC. In comparison of the ¹H NMR spectrum of the pristine polymer (FIG. **31E**), the peak at 4.34 ppm corresponding to carbonate linkage vanished (FIG. **36**), indicating completely degradation. Meanwhile, the molar mass analyzed by GPC dropped to 1.1 kg/mol with broad polydispersity after degradation (FIG. **37**). Then the degradation was performed under mild conditions: 1) pH=8.5 at 25 °C (commonly used in surface modification, cell culture, enzyme assay and electrophoretic applications); 2) pH value = 7.4 at 37 °C (mimic conditions in body fluid); 3) pH = 6.5 at 25 °C (mimic the slightly acidic microenvironment of tumor). As shown in FIG. **31E****,** the carbonate content decreased from 4.4% to 1.2% in buffer solution of pH=8.5 at 25 °C, and the molar mass dropped to 1.6 kg/mol (FIG. **38**). Under physiological conditions (pH=7.4 at 37 °C), the degradation was slower, the carbonate content decreased to 3.0%, while the molar mass dropped to 2.9 kg/mol after one month (FIGS. **39** and **40**). Under slightly acidic conditions, the degradation was lowest, the carbonate content dropped to 4.1%, however, molar mass still dropped to 6.2 kg/mol (FIGS. **41** and **42**). In all cases, the molar masses of PEOEC after degradation were remarkably decreased below 40 kg/mol of the renal threshold, assuring the complete excretion out the body after administration.

### CONCLUSION

Taking advantage of the versatility of TEB-mediated polymerization system and specialty of EO monomer, EO-based copolymers spanning from hydrophobic, amphiphilic to hydrophilic properties could be synthesized through tuning the incorporation extent of CO₂. Due to the high activity of EO in comparison to its homologs, copolymerization of EO with CO₂ under less TEB to the initiator combined either high CO₂ pressure or apolar polymerization medium can produce PECEO with carbonate content above 90%. Following sequential ROP of EO, a new type of amphiphilic copolymer PEO-*b-*PECEO-*b*-PEO could be generated in one pot, such CO₂-based ABA surfactant centered with hydrophobic block cannot be synthesized before by other approaches. Meanwhile, PEOEC with carbonate content below 10% could be obtained under low CO₂ pressure while the obtained polymers possess degradability but maintain "PEO-like" properties. In pursuit of CO₂ valorization in this work, utilization of CO₂ along with popular EO not only as a cheap C1 resource, but also as a degradable moiety should arouse high interest both in academia and industry.

### EXPERIMENTAL SECTION

**Materials.** All the reagents were purchased from Sigma-Aldrich unless otherwise stated. Ethylene oxide (EO) was purified by stirring over sodium chippings under room temperature overnight and then distillation under vacuum. The purified EO was stored in a Schlenk flask in the freezer of glovebox. Tetrahydrofuran (THF) was dried over CaH2 at 60 °C overnight and then vacuum-distilled. Super-dry THF was obtained by distilling it again from *n*-butyllitium solution under vacuum. Mono-functional initiator Tetrabutylammonium chloride (Bu₄NCl), tetraoctylammonium (Oct₄Cl) and bis(triphenylphosphine)iminium chloride (PPNCl) were purified through recrystallization or precipitation and dried under vacuum in the presence of phosphorus pentoxide (P₂O₅) for 2 days. Bi-functional initiator tetrabutylammonium succinate (TBAS) was synthesized according to the literature and purified using the same method with that for mono-functional initiators. Carbon dioxide (CO₂) was purchased from Abdullah Hashim Industrial & Gas Co. and passed through a purifier column (VICI Metronics) prior to use.

### Instrumentation and Method.

¹H NMR spectra were recorded on a Bruker AVANCE III-400 Hz instrument in CDCl₃. The SEC traces of PECEOs with high EC content were obtained on an Agilent 1260 Infinity system equipped with two PolarGel-M columns. N, N-dimethylformamide (DMF) was used as the eluent with the flow rate being 1 ml/min. The system was equilibrated at 45 °C and molecular weight was calibrated with linear polyethylene oxide standard. The SEC traces of PECEOs with low EC content were acquired on a Viscotek VE2001 system equipped with a Styragel HR2 column and a Styragel HR4 column. The system was equilibrated at 35 °C in THF with 1.00 mL/min flow rate. The system was calibrated with linear polyethylene oxide. Thermogravimetric analyses (TGA) were performed on a Mettler Toledo TGA/DSC analyzer. Samples were heated from 25 °C to 850 °C at a heating rate of 10 °C/min under N₂ atmosphere. Differential scanning calorimetry (DSC) measurements were performed at a heating rate of 10 °C/min on a Mettler Toledo DSC1/TC100 system under nitrogen atmosphere. The curve of the second scan was adopted to determine the glass transition temperature (*T*_{g}). Contact angles were measured using a KRUSS EasyDrop Standard contact angle measuring instrument. The images of water droplets (3 µL) on the surfaces of PECEOs casted on glass plates were recorded at different time. Determination of critical micelle concentration (cmc) was conducted by means of fluorescence spectroscopy using pyrene (1×10⁻⁶ mol/L) as a probe. The fluorescence spectra for a series of surfactant polymer solution in water with various concentration were recorded on a Thermo Lumina Fluorescence Spectrometer at 25 °C using an excitation wavelength of 340 nm. The ratios of the intensities at 373 nm and 384 nm (*I*₁/*I*₃) were plotted as a function of the concentration with the cmc value taken from the intersection of the two best-fit lines. The hydrodynamic diameters (*D*ₕ) as well as size distributions of the micelles were obtained through dynamic light scattering (DLS) measurements which were carried out on a Malvern Zetasizer Nano ZS device equipped with a 30 mW He-Ne laser operating at a wavelength of 632.8 nm. The polymer concentration used for DLS measurements was 1 mg/mL.

**Polymer Synthesis.** *Synthesis of PECEO with High EC Content.* A typical procedure is given as follows. In a glovebox, to a pre-dried 50 mL Parr autoclave was added TBACl (0.057g, 0.2 mmol), THF (1 mL), TEB (1M, 240 uL) and EO (1mL, 20 mmol). TEB was placed separately in a 2 mL glass vial to prevent homopolymerization of EO before CO₂ charging. After assembling the autoclave and taking it outside the glove box, it was charged with CO₂ to reach a pressure of 20 bar. After violent shaking of the autoclave to ensure homogeneous mixing of the reactants, the reacting system was stirred under room temperature for 15 h. The autoclave was then vented and the polymerization quenched with 2 mL of hydrochloric acid solution (1M in methanol). Dichloromethane was added to the reaction mixture to facilitate dissolution of the polymer. An aliquot of the resulting mixture was taken for ¹H NMR analysis to get the selectivity of the polymerization. The reaction mixture was purified by repeated cycles of precipitation from methanol and dissolving in dichloromethane. The residual solvent was removed by drying the polymers under vacuum at room temperature to constant weight.

*Synthesis of PECEO with Low EC Content.* A typical procedure is given as follows. In a glovebox, to a pre-dried 50 mL Parr autoclave was added TBACl (0.057g, 0.2 mmol), THF (1 mL), TEB (1M, 480 uL) and EO (1mL, 20 mmol). Et₃B was placed separately in a 2 mL glass vial to prevent homopolymerization of EO before CO₂ charging. A regulator equipped with a pressure gauge having a precision of 0.2 bar was connected between the CO₂ charging line. The autoclave was kept connected to the line throughout the whole polymerization process. A constant CO₂ pressure of 1 bar was applied to the reactor. After violent shaking of the autoclave to ensure homogeneous mixing of the reactants, the reacting system was stirred under room temperature for 15 h. The autoclave was vented and the polymerization quenched with 2mL of hydrochloric acid solution (1M in methanol). An aliquot of the resulting mixture was taken for ¹H NMR analysis to get the selectivity of the polymerization. The reaction mixture was then purified by repeated cycles precipitation from diethyl ether and dissolving in THF. The residual solvent was removed by drying the polymers under vacuum at room temperature to constant weight.

*Synthesis* of *Amphiphilic Block Copolymers.* The synthesis of the triblock copolymers was performed in two steps. The first step was the synthesis of PECEO with high EC content as the middle block. It was synthesized using TBAS as the initiator and 1 equivalent of TEB at a CO₂ pressure of 30 bar. For the synthesis of P(EO-EC-EO)₁ and P(EO-EC-EO)₂, a DP of 38 was targeted; for the synthesis of P(EO-EC-EO)₃, a DP of 78 was targeted. After stirring the reaction medium at room temperature for 15 hours, the autoclave was vented and then transferred into the glovebox. An aliquot of the resulting mixture was withdrawn for ¹H NMR and SEC analysis. For the synthesis of P(EO-EC-EO)₁, 58 equivalents of EO were added into the autoclave to grow the hydrophilic blocks; for the synthesis of P(EO-EC-EO)₂ and P(EO-EC-EO)₃, 117 equivalents of EO were added. The resulting reaction medium was left to stir for another 4 hours after shaking. The block copolymers were purified via repeated cycles precipitation from diethyl ether and dissolving in THF. The residual solvent was removed by drying the polymers under vacuum at room temperature to constant weight.

**Degradation Test.** Full degradation test was done under strong basic condition (aq. NaOH, 10mM) with an aqueous polymer (Entry 10, Table 6) solution (2mg/mL). The solution was stirred at a rate of 100 rpm at 25 °C for 48 hrs. Upon removal of the water by lyophilization, an aliquot of the residue was dissolved in CDCl₃ for ¹H NMR analysis, and another aliquot was dissolved in THF for SEC characterization. The degradation behavior over time was also investigated under a pH value of 8.5 (Tris-HCl, 100 mM) at 25 °C. Samples were taken every week for analysis. Degradation of the polymer under simulative physiological conditions were studied using phosphate buffers at 37 °C. A phosphate buffer with a pH value of 7.4±0.1 was used to mimic the body fluid, while a pH value of 6.5±0.1 was employed to simulate the mildly acidic condition of the microenvironment surrounding tumor tissues. The samples were analyzed after one month.

Other embodiments of the present disclosure are possible. Although the description above contains much specificity, these should not be construed as limiting the scope of the disclosure, but as merely providing illustrations of some of the presently preferred embodiments of this disclosure. It is also contemplated that various combinations or sub-combinations of the specific features and aspects of the embodiments may be made and still fall within the scope of this disclosure. It should be understood that various features and aspects of the disclosed embodiments can be combined with or substituted for one another in order to form various embodiments. Thus, it is intended that the scope of at least some of the present disclosure should not be limited by the particular disclosed embodiments described above.

Thus, the scope of this disclosure should be determined by the appended claims and their legal equivalents. Therefore, it will be appreciated that the scope of the present disclosure fully encompasses other embodiments which may become obvious to those skilled in the art, and that the scope of the present disclosure is accordingly to be limited by nothing other than the appended claims, in which reference to an element in the singular is not intended to mean "one and only one" unless explicitly so stated, but rather "one or more." All structural, chemical, and functional equivalents to the elements of the above-described preferred embodiment that are known to those of ordinary skill in the art are expressly incorporated herein by reference and are intended to be encompassed by the present claims. Moreover, it is not necessary for a device or method to address each and every problem sought to be solved by the present disclosure, for it to be encompassed by the present claims. Furthermore, no element, component, or method step in the present disclosure is intended to be dedicated to the public regardless of whether the element, component, or method step is explicitly recited in the claims.

The foregoing description of various preferred embodiments of the disclosure have been presented for purposes of illustration and description. It is not intended to be exhaustive or to limit the disclosure to the precise embodiments, and obviously many modifications and variations are possible in light of the above teaching. The example embodiments, as described above, were chosen and described in order to best explain the principles of the disclosure and its practical application to thereby enable others skilled in the art to best utilize the disclosure in various embodiments and with various modifications as are suited to the particular use contemplated. It is intended that the scope of the disclosure be defined by the claims appended hereto.

Various examples have been described. These and other examples are within the scope of the following claims.

## Claims

1. A method of forming a degradable block copolymer, comprising:
contacting a first ethylene oxide monomer with one or more of carbon dioxide, cyclic ester and cyclic anhydride, in the presence of a solvent, an alkyl borane activator, and an onium salt initiator to form a first block having polyether linkages and at least one of ester and carbonate linkages, wherein the carbonate or ester content in the copolymer backbone is at most 50% by weight of the copolymer; and
contacting the first block with a second ethylene oxide monomer to form a second block attached to the first block.

2. The method of claim 1, wherein the degradable block copolymer is formed under metal-free conditions.

3. The method according to claim 1, wherein the first ethylene oxide monomer is selected from the group consisting of: 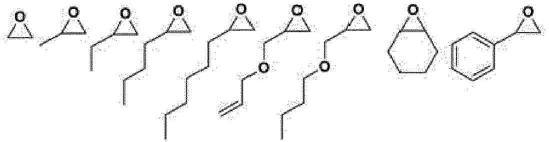 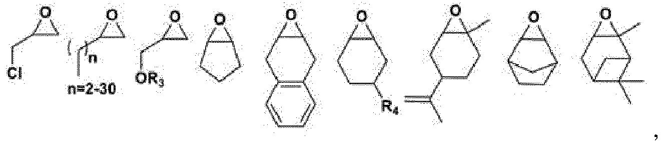 wherein each R₃ and R₄ is independently selected from the group consisting of alkyl groups including saturated and unsaturated, aromatic and cyclic alkyl groups, azide containing alkyl groups, and heteroatom containing alkyl groups, wherein the heteroatom is a halide, N, O, P, Si, Se, or S, wherein the N, P, S, and Se atoms are optionally oxidized, and the N heteroatom is optionally quaternized, optionally the ethylene oxide monomer is ethylene oxide.

4. The method of claim 1, wherein the cyclic ester is present and is lactide or a cyclic ester selected from the group consisting of L-lactide, D-lactide, meso-lactide, and a mixture thereof.

5. The method of claim 1, wherein the cyclic anhydride is present and selected from the group consisting of aromatic and aliphatic anhydrides, optionally the cyclic anhydride is phthalic anhydride, succinic anhydride, diglycolic anhydride, or maleic anhydride.

6. The method of claim 1, wherein the second ethylene oxide monomer is ethylene oxide, or ethylene oxide with one or more of CO₂, a second cyclic ester and a second cyclic anhydride, optionally wherein the second cyclic ester is lactide or a cyclic ester selected from the group consisting of L-lactide, D-lactide, meso-lactide, and a mixture thereof, and optionally the cyclic anhydride is selected from the group consisting of aromatic and aliphatic anhydrides, phthalic anhydride, succinic anhydride, diglycolic anhydride, and maleic anhydride.

7. The method of claim 1, wherein the degradable block copolymer is formed by sequential Ring Opening Polymerization in one pot.

8. The method of claim 1, wherein CO₂ is present in the first step and the method further comprises releasing the carbon dioxide before contacting the first block with the second ethylene oxide monomer.

9. A degradable block copolymer prepared by:
contacting a first ethylene oxide monomer with one or more of carbon dioxide, cyclic ester and cyclic anhydride, in the presence of a solvent, an alkyl borane activator, and an onium salt initiator to form a first block having polyether linkages and at least one of carbonate and ester linkages, wherein the carbonate or ester content in the copolymer backbone is not above 50% by weight of the copolymer; and
contacting the first block with a second ethylene oxide monomer to form a second block attached to the first block.

10. The degradable block copolymer of claim 9, wherein the block copolymer is a diblock AB or triblock ABA copolymer.

11. The degradable block copolymer of claim 9, wherein the copolymer comprises a hydrophilic A block containing the second block composed of pure poly(ethylene oxide), an ester-containing poly(ethylene oxide) or a carbonate-containing poly(ethylene oxide) and a hydrophobic B block containing the first block, wherein the second block contains fewer ester or carbonate linkages than the first block.

12. The degradable block copolymer of claim 9, wherein the first ethylene oxide monomer is selected from the group consisting of: 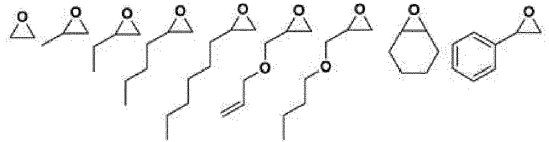 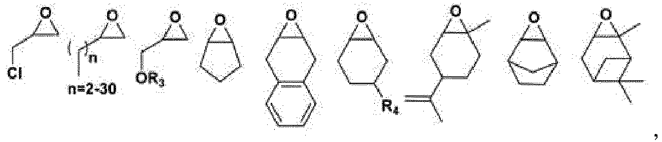 wherein each R₃ and R₄ is independently selected from the group consisting of alkyl groups including saturated and unsaturated, aromatic and cyclic alkyl groups, azide containing alkyl groups, and heteroatom containing alkyl groups, wherein the heteroatom is a halide, N, O, P, Si, Se, or S, wherein the N, P, S, and Se atoms are optionally oxidized, and the N heteroatom is optionally quaternized, optionally wherein the ethylene oxide monomer is ethylene oxide.

13. The degradable block copolymer of claim 9, wherein the cyclic ester is present and is lactide or a cyclic ester selected from the group consisting of L-lactide, D-lactide, meso-lactide, and a mixture thereof.

14. The degradable block copolymer of claim 9, wherein the cyclic anhydride is present and selected from the group consisting of aromatic and aliphatic anhydrides, optionally the cyclic anhydride is phthalic anhydride, succinic anhydride, diglycolic anhydride, or maleic anhydride.

15. The degradable block copolymer of claim 9, wherein the second ethylene oxide monomer is ethylene oxide, or ethylene oxide with one or more of CO₂, a second cyclic ester and a second cyclic anhydride, optionally wherein the second cyclic ester is lactide or a cyclic ester selected from the group consisting of L-lactide, D-lactide, meso-lactide, and a mixture thereof, and optionally the cyclic anhydride is selected from the group consisting of aromatic and aliphatic anhydrides, phthalic anhydride, succinic anhydride, diglycolic anhydride, and maleic anhydride.
